(19) Europäisches Patentamt
European Patent Office
Office européen des brevets

(11) EP 4 060 763 A1

(12) EUROPEAN PATENT APPLICATION
published in accordance with Art. 153(4) EPC

(43) Date of publication:
21.09.2022 Bulletin 2022/38

(51) International Patent Classification (IPC):
H01M 4/133 (2010.01)     H01M 4/36 (2006.01)
H01M 4/38 (2006.01)      H01M 4/48 (2010.01)
H01M 4/485 (2010.01)     H01M 4/587 (2010.01)
H01M 4/62 (2006.01)      H01M 10/052 (2010.01)
H01M 10/0525 (2010.01)   H01M 10/0562 (2010.01)
C01B 32/21 (2017.01)

(21) Application number: 20886741.6

(22) Date of filing: 10.11.2020

(52) Cooperative Patent Classification (CPC):
C01B 32/21; H01M 4/133; H01M 4/36; H01M 4/38;
H01M 4/48; H01M 4/485; H01M 4/587; H01M 4/62;
H01M 10/052; H01M 10/0525; H01M 10/0562;
Y02E 60/10

(86) International application number:
PCT/JP2020/041891

(87) International publication number:
WO 2021/095719 (20.05.2021 Gazette 2021/20)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 11.11.2019 JP 2019204312
26.12.2019 JP 2019236052
26.12.2019 JP 2019236054
26.12.2019 JP 2019236055
29.05.2020 JP 2020095008
29.05.2020 JP 2020095009
29.05.2020 JP 2020095011
29.05.2020 JP 2020095012

(71) Applicant: Showa Denko K.K.
Tokyo 105-8518 (JP)

(72) Inventors:
• TONEGAWA, Akihisa
  Tokyo 105-8518 (JP)
• INOUE, Hirofumi
  Tokyo 105-8518 (JP)
• KOHNO, Daisuke
  Tokyo 105-8518 (JP)
• BAEK, Jinseok
  Tokyo 105-8518 (JP)

(74) Representative: Strehl Schübel-Hopf & Partner
Maximilianstrasse 54
80538 München (DE)

(54) COMPOSITE MATERIAL, MANUFACTURING METHOD THEREFOR, NEGATIVE ELECTRODE MATERIAL FOR LITHIUM ION SECONDARY BATTERY, AND THE LIKE

(57) An object of the present invention is to provide a composite material usable as a negative electrode material of a lithium-ion secondary battery.

A composite material of the present invention includes:
a carbonaceous material; and a metal oxide layer coating a surface of the carbonaceous material, in which the metal oxide layer coats the surface of the carbonaceous material, forming a sea-island structure in which the metal oxide layer is scattered in islands, and a coating rate of the carbonaceous material with the metal oxide layer is 20% or more and 80% or less.

A composite material of the present invention includes:
a carbonaceous material; and a metal oxide layer and amorphous carbon layer coating the surface of the carbonaceous material, in which the metal oxide layer is scattered in islands on the surface of the carbonaceous material.

A composite material of the present invention includes:
a carbonaceous material; and a metal oxide layer coating the surface of the carbonaceous material, in which the metal oxide layer has at least a portion having a thickness of more than 10 nm, and in a coated area with the metal oxide, an area percentage of a portion having a thickness

EP 4 060 763 A1

(Cont. next page)

of 10 nm or less is 70% or more and 99% or less, and an area percentage of the portion having a thickness of more than 10 nm is 1% or more and 30% or less. A composite material of the present invention also includes: a carbonaceous material; and a metal oxide layer and amorphous carbon layer coating the surface of the carbonaceous material, in which the metal oxide layer has at least a portion having a thickness of more than 10 nm, and in a coated area with the metal oxide layer, an area percentage of a portion having a thickness of 10 nm or less is 30% or more and 70% or less, and an area percentage of the portion having a thickness of more than 10 nm is 30% or more and 70% or less.

[Fig. 2]

**Description**

Technical Field

The present invention relates to, for example, a composite material, a manufacturing method thereof, and a negative electrode material including the composite material for a lithium-ion secondary battery.

Background Art

In recent years, lithium-ion secondary batteries have been widespread as power sources for electronic devices such as laptop computers and mobile phones, and for transport equipment such as automobiles. These devices and equipment have been demanded to be downsized, weight-saved, and lightened. To meet these demands, small, light, and high-capacity secondary batteries are required.

A common lithium-ion secondary battery uses a lithium-containing compound as a positive electrode material and a carbon material such as graphite and coke as a negative electrode material. Provided between a positive electrode and a negative electrode is an electrolyte layer including an electrolyte liquid in which a lithium salt as an electrolyte such as $LiPF_6$ and $LiBF_4$ is dissolved in an aprotic solvent having permeability such as propylene carbonate and ethylene carbonate or including a polymer gel impregnated with the electrolyte liquid. These constitutions are packaged with a package for a battery case to be protected.

An all-solid-state type lithium-ion secondary battery includes a solid electrolyte layer between a positive electrode layer and a negative electrode layer. That is, the electrolyte of the common lithium-ion secondary battery is solidified. As the solid electrolyte, a sulfide such as $Li_2S$ and $P_2S_5$ is representatively used. As a negative electrode active material for the negative electrode, a carbonaceous material such as graphite is representatively used.

Regarding the above battery, investigated is a constitution of coating the carbonaceous material with a metal oxide.

For example, Patent Literature 1 discloses a particulate coating composed of aluminum oxide on a surface of a negative electrode active material such as the carbonaceous material.

Patent Literature 2 discloses a non-aqueous electrolyte secondary battery including a negative electrode including a titanium-containing oxide layer coating at least a part of a surface of a graphitic material particle.

Citation List

Patent Literature

> Patent Literature 1: Japanese Patent Laid-Open No. 2017-54614
> Patent Literature 2: Japanese Patent Laid-Open No. 2018-88425

Summary of Invention

Technical Problem

A carbonaceous material used as a negative electrode active material has low compatibility with a solid electrolyte. Adding the solid electrolyte into a negative electrode in an all-solid-state type battery has a problem in that the carbonaceous material and the solid electrolyte do not uniformly disperse to cause a low capacity and low rate characteristics. In order to improve the dispersibility of the carbonaceous material and the solid electrolyte, it is conceivable to coat a surface of the carbonaceous material with a metal oxide compatible with the solid electrolyte. However, a typical metal oxide has excellent ion conductivity and low electric conductivity, and therefore simply coating with the metal oxide is not enough.

Although both Patent Literatures 1 and 2 disclose the active material in which the metal oxide coats the surface of the carbonaceous material, the above viewpoint is not investigated.

A method in which an active material layer is strongly pressed for increasing adhesiveness to improve the capacity and rate characteristics may be used. In this case, the active material, for example, cracks to cause a problem of deterioration of cycle characteristics.

Solution to Problem

The present invention relates to a composite material of the following first to fourth aspects, a manufacturing method thereof, and application thereof.

A first aspect of the present invention is a composite material comprising: a carbonaceous material; and a metal oxide layer coating a surface of the carbonaceous material, wherein the metal oxide layer coats the surface of the carbonaceous material, forming a sea-island structure in which the metal oxide layer is scattered in islands, and a coating rate of the carbonaceous material with the metal oxide layer is 20% or more and 80% or less.

A second aspect of the present invention is a composite material comprising: a carbonaceous material; and a metal oxide layer and amorphous carbon layer coating a surface of the carbonaceous material, wherein the metal oxide layer is scattered in islands on the surface of the carbonaceous material.

A third aspect of the present invention is a composite material comprising: a carbonaceous material; and a metal oxide layer coating a surface of the carbonaceous material, wherein the metal oxide layer has at least a portion having a thickness of more than 10 nm, and in a coated area with the metal oxide, an area percentage of a portion having a thickness of 10 nm or less is 70% or more and 99% or less, and an area percentage of the portion having a thickness of more than 10 nm is 1% or more and 30% or less.

A fourth aspect of the present invention is a composite material comprising: a carbonaceous material; and a metal oxide layer and amorphous carbon layer coating a surface of the carbonaceous material, wherein the metal oxide layer has at least a portion having a thickness of more than 10 nm, and in a coated area with the metal oxide layer, an area percentage of a portion having a thickness of 10 nm or less is 30% or more and 70% or less, and an area percentage of the portion having a thickness of more than 10 nm is 30% or more and 70% or less.

[1] A composite material, comprising: a carbonaceous material; and a metal oxide layer coating a surface of the carbonaceous material, wherein the metal oxide layer coats the surface of the carbonaceous material, forming a sea-island structure in which the metal oxide layer is scattered in islands, and a coating rate of the carbonaceous material with the metal oxide layer is 20% or more and 80% or less.

[2] A composite material, comprising: a carbonaceous material; and a metal oxide layer and amorphous carbon layer coating a surface of the carbonaceous material, wherein the metal oxide layer is scattered in islands on the surface of the carbonaceous material.

[3] The composite material according to [2], wherein a coating rate with the metal oxide layer is 20% or more and 80% or less.

[4] The composite material according to [2] or [3], wherein a coating rate with the amorphous carbon layer is 20% or more and 80% or less.

[5] The composite material according to [2] to [4], wherein the composite material has a sea-island structure in which the amorphous carbon layer is present in a sea phase on the surface of the carbonaceous material.

[6] The composite material according to [2] to [4], wherein the amorphous carbon layer is scattered in islands on the surface of the carbonaceous material.

[7] The composite material according to [1] to [6], wherein the composite material comprises a composite material in which a metal oxide particle adheres to a surface of the metal oxide layer or amorphous carbon layer.

[8] The composite material according to [1] to [7], wherein in the metal oxide layer, a rate of a total coated area with a metal oxide layer having a circle-equivalent diameter of 1 $\mu$m or larger and 10 $\mu$m or smaller is 80% or more in an entire coated area with the metal oxide layer.

[9] The composite material according to [1] to [8], wherein an average thickness of the metal oxide layer is 10 nm or more.

[10] A composite material, comprising: a carbonaceous material; and a metal oxide layer coating a surface of the carbonaceous material, wherein the metal oxide layer has at least a portion having a thickness of more than 10 nm, and in a coated area with the metal oxide, an area percentage of a portion having a thickness of 10 nm or less is 70% or more and 99% or less, and an area percentage of the portion having a thickness of more than 10 nm is 1% or more and 30% or less.

[11] The composite material according to [10], wherein a coating rate with the metal oxide layer is 95% or more.

[12] A composite material, comprising: a carbonaceous material; and a metal oxide layer and amorphous carbon layer coating a surface of the carbonaceous material, wherein the metal oxide layer has at least a portion having a thickness of more than 10 nm, and in a coated area with the metal oxide layer, an area percentage of a portion having a thickness of 10 nm or less is 30% or more and 70% or less, and an area percentage of the portion having a thickness of more than 10 nm is 30% or more and 70% or less.

[13] The composite material according to [12], wherein a coating rate with the metal oxide layer is 30% or more and 90% or less.

[14] The composite material according to [12] or [13], wherein a coating rate with the amorphous carbon layer is 10% or more and 70% or less.

[15] The composite material according to [1] to [14], wherein a metal oxide particle is included inside the metal oxide layer.

[16] The composite material according to [1] to [5], comprising an underlayer disposed at least partially between the carbonaceous material and the metal oxide layer.

[17] The composite material according to [16], wherein the underlayer is an amorphous carbon layer, a graphene layer, or a polymer layer.

[18] The composite material according to any of [1], [2], and [12], wherein a content of the metal oxide in the composite material is 0.1 parts by mass or more and 10 parts by mass or less based on 100 parts by mass of the composite material.

[19] The composite material according to [10], wherein a content of the metal oxide in the composite material is 0.1 parts by mass or more and 6.0 parts by mass or less based on 100 parts by mass of the composite material.

[20] The composite material according to [1] to [19], wherein a metal oxide in the metal oxide layer contains at least one oxide of a metal selected from Groups 3 to 12 elements of the periodic table, aluminum, gallium, indium, thallium, tin, and lead.

[21] The composite material according to [1] to [20], wherein a metal oxide in the metal oxide layer contains at least one selected from the group consisting of titanium oxide, lithium titanate, and lithium niobate.

[22] The composite material according to any of [2], [10], and [12], wherein the composite material is particulate, and a 50% particle diameter in a cumulative particle size distribution on a volumetric basis, D50, is 1.0 μm or larger and 30.0 μm or smaller.

[23] The composite material according to [1], wherein the composite material is particulate, a BET specific surface area is 12.0 m$^2$/g or less, and a 50% particle diameter in a cumulative particle size distribution on a volumetric basis, D50, is 1.0 μm or larger and 30.0 μm or smaller.

[24] The composite material according to [1] to [23], wherein the composite material contains silicon.

[25] The composite material according to [24], wherein the carbonaceous material contains silicon as well as carbon.

[26] The composite material according to [2] to [23], wherein the carbonaceous material is a graphite material.

[27] The composite material according to [2] to [23], wherein the carbonaceous material is an amorphous carbon material.

[28] The composite material according to [1] to [27], further comprising at least one selected from the group consisting of a particulate conductive auxiliary, a fibrous conductive auxiliary, and a solid electrolyte.

[29] A negative electrode material for a lithium-ion secondary battery, comprising the composite material according to any one of [1] to [28].

[30] A negative electrode for a lithium-ion secondary battery, comprising the negative electrode material according to [29].

[31] A lithium-ion secondary battery comprising the negative electrode according to [30].

Advantageous Effect of Invention

Use of the composite material of the present invention as the negative electrode material for the lithium-ion secondary battery yields a negative electrode having high adhesiveness, and can yield a high capacity and high output characteristics even with stacking a positive electrode layer, a solid electrolyte layer, and a negative electrode layer by a low pressure without a conventional high pressure.

Brief Description of Drawings

FIG. 1 is an outline cross-sectional view illustrating an example of a constitution of an all-solid-state type lithium-ion battery 1.

FIG. 2 is a schematic cross-sectional view illustrating an example of a constitution of the composite material of the first aspect of the present invention.

FIG. 3 is a schematic cross-sectional view illustrating another example of a constitution of the composite material of the first aspect of the present invention.

FIG. 4 is a scanning electron microscopic image of a composite material manufactured in Example 1 of the first aspect.

FIG. 5 is a schematic cross-sectional view illustrating an example of a constitution of the composite material of the second aspect of the present invention.

FIG. 6 is a schematic cross-sectional view illustrating another example of a constitution of the composite material of the second aspect of the present invention.

FIG. 7 is a schematic cross-sectional view illustrating an example of a constitution of the composite material of the third aspect of the present invention.

FIG. 8 is a schematic cross-sectional view illustrating another example of a constitution of the composite material of the third aspect of the present invention.

FIG. 9 is a schematic cross-sectional view illustrating another example of a constitution of the composite material of the third aspect of the present invention.

FIG. 10 is a schematic cross-sectional view illustrating an example of a constitution of the fourth aspect of the composite material of the present invention.

FIG. 11 is a schematic cross-sectional view illustrating another example of a constitution of the fourth aspect of the composite material of the present invention.

FIG. 12 is a schematic cross-sectional view illustrating another example of a constitution of the fourth aspect of the composite material of the present invention.

Description of Embodiments

Embodiments of the present invention will be described below.

In the following description, "50% particle diameter in a cumulative particle size distribution on a volumetric basis" and "D50" are a particle diameter at which a cumulative frequency is 50% in a particle size distribution on a volumetric basis determined by a laser diffraction-scattering method.

In any aspect of the present invention, the lithium-ion secondary battery can be applied to any of an all-solid-state type lithium-ion secondary battery in which an electrolyte is a solid electrolyte, an electrolyte-liquid type lithium-ion secondary battery in which an electrolyte is an electrolyte liquid.

[1-1] All-Solid-State Type Lithium-Ion Secondary Battery

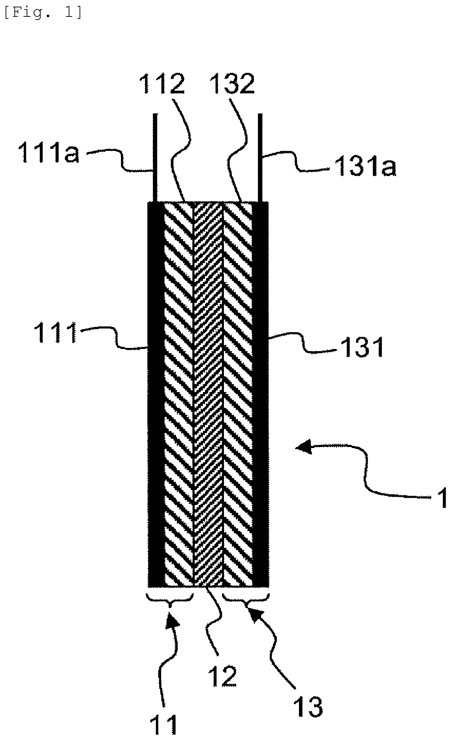

FIG. 1 is an outline cross-sectional view illustrating an example of a constitution of an all-solid-state type lithium-ion secondary battery 1 according to the present embodiment. The all-solid-state type lithium-ion secondary battery 1 includes a positive electrode layer 11, a solid electrolyte layer 12, and a negative electrode layer 13.

When a negative electrode active material in the first aspect of the present invention is used to form a negative electrode mixture layer, the all-solid-state type battery can be manufactured by stacking the positive electrode layer 11, the solid electrolyte layer 12, and the negative electrode layer 13 with a low pressure of 1 MPa (10 kgf/cm$^2$) or less because the negative electrode active material has high compatibility with the solid electrolyte.

The positive electrode layer 11 has a positive electrode current collector 111 and a positive electrode mixture layer 112. A positive electrode lead 111a is connected to the positive electrode current collector 111 for transporting electric charge with an external circuit. The positive electrode current collector 111 is preferably a metal foil, and as the metal foil, aluminum foil is preferably used.

The positive electrode mixture layer 112 contains a positive electrode active material, and may further contain, for example, a solid electrolyte, a conductive auxiliary, and a binder. As the positive electrode active material, rock-salt layered active materials such as $LiCoO_2$, $LiMnO_2$, $LiNiO_2$, $LiVO_2$, and $LiNi_{1/3}Mn_{1/3}Co_{1/3}O_2$; spinel active materials such as $LiMn_2O_4$; olivine active materials such as $LiFePO_4$, $LiMnPO_4$, $LiNiPO_4$, and $LiCuPO_4$; and sulfide active materials such as $Li_2S$ can be used, for example. These active materials may be coated with, for example, LTO (Lithium Tin Oxide) or carbon.

For the solid electrolyte which may be contained in the positive electrode mixture layer 112, a material mentioned in the solid electrolyte layer 12, described later, may be used, and a material differing from the material contained in the solid electrolyte layer 12 may also be used. A content of the solid electrolyte in the positive electrode mixture layer 112 is preferably 50 parts by mass or more, more preferably 70 parts by mass or more, and further preferably 80 parts by mass or more, based on 100 parts by mass of the positive electrode active material. The content of the solid electrolyte in the positive electrode mixture layer 112 is preferably 200 parts by mass or less, more preferably 150 parts by mass or less, and further preferably 125 parts by mass or less, based on 100 parts by mass of the positive electrode active material.

As the conductive auxiliary, a particulate carbonaceous conductive auxiliary or a fibrous carbonaceous conductive auxiliary is preferably used. As the particulate carbonaceous conductive auxiliary, particulate carbons such as DENKA BLACK(R) (manufactured by Denki Kagaku Kogyo Kabushiki Kaisha), Ketjenblack(R) (manufactured by Lion Corporation), graphite fine particle SFG series (TIMCAL Ltd.), and graphenes can be used. As the fibrous carbonaceous conductive auxiliary, vapor grown carbon fibers (VGCF(R), VGCF(R)-H (manufactured by Showa Denko K.K.)), carbon nanotubes, and carbon nanohorns can be used, for example. The vapor grown carbon fiber "VGCF(R)-H" (manufactured by Showa Denko K.K.) is most preferable because of its excellent cycle characteristics. A content of the conductive auxiliary in the positive electrode mixture layer 112 is preferably 0.1 parts by mass or more, and more preferably 0.3 parts by mass or more, based on 100 parts by mass of the positive electrode active material. The content of the conductive auxiliary in the positive electrode mixture layer 112 is preferably 5 parts by mass or less, and more preferably 3 parts by mass or less, based on 100 parts by mass of the positive electrode active material.

Examples of the binder include polyvinylidene fluoride, polytetrafluoroethylene, polyethylene oxide, polyvinyl acetate, polymethacrylate, polyacrylate, polyacrylonitrile, polyvinyl alcohol, styrene-butadiene rubber, and carboxymethyl cellulose.

A content of the binder in the positive electrode mixture layer 112 is preferably 1 part by mass or more and 10 parts by mass or less, and more preferably 1 part by mass or more and 7 parts by mass or less, based on 100 parts by mass of the positive electrode active material.

The solid electrolyte layer 12 is interposed between the positive electrode layer 11 and the negative electrode layer 13, and becomes a medium for transferring lithium ions between the positive electrode layer 11 and the negative electrode layer 13. The solid electrolyte layer 12 preferably contains at least one selected from the group consisting of a sulfide solid electrolyte and an oxide solid electrolyte, and more preferably contains the sulfide solid electrolyte.

Examples of the sulfide solid electrolyte include a sulfide glass, a sulfide glass ceramics, and a Thio-LISICON-type sulfide. More specific examples thereof include $Li_2S-P_2S_5$, $Li_2S-P_2S_5-LiI$, $Li_2S-P_2S_5-LiCl$, $Li_2S-P_2S_5-LiBr$, $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$ (In the formula, m and n represent positive numbers, and Z represents any of Ge, Zn, and Ga.), $Li_2S-GeS_2$, $Li_2S-SiS_2-Li_3PO_4$, $Li_2S-SiS_2-Li_xMO_y$ (In the formula, x and y represent positive numbers, and M represents any one of P, Si, Ge, B, Al, Ga, and In.), $Li_{10}GeP_2S_{12}$, $Li_{3.25}Ge_{0.25}P_{0.75}S_4$, $30Li_2S\cdot26B_2S_3\cdot44LiI$, $63Li_2S\cdot36SiS_2\cdot1Li_3PO_4$, $57Li_2S\cdot38SiS_2\cdot5Li_4SiO_4$, $70Li_2S\cdot30P_2S_5$, $50LiS_2\cdot50GeS_2$, $Li_7P_3S_{11}$, $Li_{3.25}P_{0.95}S_4$, $Li_3PS_4$, and $Li_2S\cdot P_2S_3\cdot P_2S_5$. The sulfide solid electrolyte material may be amorphous, crystalline, and a glass ceramics.

Examples of the oxide solid electrolyte include perovskite, garnet, and LISICON-type oxide. More specific examples thereof include $La_{0.51}Li_{0.34}TiO_{2.94}$, $Li_{1.3}Al_{0.3}Ti_{1.7}(PO_4)_3$, $Li_7La_3Zr_2O_{12}$, $50Li_4SiO_4\cdot50Li_3BO_3$, $Li_{2.9}PO_{3.3}N_{0.46}$ (LIPON), $Li_{5.6}Si_{0.6}P_{0.4}O_4$, $Li_{1.07}Al_{0.69}Ti_{1.46}(PO_4)_3$, and $Li_{1.5}Al_{0.5}Ge_{1.5}(PO_4)_3$. The oxide solid electrolyte material may be amorphous, crystalline, and a glass ceramics.

The negative electrode layer 13 has a negative electrode current collector 131 and a negative electrode mixture layer 132. A negative electrode lead 131a is connected to the negative electrode current collector 131 for transporting electric charge with an external circuit. The negative electrode current collector 131 is preferably a metal foil, and as the metal foil, stainless steel foil, copper foil, or aluminum foil is preferably used. A surface of the current collector may be coated with, for example, carbon.

The negative electrode mixture layer 132 contains a negative electrode active material, and may contain, for example, a solid electrolyte, a binder, and a conductive auxiliary. As the negative electrode active material, a composite material, described later, is used.

As the solid electrolyte which may be contained in the negative electrode mixture layer 132, a material mentioned in the solid electrolyte layer 12 may be used, and the solid electrolyte contained in the solid electrolyte layer 12 or a material differing from the solid electrolyte contained in the positive electrode mixture layer may also be used. A content of the solid electrolyte in the negative electrode mixture layer 132 is preferably 50 parts by mass or more, more preferably 70 parts by mass or more, and further preferably 80 parts by mass or more, based on 100 parts by mass of the negative electrode active material. The content of the solid electrolyte in the negative electrode mixture layer 132 is preferably 200 parts by mass or less, more preferably 150 parts by mass or less, and further preferably 125 parts by mass or less, based on 100 parts by mass of the negative electrode active material.

As the conductive auxiliary which may be contained in the negative electrode mixture layer 132, the conductive auxiliary mentioned in the description of the positive electrode mixture layer 112 may be used, and a material differing from the conductive auxiliary contained in the positive electrode mixture layer 112 may also be used. A content of the conductive auxiliary in the negative electrode mixture layer 132 is preferably 0.1 parts by mass or more, and more preferably 0.3 parts by mass or more, based on 100 parts by mass of the negative electrode active material. The content of the conductive auxiliary in the negative electrode mixture layer 132 is preferably 5 parts by mass or less, and more preferably 3 parts by mass or less, based on 100 parts by mass of the negative electrode active material.

As the binder, a material mentioned in the description of the positive electrode mixture layer 112 may be used, for example, and is not limited thereto. A content of the binder in the negative electrode mixture layer 132 is preferably 0.3 parts by mass or more and 10 parts by mass or less, and more preferably 0.5 parts by mass or more and 5 parts by mass or less, based on 100 parts by mass of the negative electrode active material.

[1-2] Electrolyte-Liquid Type Lithium-Ion Secondary Battery

An electrolyte-liquid type lithium-ion secondary battery has a structure in which a positive electrode layer and a negative electrode layer are immersed in an electrolyte liquid.

A positive electrode, a positive electrode current collector, and a positive electrode mixture layer have the same constitution as in the positive electrode mixture layer in the all-solid-state type lithium-ion secondary battery except that no solid electrolyte is contained.

A negative electrode, a negative electrode current collector, and a negative electrode mixture layer have the same constitution as in the negative electrode mixture layer in the all-solid-state type lithium-ion secondary battery except that no solid electrolyte is contained.

As the electrolyte liquid and the electrolyte, any material such as known materials can be used without particular limitation.

In the electrolyte-liquid type lithium-ion secondary battery, a separator may be interposed between the positive electrode mixture layer and the negative electrode mixture layer. Examples of the separator include a non-woven fibrous, cloth, microporous film mainly composed of a polyolefin such as polyethylene and polypropylene, and a combination thereof.

[2] First Aspect

[2-1] Composite Material

A composite material according to a first aspect of the present invention includes a carbonaceous material and a metal oxide layer coating a surface of the carbonaceous material.

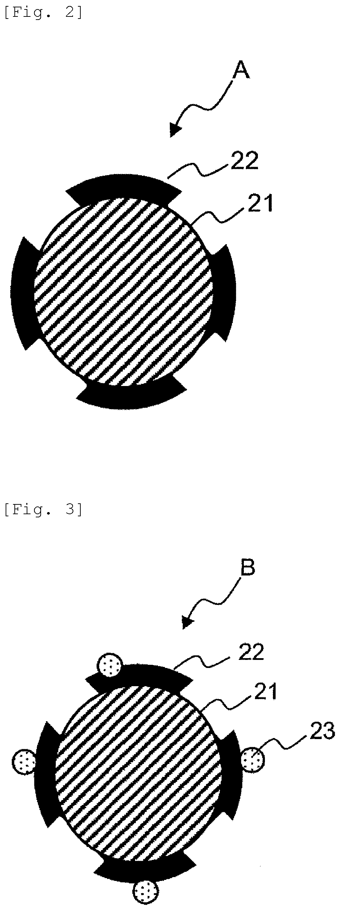

FIG. 2 is a schematic cross-sectional view illustrating a constitution of a composite material A included in the composite material according to the first aspect of the present invention.

The composite material A includes: a carbonaceous material 21; and a metal oxide layer 22 coating a surface of the carbonaceous material 21, forming a sea-island structure in which the metal oxide layer 22 is scattered in islands, wherein a coating rate of the carbonaceous material with the metal oxide layer is 20% or more and 80% or less.

A use of the composite material in which the metal oxide layer 22 having high compatibility with the solid electrolyte is present on the surface of the carbonaceous material 21 allows the composite material and the solid electrolyte to well disperse each other in the negative electrode mixture layer 132.

The surface of the composite material A has both of a portion where the carbonaceous material 21 is exposed and a portion where the metal oxide layer 22 is exposed at a specific ratio. That is, both of the carbonaceous material 21 having high electric conductivity and the metal oxide layer 22 having excellent ion conductivity constitute the surface of the composite material A at the specific ratio. This constitution facilitates the move of lithium ions between the particles, and achieves good electric conductivity. Accordingly, good rate characteristics and a high coulombic efficiency can be obtained when the composite material A is used as the electrode material of the all-solid-state type lithium-ion secondary battery.

The metal oxide layer 22 is a layer coating the surface of the carbonaceous material 21.

The metal oxide layer 22 has the sea-island structure in which the metal oxide layer is scattered in islands on the carbon particle surface. A coating rate with the metal oxide layer is 20% or more, preferably 25% or more, and more preferably 30% or more.

Setting the coating rate to 20% or more can increase ion conductivity of the composite material. The coating rate is 80% or less, preferably 70% or less, and more preferably 65% or less.

Setting the coating rate to 80% or less can improve electric conductivity of the composite material.

The presence of the portion where the carbonaceous material 21 is exposed and the portion where the metal oxide layer 22 is exposed with adhering no metal oxide particle 23 to the surface can be confirmed by mapping of, for example, EDS, AES, and Raman spectroscopic analysis.

The coating rate can be regulated with manufacturing conditions such as, for example, the amount of a metal oxide precursor added to the carbonaceous material 21 and adding rate thereof, and an atmosphere temperature.

The coating rate can be measured by, for example, binarization of a SEM image.

FIG. 3 is a schematic cross-sectional view illustrating a constitution of a composite material B included in the composite material according to another first aspect of the present invention. The composite material B includes: a carbonaceous material 21; and a metal oxide layer 22 coating a surface of the carbonaceous material 21, forming a sea-island structure in which the metal oxide layer 22 is scattered in islands, wherein a metal oxide particle 23 adheres to the surface of the metal oxide layer 22.

In this structure, the metal oxide particle 23 having high compatibility with the solid electrolyte is present on the surface of the composite material increases a surface roughness, described later, to allow the composite material and the particles constituting the solid electrolyte to well disperse each other in the negative electrode mixture layer 132 in which the composite material and the solid electrolyte mix. The metal oxide particle may adhere to an exposed surface of the carbonaceous material.

This structure can be confirmed with a scanning electron microscope (SEM).

In the composite material according to an embodiment of the present invention, a rate of a total coated area with a metal oxide layer having a 0.10 times or more and 0.95 times or less circle-equivalent diameter of a D50 of the composite material is preferably 80% or more in an entire coated area with the metal oxide layer. In this case, the composite material has higher compatibility with the electrolyte. From the similar viewpoint, the rate is more preferably 85% or more, and further preferably 90% or more.

An arithmetic average of the circle-equivalent diameter of the metal oxide layer is preferably 1 $\mu$m or larger and 10 $\mu$m or smaller. When the arithmetic average of the circle-equivalent diameter of the metal oxide layer is larger than 1 $\mu$m, the metal oxide layer is difficult to be removed from the surface of the carbonaceous material to be highly effective. When the arithmetic average is 10 $\mu$m or smaller, a resistance is reduced to provide excellent rate characteristics.

The circle-equivalent diameter of the metal oxide layer is preferably 0.10 times or more and 0.95 times or less of the D50 of the composite material. When the diameter is more than 0.10 times, the metal oxide layer is difficult to be removed from the surface of the carbonaceous material to be highly effective with the metal oxide layer. When the diameter is 0.95 times or less, a resistance is reduced to provide excellent rate characteristics.

The circle-equivalent diameter can be measured by a method described in Example.

An average thickness of the metal oxide layer of the composite material in the first aspect of the present invention is preferably 10 nm or more. Setting the average thickness to 10 nm or more can achieve chemical stability and mechanical strength. From the similar viewpoint, the average thickness is more preferably 15 nm or more, and further preferably 20 nm or more.

The average thickness of the metal oxide layer of the composite material in the first aspect of the present invention is preferably 100 nm or less. Setting the average thickness to 100 nm or less can prevent the composite material from an unnecessary increase in size, and can increase cycle characteristics of the secondary battery. From the similar viewpoint, the average thickness is more preferably 90 nm or less, and further preferably 80 nm or less.

The average thickness of the metal oxide layer can be measured by a method described in Example.

A content of the metal oxide layer is preferably 0.1 parts by mass or more based on 100 parts by mass of the composite material in the first aspect of the present invention. Setting the content of the metal oxide layer to 0.1 parts by mass or more can improve compatibility between the composite material and the solid electrolyte to increase the ion conductivity therebetween. From the similar viewpoint, the content of the metal oxide layer is more preferably 0.3 parts by mass or more, and further preferably 0.5 parts by mass or more.

The content of the metal oxide layer is preferably 10 parts by mass or less based on 100 parts by mass of the composite material in the first aspect of the present invention. Setting the content of the metal oxide layer to 10 parts by mass or less can expose the carbonaceous material in the composite material to increase electric conductivity between the composite materials or between the composite material and the solid electrolyte. From the similar viewpoint, the content of the metal oxide layer is more preferably 5.0 parts by mass or less, and further preferably 3.0 parts by mass or less.

A BET specific surface area of the composite material in the first aspect of the present invention is preferably 1.0 m$^2$/g or more. The BET specific surface area of 1.0 m$^2$/g or more facilitates insertion and desorption of lithium ions to increase a rate capacity maintenance rate. From the similar viewpoint, the BET specific surface area is more preferably 1.5 m$^2$/g or more, and further preferably 2.0 m$^2$/g or more.

The BET specific surface area of the composite material in the first aspect of the present invention is preferably 12.0 m$^2$/g or less. The BET specific surface area of 12.0 m$^2$/g or less inhibits a side reaction with the solid electrolyte to increase a first coulombic efficiency. From the similar viewpoint, the BET specific surface area is more preferably 11.0 m$^2$/g or less, and further preferably 10.0 m$^2$/g or less.

The BET specific surface area can be measured by a method described in Example.

The composite material in the first aspect of the present invention includes, for example, a graphite crystalline structure, and d002, which is an average plane spacing of (002) planes with an X-ray diffraction measurement thereof, is preferably 0.3354 nm or longer. The 0.3354 nm is a lower limit of d002 of a graphite crystal. The d002 is more preferably 0.3356 nm or longer, and further preferably 0.3370 nm or longer. The d002 of 0.3356 nm or longer indicates a graphite crystalline structure that is not overdeveloped, and provides excellent cycle characteristics.

A material not indicating a clear peak of the (002) planes, such as amorphous carbon, also provides excellent cycle characteristics. Any aspect may be acceptable in the present invention.

The d002 can be measured by using a powder X-ray diffraction (XRD) method. The d002 can be measured by using a powder X-ray diffraction (XRD) method.

When the composite material in the first aspect of the present invention is particulate, D50 thereof, which is a 50% particle diameter in a cumulative particle size distribution on a volumetric basis, is preferably 1.0 $\mu$m or larger, more preferably 4.0 $\mu$m or larger, and further preferably 10.0 $\mu$m or larger. Setting the D50 to 1.0 $\mu$m or larger improves handleability of the composite material. In addition, when the composite material is mixed with the solid electrolyte to be used as the negative electrode material of the lithium-ion secondary battery, the dispersibility of the composite material in the solid electrolyte is improved to provide good cycle characteristics.

When the composite material in the first aspect of the present invention is particulate, the D50 thereof is preferably 30.0 μm or smaller, more preferably 20.0 μm or smaller, and further preferably 15.0 μm or smaller. Setting the D50 to 30.0 μm or smaller can maintain the composite material with a large surface area, and when the composite material is used as the negative electrode material of the lithium-ion secondary battery, input and output characteristics in the negative electrode are improved.

When the composite material in the first aspect of the present invention is particulate, a surface roughness thereof is preferably 1.0 or more. The surface roughness of 1.0 or more tends to reduce a resistance to improve rate characteristics. From the similar viewpoint, the surface roughness is more preferably 2.0 or more, and further preferably 3.0 or more. The surface roughness is preferably 10.0 or less. The surface roughness of 10.0 or less inhibits a side reaction with the solid electrolyte to provide excellent cycle characteristics. From the similar viewpoint, the surface roughness is more preferably 7.0 or less, and further preferably 5.0 or less.

The surface roughness is determined with a ratio of the BET surface area to a sphere-equivalent area calculated with a particle size distribution (the BET surface area/the sphere-equivalent area calculated with the particle size distribution). Specifically, the surface roughness can be determined by a method described in Example.

The composite material in the first aspect of the present invention can contain a metal, a metal oxide, or an alloy other than the metal oxide layer. The metal, the metal oxide, or the alloy is not limited as long as it occludes and releases lithium. Examples thereof include silicon, tin, zinc, an oxide thereof, and an alloy thereof, and the composite material preferably contains silicon. Containing silicon can increase a discharge capacity. The metal, the metal oxide, or the alloy may be contained inside the metal oxide layer, may be provided by formation of a layer other than the metal oxide, and may be contained in the carbonaceous material. In the present invention, silicon is further preferably contained in the carbonaceous material. Silicon coated with the metal oxide layer inhibits a side reaction due to a contact between the silicon and the electrolyte or electrolyte liquid to improve cycle characteristics.

When the composite material contains silicon, silicon atoms are preferably contained at 15 mass% or more, more preferably 20 mass% or more, and further more preferably 25 mass% or more, in 100 mass% of the composite material. The silicon at 15 mass% or more can increase the discharge capacity.

When the composite material contains silicon, silicon atoms are preferably contained at 70 mass% or less, more preferably 65 mass% or less, and further more preferably 60 mass% or less. The silicon at 70 mass% or less can reduce the amount expanded per particle during charge.

[2-2] Carbonaceous Material 21

The carbonaceous material contained in the composite material in the first aspect of the present invention is not particularly limited, and amorphous carbon materials such as soft carbon and hard carbon, carbon fibers, vapor grown carbon fibers, multiwalled carbon nanotubes, single-walled carbon nanotubes, nano wires, and graphite materials can be used. Amorphous carbon materials and graphite materials are preferable. Examples of the shape include particulate or fibric shape, and a particulate shape is preferable. The graphite materials and the amorphous carbon materials are preferable because of their high electron conductivity and excellent cycle characteristics. When the carbonaceous material is the graphite material, an artificial graphite material is preferable, and an artificial graphite material with an inner solid structure is more preferable. With the inner solid structure, an interparticle removing hardly occurs even with repeated expansion and contraction during charge and discharge, and cycle characteristics at high temperature and storage characteristics at high temperature become excellent.

The carbonaceous material can contain a metal, a metal oxide, or an alloy. The metal, the metal oxide, or the alloy is not limited as long as it occludes and releases lithium. Examples thereof include silicon, tin, zinc, an oxide thereof, and an alloy thereof.

The carbonaceous material preferably contains silicon, and is further preferably a silicon-containing amorphous carbon material. A structure of the silicon-containing amorphous carbon material is not limited, and a composite in which pores in a porous amorphous carbon material are filled with silicon is preferable. The porous amorphous carbon material can be generated by known manufacturing methods, and for example, by a manufacturing method similar to that in active carbon or an appropriate heat treatment to a polymer. A containing silicon method is not limited, and the composite can be obtained by, for example, chemical vapor deposition (CVD) of exposure of a porous carbon material (for example, a porous amorphous carbon material) to silane gas at a high temperature in the presence of a silicon-containing gas, preferably silane, to generate silicon in the pores in the porous carbon material.

[2-3] Metal Oxide Layer 22

The metal oxide layer included in the composite material in the first aspect of the present invention is not particularly limited, and preferably contains at least one oxide of a metal selected from Groups 1 to 12 elements of the periodic table, aluminum, gallium, indium, thallium, tin, and lead. These oxides may be a perovskite-type oxide. The metal oxide layer more preferably contains at least one oxide of a metal of Groups 3 to 12 of the periodic table, and further preferably contains at least one selected from the group consisting of lithium titanate, lithium niobate, and titanium oxide (amorphous). This is because lithium titanate and lithium niobate have excellent lithium-ion conductivity and high compatibility with the solid electrolyte. Lithium titanate is most preferable.

The metal oxide layer can further contain at least one selected from the group consisting of a particulate conductive auxiliary, a fibrous conductive auxiliary, and a solid electrolyte. The solid electrolyte may be particulate, and may be present as a layer.

A 50% particle diameter in a cumulative particle size distribution on a volumetric basis, D50, of the particulate solid electrolyte is desirably 10 nm or larger and 1 $\mu$m or smaller.

The D50 can be measured by using a laser diffraction-type particle size distribution measurement apparatus. Specifically, the D50 can be measured by a method described in Example.

A coated area of the layered solid electrolyte layer desirably has an arithmetic average of a circle-equivalent diameter of 1 $\mu$m or larger and 10 $\mu$m or smaller.

Examples of the particulate conductive auxiliary include carbon black, acetylene black, and Ketjenblack. Examples of the fibrous conductive auxiliary include a vapor grown carbon fiber (such as VGCF(R)) and a carbon nanotube. Examples of the solid electrolyte include a particulate sulfide solid electrolyte, a particulate oxide solid electrolyte, a sulfide solid electrolyte layer, and an oxide solid electrolyte layer.

The amount of these conductive auxiliaries added is preferably 0.1 parts by mass or more and 5.0 parts by mass or less based on 100 parts by mass of the carbonaceous material.

The particulate conductive auxiliary, the fibrous conductive auxiliary, and the solid electrolyte may have a structure of adhering to the surface of the metal oxide layer, and may have a structure of embedding a part or all thereof in the metal oxide layer.

Metal Oxide Particle 23

In another embodiment of the present invention, a metal oxide particle adheres to the surface of the metal oxide layer. The metal oxide particle is composed of a material similar to the metal oxide constituting the metal oxide layer, but the metal oxide layer and the metal oxide particle are not necessarily the same material. The metal oxide particle may adhere to the exposed carbonaceous material not only to the metal oxide layer. Specifically, the metal oxide particle preferably contains at least one oxide of a metal selected from Groups 1 to 12 elements of the periodic table, aluminum, gallium, indium, thallium, tin, and lead, more preferably contains at least one oxide of a metal of Groups 3 to 12 of the periodic table, and further preferably contains at least one selected from the group consisting of lithium titanate, lithium niobate, and titanium (IV) oxide.

A particle diameter of the metal oxide particle is preferably 100 nm or smaller. The amount adhered thereof is preferably 1 mass% or less based on the core from the viewpoint of increase in rate characteristics.

[2-4] Manufacturing Method of Composite Material

An embodiment of a manufacturing method of the composite material of the present invention will be exemplified below, but the manufacturing method of the composite material of the present invention is not limited to the below.

A manufacturing method of the composite material according to the first aspect of the present invention is a manufacturing method of a composite material comprising: a carbonaceous material; and a metal oxide layer coating a surface of the carbonaceous material, wherein the metal oxide layer coats the surface of the carbonaceous material, forming a sea-island structure in which the metal oxide layer is scattered in islands, the method comprising: a step of preparing a solution containing: at least one metal oxide precursor selected from a metal alkoxide and a metal complex (also including a chelate complex); and a solvent; a step of spraying the solution to a flow-state carbonaceous material; and a step of forming a metal oxide layer by heat-treating the carbonaceous material to which the metal oxide precursor adheres.

A manufacturing method of the composite material according to another first aspect of the present invention is a manufacturing method of a composite material comprising: a carbonaceous material; and a metal oxide layer coating a surface of the carbonaceous material, wherein the metal oxide layer coats the surface of the carbonaceous material, forming a sea-island structure in which the metal oxide layer is scattered in islands, the method comprising: a step of preparing a solution containing: at least one metal oxide precursor selected from a metal alkoxide and a metal complex (also including a chelate complex); and a solvent; a step of spraying the solution to a flow-state carbonaceous material; and a step of forming the metal oxide layer from the metal oxide precursor with a sol-gel reaction.

The metal oxide precursor is at least one selected from a metal alkoxide and a metal complex (also including a chelate complex), and preferably one stably dissolves in the solvent. Specific examples thereof include tetraisopropyl orthotitanate, niobium (V) ethoxide, vanadium (V) triethoxide oxide, aluminum triethoxide, and zirconium (IV) ethoxide.

The solvent is selected from water or an organic solvent. The solvent is not particularly limited as long as it can dissolve the metal oxide precursor, and preferably a highly polar organic solvent such as methanol, ethanol, isopropyl alcohol, and butanol. A boiling point of the organic solvent is preferably 200°C or lower.

The precursor solution preferably contains a compound to be a Li compound. In this case, the metal oxide becomes a lithium-containing metal oxide to have high lithium conductivity. Examples of the Li compound include methoxylithium and ethoxylithium.

A concentration of the metal oxide precursor in the precursor solution is preferably 1 mass% or more. Setting the concentration of the precursor to 1 mass% or more facilitates formation of the sea-island structure. From the similar viewpoint, the concentration of the precursor is more preferably 5 mass% or more, and further preferably 10 mass% or more. The concentration of the precursor is preferably 50 mass% or less. At a too high concentration, it is difficult to form the layer having an average thickness of 1 $\mu$m or more with a circle-equivalent diameter. From the similar viewpoint, the concentration of the precursor is more preferably 40 mass% or less, and further preferably 35 mass% or less.

A method of forming the flow-state carbonaceous material is not particularly limited. Examples thereof include a method using a rolling fluidized bed or a swirling fluidized bed, and a method using the rolling fluidized bed is preferable. Examples of an apparatus for the rolling fluidized bed include MP series, manufactured by Powrex Corporation.

When the rolling fluidized bed is used, an intake temperature during operation is preferably a temperature of the boiling point of the organic solvent +5 to 20°C or higher. This range facilitates formation of a metal oxide precursor layer having a thickness of 1 $\mu$m or more.

When the rolling fluidized bed is used, the operation is preferably performed under a low humidity atmosphere. Examples of the low humidity atmosphere include a nitrogen gas atmosphere, an argon gas atmosphere, and the atmosphere with a humidity of 25% or lower.

An intake rate of the rolling fluidized bed is not limited, and preferably satisfies a condition under which the carbonaceous material is completely fluidized.

A method of spraying the precursor solution to the carbonaceous material is not particularly limited, and examples thereof include a method using a tube pump and a spray nozzle.

The heat treatment of the composite material after spraying can form the metal oxide layer. A condition of the heat treatment is not particularly limited, and a temperature of the heat treatment is preferably 200°C or higher and 500°C or lower. A heating rate is preferably 10°C/h or higher and 200°C/h or lower. A holding time at the maximum temperature is preferably 1 h or longer and 5 h or shorter. A cooling rate is preferably 10°C/h or higher and 300°C/h or lower. When the metal oxide layer contains a sulfide solid electrolyte, the heat treatment is preferably performed under a nitrogen gas atmosphere or an argon gas atmosphere.

When the metal oxide layer is formed by, for example, the sol-gel reaction, the composite material can be used as the negative electrode active material of the lithium-ion secondary battery without the heat treatment.

When the metal oxide particle adheres to the surface of the composite material, the metal oxide is formed as a particle from the metal oxide precursor by, for example, increasing the concentration of the metal oxide precursor or by reducing the spraying rate to adhere to the surface as the metal oxide particle.

The metal oxide layer containing, for example, the particulate conductive auxiliary, the fibrous conductive auxiliary, or the solid electrolyte can be manufactured by adding these components into the precursor solution, and in the next step, spraying the mixture to the carbonaceous material. The amount of these components blended is preferably 0.1 parts by mass or more and 5.0 parts by mass or less based on 100 parts by mass of the used carbonaceous material.

To improve the dispersibility of these components in the precursor solution, a dispersant such as a surfactant may be blended into the precursor solution.

The metal oxide layer containing, for example, the particulate conductive auxiliary, the fibrous conductive auxiliary, or the solid electrolyte can also be manufactured by adhering the above components to the surface of the composite material after spraying. Examples of the adhering method include a method using, for example, a stirring-mixing granulator and spray drying. Examples of the stirring-mixing granulator include VG series, manufactured by Powrex Corporation. The amount adhered is preferably 0.1 parts by mass or more and 5.0 parts by mass or less based on 100 parts by mass of the carbonaceous material in the composite material.

In addition, the method of addition into the precursor solution and the method of adhesion can be used in combination. When these methods are used in combination, a total amount of, for example, the particulate conductive auxiliary, the fibrous conductive auxiliary, the particulate solid electrolyte, and the solid electrolyte layer is preferably 0.1 parts by mass or more and 5.0 parts by mass or less based on 100 parts by mass of the carbonaceous material.

[3] Second Aspect

[3-1] Composite Material

A composite material according to a second aspect of the present invention is a composite material comprising

a core composed of a carbonaceous material; and a metal oxide layer and amorphous carbon layer coating a surface of the carbonaceous material, wherein the metal oxide layer has the sea-island structure in which the metal oxide layer is scattered in islands on the surface of the carbonaceous material.

Coating the surface of the carbonaceous material with the metal oxide layer increases lithium-ion conductivity, and coating the surface with the amorphous carbon layer provides an electrode excellent in electric conductivity. In addition, the metal oxide layer has high compatibility with the electrolyte, and for example, the composite material and the solid electrolyte well disperse each other in the negative electrode mixture layer 132, and coating the surface of the carbonaceous material with the amorphous carbon layer provides the electrode excellent in electric conductivity. The metal oxide layer having the sea-island structure in which the metal oxide layer is scattered in islands on the surface of the carbonaceous material provides higher electric conductivity than coating an entire surface with the metal oxide layer. The sea-island structure refers to a structure in which a sea portion surrounds an island portion. In a case of the present invention, any aspect of a sea portion constituted with an exposed carbonaceous material without formation of an island portion and a sea portion constituted with a coating layer composed of another material is included in the present invention.

In the present invention, the surface of the composite material has a portion coated with the metal oxide layer and a portion coated with the amorphous carbon layer at a specific ratio. Both of the metal oxide layer having excellent ion conductivity and the amorphous carbon layer having excellent electric conductivity constituting the surface of the composite material at the specific ratio facilitates a move of lithium ions between the particles and enables to achieve good electric conductivity and a reduced reaction resistance. Accordingly, good rate characteristics and a high first coulombic efficiency can be obtained when the composite material is used as the electrode material of the all-solid-state type lithium-ion secondary battery.

The presence of the portion where the metal oxide layer is exposed and the portion where the amorphous carbon layer is exposed on the surface of the composite material can be confirmed by mapping of, for example, EDS, AES, SEM, and Raman spectroscopic analysis.

In the present invention, an aspect in that the metal oxide layer and the amorphous carbon layer are scattered in islands on the surface of the carbonaceous material is a preferable aspect. The metal oxide layer is a layer coating the surface of the carbonaceous material.

The metal oxide layer has the sea-island structure in which the metal oxide layer is scattered in islands on the surface of the carbonaceous material. A coating rate with the metal oxide layer is preferably 20% or more, more preferably 25% or more, and further preferably 30% or more. The coating rate of 20% or more can increase ion conductivity of the composite material. The coating rate is preferably 80% or less, more preferably 70% or less, and further preferably 65% or less. The coating rate of 80% or less can increase electric conductivity of the composite material.

The coating rate can be regulated with manufacturing conditions such as, for example, the amount of a metal oxide precursor added to the carbonaceous material and adding rate thereof, and an atmosphere temperature.

The coating rate can be measured with, for example, a binarized image of a SEM image or a mapping image by Raman spectroscopy.

The amorphous carbon layer is a layer coating the surface of the carbonaceous material. The amorphous carbon layer may be any of being scattered in islands and coating in a sea phase, and can be appropriately selected. A coating rate with the amorphous carbon layer is preferably 20% or more, more preferably 25% or more, and further preferably 30% or more.

The coating rate of 20% or more can increase the electric conductivity of the composite material. The coating rate is preferably 80% or less, more preferably 70% or less, and further preferably 65% or less. The coating rate of 80% or less allows the metal oxide layer to sufficiently coat the surface of the composite material, resulting in improvement in compatibility with the electrolyte in the electrode. As an aspect illustrated in FIG. 3, the present invention includes an aspect in which a total coating rate is not 100% and the carbonaceous material of the core is exposed.

The coating rate can be regulated with manufacturing conditions such as, for example, the amount of a raw material of the amorphous carbon added to the carbonaceous material and adding rate thereof, and an atmosphere temperature.

The coating rate can be measured with, for example, a binarized image of a SEM image or a mapping image by Raman spectroscopy. Specifically, the coating rate can be measured by a method described in Example.

In the second aspect of the present invention, a total coating rate with the metal oxide layer and amorphous carbon layer in the composite material is preferably 20% or more. The total coating rate of 20% or more can yield an electrode having high dispersibility with the solid electrolyte and high electric conductivity. From the similar viewpoint, the total coating rate is preferably 40% or more, more preferably 60% or more, and most preferably 80% or more.

The composite material according to the second aspect of the present invention has the sea-island structure in which the amorphous carbon layer is present in a sea phase on the surface of the carbonaceous material. Since the amorphous carbon layer has higher compatibility with the electrolyte than graphite, this structure can yield an electrode having particularly high compatibility with the electrolyte and high electric conductivity. In addition, this structure can yield a battery having a high coulombic efficiency because the amorphous carbon layer covers up a disadvantage of the carbonaceous material being the core.

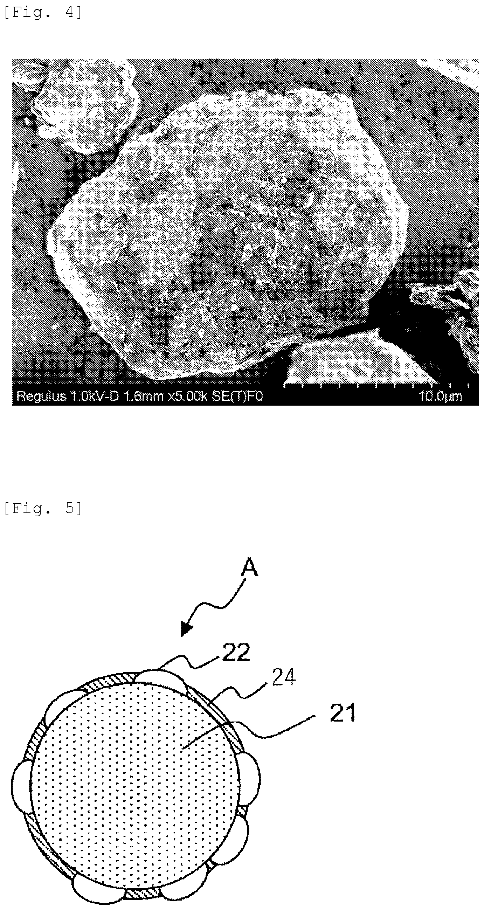

FIG. 5 is a schematic cross-sectional view illustrating a constitution of a composite material A according to the second aspect of the present invention.

The composite material A has a sea-island structure in which a metal oxide layer 22 and an amorphous carbon layer 24 coat a surface of the carbonaceous material 21; the metal oxide layer 22 is scattered in islands on the surface of the carbonaceous material 21; and the amorphous carbon layer 24 is present in a sea phase on the surface of the carbonaceous material 21.

The composite material according to the second aspect of the present invention has a sea-island structure in which the amorphous carbon layer is scattered in islands on the surface of the carbonaceous material. Since the amorphous carbon layer scattered in islands can increase dispersibility with the solid electrolyte, increase electric conductivity, and increase electrode density, a battery with a high energy density can be obtained.

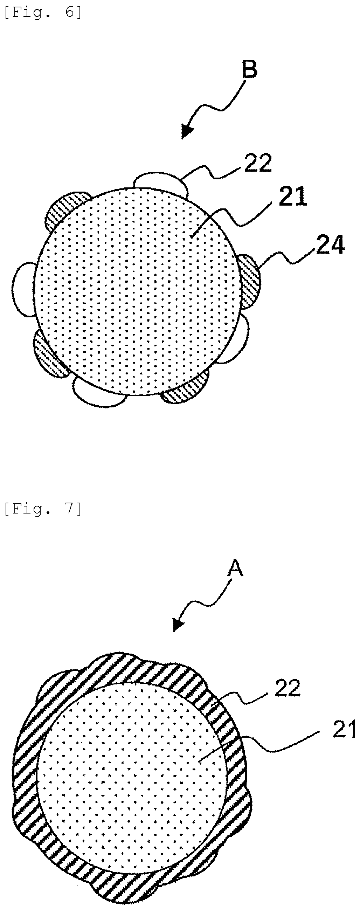

FIG. 6 is a schematic cross-sectional view illustrating a constitution of a composite material B according to the second aspect of the present invention. The composite material B has a sea-island structure in which a metal oxide layer 22 and an amorphous carbon layer 24 coat a surface of the carbonaceous material 21; and the metal oxide layer 22 and the amorphous carbon layer 24 are scattered in islands on the surface of the carbonaceous material 21.

In the composite material according to another second aspect of the present invention, a metal oxide particle preferably adheres to at least any one surface of the metal oxide layer and the amorphous carbon layer.

In this structure, the metal oxide particle having high compatibility with the electrolyte is present on the surface of the composite material increases a surface roughness, described later, to allow, for example, the composite material and the solid electrolyte to well disperse each other in the negative electrode mixture layer 132 in which the composite material and the solid electrolyte mix.

This structure can be confirmed with a mapping image with a scanning electron microscope (SEM) or Raman spectroscopy.

In the composite material according to the second aspect of the present invention, a rate of a total coated area with a metal oxide layer having a 0.10 times or more and 0.95 times or less circle-equivalent diameter of a D50 of the composite material is preferably 80% or more in an entire coated area with the metal oxide layer. In this case, compatibility with the electrolyte is increased. From the similar viewpoint, the rate is more preferably 85% or more, and further preferably 90% or more. The circle-equivalent diameter is preferably 1 $\mu$m or larger and 10 $\mu$m or smaller.

The circle-equivalent diameter of the metal oxide layer is preferably 0.10 times or more and 0.95 times or less of the D50 of the composite material. When the diameter is more than 0.10 times, the metal oxide layer is difficult to be removed from the surface of the carbonaceous material to be highly effective with the metal oxide layer. When the diameter is 0.95 times or less, a resistance is reduced to provide excellent rate characteristics.

The circle-equivalent diameter can be measured by a method described in Example.

An average thickness of the metal oxide layer of the composite material in the second aspect of the present invention is preferably 10 nm or more. Setting the average thickness to 10 nm or more can achieve chemical stability and mechanical strength. From the similar viewpoint, the average thickness is more preferably 15 nm or more, and further preferably 20 nm or more.

The average thickness of the metal oxide layer of the composite material in the second aspect of the present invention is preferably 100 nm or less. Setting the average thickness to 100 nm or less can prevent the composite material from an unnecessary increase in size, and can increase cycle characteristics of the secondary battery. From the similar viewpoint, the average thickness is more preferably 90 nm or less, and further preferably 80 nm or less.

The average thickness of the metal oxide layer can be measured by a method described in Example.

An average thickness of the amorphous carbon layer of the composite material in the second aspect of the present invention is preferably 5 nm or more. Setting the average thickness to 5 nm or more can achieve chemical stability and mechanical strength. From the similar viewpoint, the average thickness is more preferably 15 nm or more, and further preferably 20 nm or more.

The average thickness of the amorphous carbon layer of the composite material in the second aspect of the present invention is preferably 100 nm or less. The average thickness of 100 nm or less increases a first coulombic efficiency, and can increase a density of the electrode to yield a battery with a high energy density. From the similar viewpoint, the average thickness is more preferably 50 nm or less, and further preferably 30 nm or less.

The average thickness of the amorphous carbon layer can be measured by a method described in Example.

A content of the metal oxide layer in the composite material in the second aspect of the present invention is preferably 0.1 parts by mass or more based on 100 parts by mass of the composite material. Setting the content of the metal oxide layer to 0.1 parts by mass or more can improve compatibility between the composite material and the solid electrolyte to increase ion conductivity therebetween. From the similar viewpoint, the content of the metal oxide layer is more preferably 0.3 parts by mass or more, and further preferably 0.5 parts by mass or more.

The content of the metal oxide layer in the composite material in the second aspect of the present invention is preferably 10 parts by mass or less based on 100 parts by mass of the composite material. Setting the content of the metal oxide layer to 10 parts by mass or less can expose the amorphous carbon layer or the carbonaceous material on the surface of the composite material to increase electric conductivity between the composite materials or between the composite material and the solid electrolyte. From the similar viewpoint, the content of the metal oxide layer is more preferably 5.0 parts by mass or less, and further preferably 3.0 parts by mass or less.

A content of the amorphous carbon layer in the composite material in the second aspect of the present invention is preferably 0.1 parts by mass or more based on 100 parts by mass of the composite material. Setting the content of the amorphous carbon layer to 0.1 parts by mass or more can improve compatibility between the composite material and the solid electrolyte to increase ion conductivity therebetween. From the similar viewpoint, the content of the amorphous carbon layer is more preferably 0.3 parts by mass or more, and further preferably 0.5 parts by mass or more.

The content of the amorphous carbon layer in the composite material in the second aspect of the present invention is preferably 5.0 parts by mass or less based on 100 parts by mass of the composite material. Setting the content of the amorphous carbon layer to 5.0 parts by mass or less can expose the metal oxide layer or the carbonaceous material on the surface of the composite material to increase electric conductivity between the composite materials or between the composite material and the solid electrolyte. From the similar viewpoint, the content of the amorphous carbon layer is more preferably 3.0 parts by mass or less, and further preferably 1.0 part by mass or less.

A BET specific surface area of the composite material in the second aspect of the present invention is preferably 0.5 $m^2/g$ or more. The BET specific surface area of 0.5 $m^2/g$ or more facilitates insertion and desorption of lithium ions to increase a rate capacity maintenance rate. From the similar viewpoint, the BET specific surface area is more preferably 1.0 $m^2/g$ or more, and further preferably 1.5 $m^2/g$ or more.

The BET specific surface area of the composite material in the second aspect of the present invention is preferably 12.0 $m^2/g$ or less. The BET specific surface area of 12.0 $m^2/g$ or less inhibits a side reaction with the solid electrolyte to increase a first coulombic efficiency. From the similar viewpoint, the BET specific surface area is more preferably 7.0 $m^2/g$ or less, and further preferably 5.0 $m^2/g$ or less.

The BET specific surface area can be measured by a method described in Example.

In the composite material in the second aspect of the present invention, d002, which is an average plane spacing of (002) planes with an X-ray diffraction measurement thereof, is preferably 0.3354 nm or longer. The 0.3354 nm is a lower limit of d002 of a graphite crystal. The d002 is more preferably 0.3356 nm or longer, and further preferably 0.3370 nm or longer. The d002 of 0.3356 nm or longer indicates a graphite crystalline structure that is not overdeveloped, and provides excellent cycle characteristics. A material not indicating a clear peak of the (002) planes, such as amorphous carbon, also provides excellent cycle characteristics.

The d002 can be measured by using a powder X-ray diffraction (XRD) method.

When the composite material in the second aspect of the present invention is particulate, D50 thereof, which is a 50% particle diameter in a cumulative particle size distribution on a volumetric basis, is preferably 1.0 $\mu$m or larger, more preferably 4.0 $\mu$m or larger, and further preferably 10.0 $\mu$m or larger. Setting the D50 to 1.0 $\mu$m or larger improves handleability of the composite material, and in addition, when the composite material is mixed with the solid electrolyte to be used as the negative electrode material of the lithium-ion secondary battery, the dispersibility of the composite material in the solid electrolyte is improved to provide good cycle characteristics.

When the composite material in the second aspect of the present invention is particulate, the D50 thereof is preferably 30.0 $\mu$m or smaller, more preferably 20.0 $\mu$m or smaller, and further preferably 15.0 $\mu$m or smaller. Setting the D50 to 30.0 $\mu$m or smaller can maintain the composite material with a large specific surface area, and when the composite material is used as the negative electrode material of the lithium-ion secondary battery, input and output characteristics in the negative electrode are improved.

The D50 herein can be measured by using a laser diffraction-type particle size distribution measurement apparatus. Specifically, the D50 can be measured by a method described in Example.

When the composite material in the second aspect of the present invention is particulate, a surface roughness thereof is preferably 1.0 or more. The surface roughness of 1.0 or more tends to reduce a resistance to improve rate characteristics. From the similar viewpoint, the surface roughness is more preferably 2.0 or more, and further preferably 3.0 or more. The surface roughness is preferably 10.0 or less. The surface roughness of 10.0 or less inhibits a side reaction with the solid electrolyte to provide excellent cycle characteristics. From the similar viewpoint, the surface roughness is more preferably 7.0 or less, and further preferably 5.0 or less.

The surface roughness is determined with a ratio of the BET surface area to a sphere-equivalent area calculated with the particle size distribution (the BET surface area/the sphere-equivalent area calculated with the particle size distribution). Specifically, the surface roughness can be determined by a method described in Example.

The composite material in the second aspect of the present invention can contain a metal, a metal oxide, or an alloy other than the metal oxide layer. The metal, the metal oxide, or the alloy is not limited as long as it occludes and releases lithium. Examples thereof include silicon, tin, zinc, an oxide thereof, and an alloy thereof, and the composite material preferably contains silicon. Containing silicon can increase a discharge capacity. Silicon is further preferably contained in the carbon material. Silicon coated with the metal oxide layer inhibits a side reaction due to a contact between the silicon and the electrolyte or electrolyte liquid to improve cycle characteristics.

When the composite material contains silicon, silicon atoms are preferably contained at 15 mass% or more, more preferably 20 mass% or more, and further more preferably 25 mass% or more, in 100 mass% of the composite material. The silicon at 15 mass% or more can increase the discharge capacity.

When the composite material contains silicon, silicon atoms are preferably contained at 70 mass% or less, more preferably 65 mass% or less, and further more preferably 60 mass% or less. The silicon at 70 mass% or less can reduce the amount expanded per particle during charge.

[3-2] Carbonaceous Material 21

The carbonaceous material contained in the composite material in the second aspect of the present invention is not particularly limited, and amorphous carbon materials such as soft carbon and hard carbon, carbon fibers, vapor grown carbon fibers, multiwalled carbon nanotubes, single-walled carbon nanotubes, nano wires, and graphite materials can be used. Examples of the shape include particulate or fibric shape, and a particulate shape is preferable. The graphite materials and the amorphous carbon materials are more preferable because these materials can increase electron conductivity to provide excellent cycle characteristics. When the carbonaceous material is a graphite particle, a graphite particle with an inner solid structure is more preferable. With the inner solid structure, an interparticle removing hardly occurs even with repeated expansion and contraction during charge and discharge, and cycle characteristics at high temperature and storage characteristics at high temperature become excellent.

As the carbonaceous material, a composite material composed of a metal, a metal oxide, or an alloy can also be used. The metal, the metal oxide, or the alloy is not limited as long as it occludes and releases lithium, and examples thereof include silicon, tin, zinc, an oxide thereof, and an alloy thereof. The carbonaceous material preferably contains silicon, and is further preferably a silicon-containing amorphous carbon material. A structure of the silicon-containing amorphous carbon material is not limited, and a composite in which pores in a porous amorphous carbon material are filled with silicon is preferable. The porous amorphous carbon material can be generated by known manufacturing methods, for example, by a manufacturing method similar to that in active carbon or by performing an appropriate heat treatment to a polymer. A containing silicon method is not limited, and the composite can be obtained by, for example, chemical vapor deposition (CVD) of exposure of a porous carbon material (for example, a porous amorphous carbon material) to silane gas at a high temperature in the presence of a silicon-containing gas, preferably silane, to generate silicon in the pores in the porous carbon material.

[3-3] Metal Oxide Layer 22

The metal oxide layer included in the composite material in the second aspect of the present invention is not particularly limited, and preferably contains at least one oxide of a metal selected from Groups 1 to 12 elements of the periodic table, aluminum, gallium, indium, thallium, tin, and lead. These oxides may be a perovskite-type composite oxide. The metal oxide layer more preferably contains at least one oxide of a metal of Groups 3 to 12 of the periodic table, and further preferably contains at least one selected from the group consisting of lithium titanate, lithium niobate, and titanium oxide (amorphous). This is because lithium titanate and lithium niobate have excellent lithium-ion conductivity and high compatibility with the electrolyte. Lithium titanate is most preferable in the present invention.

[3-4] Amorphous Carbon Layer 24

The amorphous carbon layer included in the composite material in the second aspect of the present invention is obtained by heat-treating a raw material of the amorphous carbon, such as petroleum pitch, coal pitch, and a polymer. Examples of the polymer include at least one compound selected from the group consisting of a phenol resin, a polyvinyl alcohol resin, a furan resin, a cellulose resin, a polystyrene resin, a polyimide resin, and an epoxy resin. Among these raw materials, coal pitch and petroleum pitch are preferable from the viewpoint of a high carbon residue ratio and good battery characteristics when used as a raw material of the coating layer. Petroleum pitch is more preferable from the viewpoint of obtaining a particularly high initial efficiency. Among them, in particular, pitch having a softening point of 100°C or higher and 300°C or lower is more preferable because of good operability.

[3-5] Additional Component

At least one of the metal oxide layer and amorphous carbon layer included in the composite material in the second aspect of the present invention can further contain at least one selected from the group consisting of a particulate conductive auxiliary, a fibrous conductive auxiliary, and a solid electrolyte. The solid electrolyte may be particulate, and may be present as a layer.

A 50% particle diameter in a cumulative particle size distribution on a volumetric basis, D50, of the particulate solid electrolyte is desirably 10 nm or larger and 1 $\mu$m or smaller.

A coated area with the layered solid electrolyte layer desirably has an arithmetic average of a circle-equivalent diameter of 1 $\mu$m or larger and 10 $\mu$m or smaller.

Examples of the particulate conductive auxiliary include carbon black, acetylene black, and Ketjenblack. Examples of the fibrous conductive auxiliary include a vapor grown carbon fiber (such as VGCF(R)) and a carbon nanotube. Examples of the solid electrolyte include a particulate sulfide solid electrolyte, a particulate oxide solid electrolyte, a sulfide solid electrolyte layer, and an oxide solid electrolyte layer.

These components are preferably contained at 0.1 parts by mass or more and 5.0 parts by mass or less based on 100 parts by mass of the composite material.

The particulate conductive auxiliary, the fibrous conductive auxiliary, and the solid electrolyte may have a structure of adhering to the surface of the metal oxide layer and/or amorphous carbon layer, and may have a structure of embedding a part or all thereof in the layer.

[3-6] Manufacturing Method of Composite Material

An embodiment of a manufacturing method of the composite material of the present invention will be exemplified below, but the manufacturing method of the composite material of the present invention is not limited to the below.

A manufacturing method of the composite material according to the second aspect of the present invention is a manufacturing method of a composite material comprising: a carbonaceous material; and a metal oxide layer and amorphous carbon layer coating a surface of the carbonaceous material, wherein the metal oxide layer coats the surface of the carbonaceous material, forming a sea-island structure in which the metal oxide layer is scattered in islands, the method comprising: a step of preparing a solution containing: at least one metal oxide precursor selected from a metal alkoxide and a metal complex (also including a chelate complex); a raw material of an amorphous carbon; and a solvent; a step of spraying the solution to a flow-state carbonaceous material; and a step of forming the metal oxide layer and the amorphous carbon layer by heat-treating a carbonaceous material to which the metal oxide precursor and the raw material of the amorphous carbon adhere.

The metal oxide precursor is at least one selected from a metal alkoxide and a metal complex (also including a chelate complex), and preferably one stably dissolves in the solvent. Specific examples thereof include tetraisopropyl orthotitanate, niobium (V) ethoxide, vanadium (V) triethoxide oxide, aluminum triethoxide, and zirconium (IV) ethoxide. The solution preferably contains a titanium oxide precursor or a niobium oxide precursor as the metal oxide precursor, and preferably further contains a lithium compound.

Examples of the raw material of the amorphous carbon include petroleum pitch, coal pitch, and a polymer, as above.

The solvent is selected from water or an organic solvent. The solvent is not particularly limited as long as it can dissolve the metal oxide precursor and the raw material of the amorphous carbon, and preferably a highly polar organic solvent such as methanol, ethanol, isopropyl alcohol, and butanol. A boiling point of the organic solvent is preferably 200°C or lower.

The solution preferably contains a lithium compound. In this case, the metal oxide becomes a lithium-containing metal oxide to have high lithium conductivity. Examples of the lithium compound include methoxylithium and ethoxylithium.

A concentration of the metal oxide precursor in the solution is preferably 1 mass% or more. The concentration of the precursor of 1 mass% or more facilitates formation of the sea-island structure. From the similar viewpoint, the concentration of the precursor is more preferably 5 mass% or more, and further preferably 10 mass% or more. The concentration of the precursor is preferably 50 mass% or less. At a too high concentration, it is difficult to form the layer having an average thickness of 1 $\mu$m or more with a circle-equivalent diameter. From the similar viewpoint, the concentration of the precursor is more preferably 40 mass% or less, and further preferably 35 mass% or less.

When the metal oxide particle adheres to the surface of the composite material, the metal oxide is formed as a particle from the metal oxide precursor by, for example, increasing the concentration of the metal oxide precursor or by reducing the spraying rate to adhere to the surface as the metal oxide particle.

A concentration of the raw material of the amorphous carbon in the solution is preferably 1 mass% or more. Setting the concentration of the raw material to 1 mass% or more facilitates formation of the sea-island structure. From the similar viewpoint, the concentration of the raw material is more preferably 5 mass% or more, and further preferably 10 mass% or more. The concentration of the raw material is preferably 50 mass% or less. At a too high concentration, it is difficult to form the metal oxide layer. From the similar viewpoint, the concentration of the raw material is more preferably 40 mass% or less, and further preferably 35 mass% or less.

The raw material of the amorphous carbon having a softening point of lower than 200 °C often forms a sea-island structure in which the amorphous carbon layer is present in a sea phase on the surface of the carbonaceous material.

The raw material of the amorphous carbon having a softening point of 200 °C or higher often forms a sea-island structure in which the amorphous carbon layer is scattered in islands on the surface of the carbonaceous material.

A method of forming the flow-state carbonaceous material is not particularly limited. Examples thereof include a method using a rolling fluidized bed or a swirling fluidized bed, and a method using the rolling fluidized bed is preferable. Examples of an apparatus for the rolling fluidized bed include MP series, manufactured by Powrex Corporation.

When the rolling fluidized bed is used, an intake temperature during operation is preferably a temperature of the boiling point of the organic solvent +5 to 20°C or higher. This range facilitates formation of a metal oxide precursor layer having a thickness of 1 $\mu$m or more.

When the rolling fluidized bed is used, the operation is preferably under a low humidity atmosphere. Examples of the low humidity atmosphere include a nitrogen gas atmosphere, an argon gas atmosphere, and the atmosphere with a humidity of 25% or lower.

An intake rate of the rolling fluidized bed is not limited, and preferably satisfies a condition under which the carbonaceous material is completely fluidized.

A method of spraying the solution to the carbonaceous material is not particularly limited, and examples thereof include a method using a tube pump and a spray nozzle.

The heat treatment of the composite material after spraying can form the metal oxide layer and the amorphous carbon layer. A condition of the heat treatment is not particularly limited, and a temperature of the heat treatment is preferably 200°C or higher and 500°C or lower. A heating rate is preferably 10°C/h or higher and 200°C/h or lower. A holding time at the maximum temperature is preferably 1 h or longer and 5 h or shorter. A cooling rate is preferably 10°C/h or higher and 300°C/h or lower. When the metal oxide layer contains a sulfide solid electrolyte, the heat treatment is preferably performed under a nitrogen gas atmosphere or an argon gas atmosphere.

The metal oxide layer containing, for example, the particulate conductive auxiliary, the fibrous conductive auxiliary, or the solid electrolyte can be manufactured by adding these components into the solution, and in the next step, spraying the mixture to the carbonaceous material. The amount of these components blended is preferably 0.1 parts by mass or more and 5.0 parts by mass or less based on 100 parts by mass of the used carbonaceous material.

To improve the dispersibility of these components in the solution, a dispersant such as a surfactant may be blended into the solution.

The metal oxide layer containing, for example, the particulate conductive auxiliary, the fibrous conductive auxiliary, or the solid electrolyte can also be manufactured by adhering the above components to the surface of the carbonaceous material after spraying. Examples of the adhering method include a method using, for example, a stirring-mixing granulator and spray drying. Examples of the stirring-mixing granulator include VG series, manufactured by Powrex Corporation. The amount adhered is preferably 0.1 parts by mass or more and 5.0 parts by mass or less based on 100 parts by mass of the carbonaceous material in the composite material.

In addition, the method of addition into the solution and the method of adhesion can be used in combination. When these methods are used in combination, a total amount of, for example, the particulate conductive auxiliary, the fibrous conductive auxiliary, the particulate solid electrolyte, and the solid electrolyte layer is preferably 0.1 parts by mass or more and 5.0 parts by mass or less based on 100 parts by mass of the carbonaceous material.

[4] Third Aspect

[4-1] Composite Material

A composite material according to a third aspect of the present invention is a composite material comprising: a core composed of a carbonaceous material; and a metal oxide layer coating a surface of the carbonaceous material. In the composite material, the metal oxide layer has at least a portion having a thickness of more than 10 nm, and in a coated area with the metal oxide layer, an area percentage of a portion having a thickness of 10 nm or less is 70% or more and 99% or less, and an area percentage of the portion having a thickness of more than 10 nm is 1% or more and 30% or less. That is, on the surface of the composite material according to the present invention, the metal oxide layer has a plurality of projections.

In the present invention, the composite material has the metal oxide layer having high compatibility with the electrolyte on the surface of the carbonaceous material. Thus, when this composite material is used as the negative electrode material with using, for example, a solid electrolyte, the composite material and the solid electrolyte well disperse each other in the negative electrode mixture layer 132. When the electrolyte dissolves in the electrolyte liquid, the composite material inhibits a side reaction with the electrolyte to exert effects of improvements in a first efficiency, cycle characteristics, and rate characteristics.

In the metal oxide layer, setting the area percentage of the portion having a thickness of 10 nm or less to 70% or more and 99% or less and setting the area percentage of the portion having a thickness of more than 10 nm to 1% or more and 30% or less can appropriately form roughness on the surface of the composite material to increase contacting points with the electrolyte. From the similar viewpoint, the area percentage of the portion having a thickness of 10 nm or less is preferably 75% or more and 99% or less, and more preferably 80% or more and 99% or less. The area percentage of the portion having a thickness of more than 10 nm is preferably 1% or more and 25% or less, and more preferably 1% or more and 20% or less.

The thickness and rate of the metal oxide layer can be measured with, for example, a binarized image of a SEM image or mapping by, for example, EDS, AES, and Raman spectroscopy.

The metal oxide layer is a layer coating the surface of the carbonaceous material. A coating rate with the metal oxide layer is preferably 95% or more, more preferably 97% or more, and further preferably 99% or more. Setting the coating rate to 95% or more can increase ion conductivity of the composite material, increase compatibility of the composite material with the electrolyte, and increase dispersibility of a solid electrolyte in a negative electrode mixture layer using the solid electrolyte.

The presence of the metal oxide layer on the surface can be confirmed by, for example, EDS, AES, or Raman spectroscopy.

The coating rate can be regulated with manufacturing conditions such as, for example, the type and amount of an underlayer (intermediate layer), described later, the amount of a metal oxide precursor added to the carbonaceous material and adding rate thereof, and an atmosphere temperature.

The coating rate can be measured with, for example, a binarized image of a SEM image or mapping by EDS, AES, and Raman spectroscopy.

The thickness, rate, and coating rate of the metal oxide layer can be regulated with, for example, a method in which a metal oxide particle to be a core adheres to the carbonaceous material and then the metal oxide layer is formed; and with manufacturing conditions such as the amount of a metal oxide precursor added to the carbonaceous material and adding rate thereof, and an atmosphere temperature.

FIG. 7 is a schematic cross-sectional view illustrating a constitution of a composite material A included in the composite material according to the third aspect of the present invention. The composite material A includes: a carbonaceous material 21; and a metal oxide layer 22 coating a surface of the carbonaceous material 21.

A composite material according to another third aspect of the present invention preferably has a metal oxide particle adhering to the surface of the metal oxide layer.

In this structure, the metal oxide particle 23 having high compatibility with the electrolyte is present near the surface of the composite material increases a surface roughness, described later, to allow, for example, the composite material and the particles constituting the solid electrolyte to well disperse each other in the negative electrode mixture layer 132 in which the composite material and the solid electrolyte mix.

This structure can be confirmed with a scanning electron microscope (SEM).

In the composite material in the third aspect of the present invention, a content of the metal oxide is preferably 0.1 parts by mass or more based on 100 parts by mass of the composite material. Setting the content of the metal oxide to 0.1 parts by mass or more can improve compatibility between the composite material and the electrolyte to increase ion conductivity therebetween. From the similar viewpoint, the content of the metal oxide is more preferably 0.3 parts by mass or more, and further preferably 0.5 parts by mass or more.

The content of the metal oxide in the composite material in the third aspect of the present invention is preferably 6.0 parts by mass or less based on 100 parts by mass of the composite material. Setting the content of the metal oxide to 6.0 parts by mass or less can thin the metal oxide layer in the composite material to increase electric conductivity of the composite material. From the similar viewpoint, the content of the metal oxide is more preferably 3.0 parts by mass or less, and further preferably 1.0 part by mass or less.

A BET specific surface area of the composite material in the third aspect of the present invention is preferably 0.05 $m^2$/g or more. The BET specific surface area of 0.05 $m^2$/g or more facilitates insertion and desorption of lithium ions to increase a rate capacity maintenance rate. From the similar viewpoint, the BET specific surface area is more preferably 0.8 $m^2$/g or more, and further preferably 1.0 $m^2$/g or more.

The BET specific surface area of the composite material in the third aspect of the present invention is preferably 12.0 $m^2$/g or less. The BET specific surface area of 5.0 $m^2$/g or less inhibits a side reaction with the electrolyte to increase a first coulombic efficiency. From the similar viewpoint, the BET specific surface area is more preferably 5.0 $m^2$/g or less, and further preferably 3.0 $m^2$/g or less.

The BET specific surface area can be measured by a method described in Example.

In the composite material in the third aspect of the present invention, d002, which is an average plane spacing of (002) planes with an X-ray diffraction measurement thereof, is preferably 0.3354 nm or longer. The 0.3354 nm is a lower limit of d002 of a graphite crystal. The d002 is more preferably 0.3356 nm or longer, and further preferably 0.3370 nm or longer. The d002 of 0.3356 nm or longer indicates a graphite crystalline structure that is not overdeveloped, and provides excellent cycle characteristics. A material not indicating a clear peak of the (002) planes, such as amorphous carbon, also provides excellent cycle characteristics.

The d002 can be measured by using a powder X-ray diffraction (XRD) method.

When the composite material in the third aspect of the present invention is particulate, D50 thereof, which is a 50% particle diameter in a cumulative particle size distribution on a volumetric basis, is preferably 1.0 $\mu$m or larger, more preferably 4.0 $\mu$m or larger, and further preferably 10.0 $\mu$m or larger. Setting the D50 to 1.0 $\mu$m or larger improves handleability of the composite material, and in addition, when the composite material is mixed with the solid electrolyte to be used as the negative electrode material of the lithium-ion secondary battery, the dispersibility of the composite material in the solid electrolyte is improved to provide good cycle characteristics.

When the composite material in the third aspect of the present invention is particulate, the D50 thereof is preferably 30.0 $\mu$m or smaller, more preferably 20.0 $\mu$m or smaller, and further preferably 15.0 $\mu$m or smaller. Setting the D50 to 30.0 $\mu$m or smaller can maintain the composite material with a large surface area, and when the composite material is used as the negative electrode material of the lithium-ion secondary battery, input and output characteristics in the negative electrode are improved.

The D50 herein can be measured by using a laser diffraction-type particle size distribution measurement apparatus. Specifically, the D50 can be measured by a method described in Example.

When the composite material in the third aspect of the present invention is particulate, a surface roughness thereof is preferably 1.0 or more. The surface roughness of 1.0 or more tends to reduce a resistance to improve rate characteristics. From the similar viewpoint, the surface roughness is more preferably 1.2 or more, and further preferably 1.5 or more. The surface roughness is preferably 10.0 or less. The surface roughness of 10.0 or less inhibits a side reaction with the electrolyte to provide excellent cycle characteristics. From the similar viewpoint, the surface roughness is more preferably 5.0 or less, and further preferably 3.0 or less.

The surface roughness is determined with a ratio of the BET surface area to a sphere-equivalent area calculated with the particle size distribution (the BET surface area/the sphere-equivalent area calculated with the particle size distribution). Specifically, the surface roughness can be determined by a method described in Example.

The composite material in the third aspect of the present invention can contain a metal, a metal oxide, or an alloy other than the metal oxide layer. The metal, the metal oxide, or the alloy is not limited as long as it occludes and releases lithium. Examples thereof include silicon, tin, zinc, an oxide thereof, and an alloy thereof, and the composite material preferably contains silicon. Containing silicon can increase a discharge capacity. Silicon is further preferably contained in the carbon material. Silicon coated with the metal oxide layer inhibits a side reaction due to a contact between the silicon and the electrolyte or the electrolyte liquid to improve cycle characteristics.

When the composite material contains silicon, silicon atoms are preferably contained at 15 mass% or more, more preferably 20 mass% or more, and further more preferably 25 mass% or more, in 100 mass% of the composite material. The silicon at 15 mass% or more can increase the discharge capacity.

When the composite material contains silicon, silicon atoms are preferably contained at 70 mass% or less, more preferably 65 mass% or less, and further more preferably 60 mass% or less. The silicon at 70 mass% or less can reduce the amount expanded per particle during charge.

[4-2] Carbonaceous Material 21

The carbonaceous material contained in the composite material in the third aspect of the present invention is not particularly limited, and amorphous carbon materials such as soft carbon and hard carbon, carbon fibers, vapor grown carbon fibers, multiwalled carbon nanotubes, single-walled carbon nanotubes, nano wires, and graphite materials can be used. Examples of the shape include particulate or fibric shape, and a particulate shape is preferable.

The graphite materials and the amorphous carbon materials are more preferable because these materials can increase electron conductivity to provide excellent cycle characteristics. When the carbonaceous material is the graphite material, a graphite particle with an inner solid structure is more preferable. With the inner solid structure, an interparticle removing hardly occurs even with repeated expansion and contraction during charge and discharge, and cycle characteristics at high temperature and storage characteristics at high temperature become excellent.

As the carbonaceous material, a composite material composed of a metal, a metal oxide, or an alloy can also be used. The metal, the metal oxide, or the alloy is not limited as long as it occludes and releases lithium, and examples thereof include silicon, tin, zinc, an oxide thereof, and an alloy thereof.

The carbonaceous material preferably contains silicon, and is further preferably a silicon-containing amorphous carbon material. A structure of the silicon-containing amorphous carbon material is not limited, and a composite in which pores in a porous amorphous carbon material are filled with silicon is preferable. The porous amorphous carbon material can be generated by known manufacturing methods, and for example, by a manufacturing method similar to that in active carbon or an appropriate heat treatment to a polymer. A method of adding silicon is not limited, and the composite can be obtained by, for example, chemical vapor deposition (CVD) of exposure of a porous carbon material (for example, a porous amorphous carbon material) to silane gas at a high temperature in the presence of a silicon-containing gas, preferably silane, to generate silicon in the pores in the porous carbon material.

[4-3] Metal Oxide Layer 22

The metal oxide layer included in the composite material in the third aspect of the present invention is not particularly limited, and preferably contains at least one oxide of a metal selected from Groups 1 to 12 elements of the periodic table, aluminum, gallium, indium, thallium, tin, and lead, more preferably contains at least one oxide of a metal of Groups 3 to 12 of the periodic table, and further preferably contains at least one selected from the group consisting of lithium titanate, lithium niobate, and titanium (IV) oxide. Lithium titanate is most preferable because of its excellent lithium-ion conductivity and high compatibility with the solid electrolyte.

The metal oxide layer can further contain at least one selected from the group consisting of a particulate conductive auxiliary, a fibrous conductive auxiliary, and a solid electrolyte. The solid electrolyte may be particulate, and may be present as a layer.

A 50% particle diameter in a cumulative particle size distribution on a volumetric basis, D50, of the particulate solid electrolyte is desirably 10 nm or larger and 1 $\mu$m or smaller.

A coated area of the layered solid electrolyte layer desirably has an arithmetic average of a circle-equivalent diameter of 1 $\mu$m or larger and 10 $\mu$m or smaller.

Examples of the particulate conductive auxiliary include carbon black, acetylene black, and Ketjenblack. Examples of the fibrous conductive auxiliary include a vapor grown carbon fiber (such as VGCF(R)) and a carbon nanotube. Examples of the solid electrolyte include a particulate sulfide solid electrolyte, a particulate oxide solid electrolyte, a sulfide solid electrolyte layer, and an oxide solid electrolyte layer.

The amount of these components added is preferably 0.1 parts by mass or more and 5.0 parts by mass or less based on 100 parts by mass of the composite material.

The particulate conductive auxiliary, the fibrous conductive auxiliary, and the solid electrolyte may have a structure of adhering to the surface of the metal oxide layer, and may have a structure of embedding a part or all thereof in the metal oxide layer.

[4-4] Metal oxide Particle 23

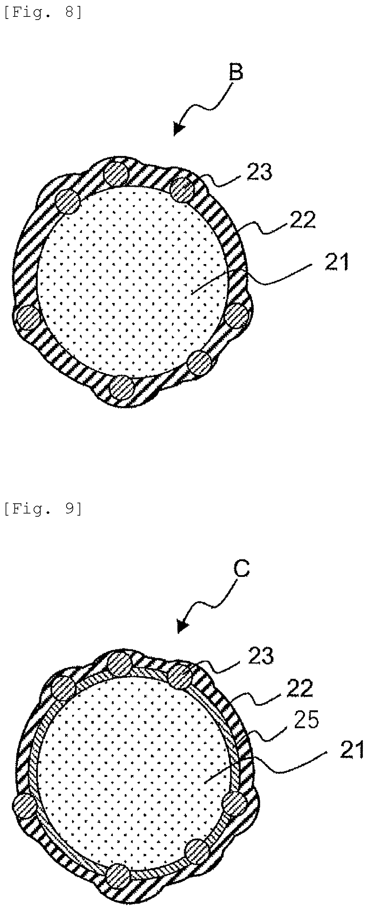

FIG. 8 is a schematic cross-sectional view illustrating a constitution of a composite material B included in the composite material according to the third aspect of the present invention. The composite material B includes: a carbonaceous material 21; a metal oxide layer 22 coating a surface of the carbonaceous material 21; and a metal oxide particle 23 inside the metal oxide layer 22. A part of the metal oxide particle 23 may be exposed from the metal oxide layer 22.

This metal oxide particle constitutes the portion having a thickness of more than 10 nm in the metal oxide layer 22.

The metal oxide layer included in the composite material in the third aspect of the present invention preferably contains the metal oxide particle inside thereof. The metal oxide particle is not particularly limited, and may be the same as or different from the component of the metal oxide layer. The metal oxide particle preferably contains at least one oxide of a metal selected from Groups 1 to 12 elements of the periodic table, aluminum, gallium, indium, thallium, tin, and lead, more preferably contains at least one oxide of a metal of Groups 3 to 12 of the periodic table, and further preferably contains at least one selected from the group consisting of lithium titanate, lithium niobate, and titanium (IV) oxide. Titanium (IV) oxide is most preferably contained because of its high compatibility with a sulfide solid electrolyte. Containing the inside metal oxide particle can be confirmed by observing a cross-sectional SEM or observing EDS or AES using argon-ion etching.

When the metal oxide particle contains titanium oxide, examples of a crystalline from of the titanium oxide contained in the metal oxide particle include anatase-type, rutile-type, and brookite-type, and are not particularly limited. A content rate of any of crystalline phases in a total crystalline phase in the metal oxide particle is preferably 70 mass% or more, more preferably 80 mass% or more, and further preferably 90 mass% or more. For example, when the titanium oxide contained in the metal oxide particle is mainly composed of an anatase crystalline phase, a content rate of the anatase crystalline phase in the total crystalline phase in this titanium oxide is preferably 70 mass% or more, more preferably 80 mass% or more, and further preferably 90 mass% or more. The same applies to a case where the titanium oxide contained in the metal oxide particle is mainly composed of a rutile crystalline phase and a case where it is mainly composed of a brookite crystalline phase.

An average diameter of primary particles of the metal oxide particle 23 is preferably 100 nm or smaller, more preferably 55 nm or smaller, further preferably 10 nm or smaller, and particularly preferably 7 nm or smaller. This is because such fine metal oxide particles can dispersedly adhere to the surface of the carbonaceous material to be the core of formation of the metal oxide layer, resulting in formation of the thin metal oxide layer with a high coating rate. The average diameter of the primary particles of the metal oxide particle is preferably 1 nm or larger, and more preferably 2 nm or larger. This is because of inhibition of aggregating the metal oxide particles. The average diameter of the primary particles of the metal oxide particle can be obtained by observation with a scanning electron microscope (SEM) described in Example.

[4-5] Underlayer (Intermediate Layer) 25

FIG. 9 is a schematic cross-sectional view illustrating a constitution of a composite material C included in the composite material according to the third aspect of the present invention. The composite material C includes: a carbonaceous material 21; a metal oxide layer 22 coating a surface of the carbonaceous material 21; a metal oxide particle 23 contained inside the metal oxide layer 22; and an underlayer (intermediate layer) 25 for the metal oxide layer, the underlayer being interposed between the carbonaceous material 21 and the metal oxide layer 22.

The composite material in the third aspect of the present invention preferably includes the underlayer for the metal oxide layer disposed at least partially between the surface of the carbonaceous material and the metal oxide layer. The underlayer is not limited as long as it is interposed between the carbonaceous material and the metal oxide layer and it can increase adhesiveness among both the materials and the metal oxide particle. A use of the composite material having this structure for the battery can increase a first coulombic efficiency, rate characteristics, and cycle characteristics.

The underlayer is preferably an amorphous carbon layer, a graphene layer, or a polymer layer.

Since having a polar functional group on a surface thereof, the amorphous carbon layer has good adhesiveness to the metal oxide layer and easily forms a thin uniform metal oxide layer.

The graphene layer is a layer including a monolayer graphene composed of only one layer or a multilayer graphene layer in which a plurality of graphenes are stacked (2 to 100 layers). The graphene layer is more preferably a graphene layer formed along the surface of the graphite particle. A graphene oxide, which has a polar functional group on a surface thereof, is further preferable because the graphene oxide has good adhesiveness to the metal oxide layer and easily forms a thin uniform metal oxide layer. In the graphene oxide, various oxygen-containing functional groups, such as an epoxy group, a carboxy group, a carbonyl group, and a hydroxy group, are bonded onto a graphene, a sheet composed of only carbon atoms having n-bonds.

Among the polymer layers, a polymer layer having a functional group such as an epoxy group, a carboxy group, a carbonyl group, and a hydroxy group is more preferable because such a polymer layer has good adhesiveness to the metal oxide layer and easily forms a thin uniform metal oxide layer. Preferably used as the polymer is a polymer having a weight-average molecular weight of 10,000 to 5,000,000 and having a main chain composed of a hydrocarbon structure, but not particularly limited.

An average thickness of the underlayer is preferably 100 nm or less. The average thickness of 100 nm or less can reduce a resistance of the electrode layer to increase rate characteristics of the battery. From the similar viewpoint, the average thickness is more preferably 30 nm or less, and further preferably 10 nm or less.

The average thickness of the underlayer is preferably 1 nm or more. Setting the average thickness to 1 nm or more can achieve chemical stability and mechanical strength. From the similar viewpoint, the average thickness is more preferably 3 nm or more, and further preferably 5 nm or more.

A part of the metal oxide particle may be embedded in the underlayer.

[4-6] Manufacturing Method of Composite Material

An embodiment of a manufacturing method of the composite material of the present invention will be exemplified below, but the manufacturing method of the composite material of the present invention is not limited to the below.

A manufacturing method of the composite material according to the third aspect of the present invention is a manufacturing method of a composite material comprising: a carbonaceous material; and a metal oxide layer coating a surface of the carbonaceous material, the method comprising: a step of obtaining a particle-adhered carbonaceous material by adhering a metal oxide particle to the surface of the carbonaceous material; a step of preparing a precursor solution containing: at least one metal oxide precursor selected from a metal alkoxide and a metal complex (also including a chelate complex); and a solvent; a step of spraying the precursor solution to a flow-state particle-adhered carbonaceous material; and a step of forming the metal oxide layer by heat-treating a particle-adhered carbonaceous material to which the metal oxide precursor adheres.

A manufacturing method of the composite material according to another third aspect of the present invention is a manufacturing method of a composite material comprising: a carbonaceous material; and a metal oxide layer coating a surface of the carbonaceous material, the method comprising: a step of obtaining a particle-adhered carbonaceous material by adhering a metal oxide particle to the surface of the carbonaceous material; a step of preparing a precursor solution containing: at least one metal oxide precursor selected from a metal alkoxide and a metal complex (also including a chelate complex); and a solvent; a step of spraying the precursor solution to a flow-state particle-adhered carbonaceous material; and a step of forming the metal oxide layer from the metal oxide precursor with a sol-gel reaction.

In the manufacturing method of the composite material according to the third aspect of the present invention, the step of obtaining the particle-adhered carbonaceous material by adhering the metal oxide particle to the surface of the carbonaceous material is preferably a step of mixing the carbonaceous material and the metal oxide particle with applying a mechanical action at least any of an impact force, a shearing force, a compressive force, and a frictional force.

A mixing method with applying a mechanical action at least any of an impact force, a shearing force, a compressive force, and a frictional force is not limited, and a composing machine such as, for example, NOBILTA(R) and MECHANO FUSION(R) can be used.

In the manufacturing method of the composite material according to the third aspect of the present invention, the step of obtaining the particle-adhered carbonaceous material by adhering the metal oxide particle to the surface of the carbonaceous material is preferably a step of obtaining the particle-adhered carbonaceous material by mixing the carbonaceous material, either a graphene or a polymer, and the metal oxide particle. This is because forming a graphene layer or a polymer layer on the surface of the carbonaceous particle to adhere the metal oxide particle with the layer can yield a particle-adhered carbonaceous material having high adhesiveness.

The mixing can be dry-mixing or can be wet-mixing.

When the wet-mixing is performed, for example, the carbonaceous material, either the graphene or the polymer, and the metal oxide particle are dissolved or dispersed in a solvent, and then the solvent is dry-removed.

When the dry-mixing is performed, for example, the carbonaceous material, either the graphene or the polymer, and the metal oxide particle are mixed with a force so as not to crash the carbonaceous material. For the mixing, a mixer such as a rotation-revolution mixer, a planetary mixer, and a Henschel mixer, and in addition, a composing machine such as NOBILTA(R) and MECHANO FUSION(R) can also be used.

Examples of the graphene include a graphene or a graphene oxide. Examples of the polymer include a phenol resin, an acrylic resin, a polyvinyl alcohol resin, a furan resin, a cellulose resin, a polystyrene resin, an epoxy resin, and polyvinyl alcohol.

In the manufacturing method of the composite material according to the third aspect of the present invention, the step of obtaining the particle-adhered carbonaceous material by adhering the oxide particle to the surface of the carbonaceous material is preferably a mixing step of obtaining a particle-adhered carbonaceous material by mixing: the carbonaceous material; at least any of pitch, tar, an organic compound, and a polymer; and the metal oxide particle; and a step of obtaining the particle-adhered carbonaceous material by heat-treating a mixture obtained in the mixing step.

Obtained is the mixture in which at least any of pitch, tar, a polymer, and an organic compound (raw material of the underlayer) adheres to the surface of the carbonaceous particle and the metal oxide particle adheres to the surface with the raw material, and heat-treating the mixture can yield the particle-adhered carbonaceous material in which the at least any of pitch, tar, a polymer, and an organic compound (raw material of the underlayer) is converted into the amorphous carbon layer or the underlayer composed of the graphene layer or the polymer layer. Since the underlayer is fixed on the surface of the carbonaceous material, the particle-adhered carbonaceous material having high adhesiveness can be obtained, and the battery having excellent cyclic characteristics can be obtained.

Examples of the pitch include petroleum pitch and coal pitch, and examples of the tar include petroleum tar and coal tar. Examples of the polymer include a phenol resin, an acrylic resin, a polyvinyl alcohol resin, a furan resin, a cellulose resin, a polystyrene resin, an epoxy resin, and polyvinyl alcohol. Examples of the organic compound include saccharides such as sucrose, lactose, glucose, maltose, and fructose. Among them, coal pitch and petroleum pitch are preferable from the viewpoint of a high carbon residue ratio and good battery characteristics when used as a raw material of the coating layer. In particular, petroleum pitch is more preferable because a high initial efficiency can be obtained. Among them, particularly, pitch having a softening point of 100°C or higher and 300°C or lower is further preferable because of good operability.

The mixing step can be dry-mixing or can be wet-mixing.

When the wet-mixing is performed, for example, the raw material of the underlayer is dissolved or dispersed in a solvent, the carbonaceous material and the metal oxide particle are further added, and then the solvent is dry-removed.

When the dry-mixing is performed, the carbonaceous material and the raw material of the underlayer are mixed with a force so as not to crash the carbonaceous material. For the mixing, a mixer such as a rotation-revolution mixer, a planetary mixer, and a Henschel mixer, and in addition, a composing machine such as NOBILTA(R) and MECHANO FUSION(R) can also be used.

A temperature of the heat treatment is preferably 500°C or higher and 1500°C or lower, more preferably 550°C or higher and 900°C or lower, and further preferably 600°C or higher and 800°C or lower. This heat treatment carbonizes the raw material to form the underlayer. Carbonizing the raw material at a temperature within this range allows sufficient adhesion to the carbonaceous material being the core, resulting in a good first coulombic efficiency and good rate characteristics.

The heat treatment is preferably performed under a non-oxidative atmosphere. Examples of the non-oxidative atmosphere include an inert gas atmosphere such as argon gas and nitrogen gas. The time of the heat treatment may be appropriately selected depending on manufacturing scale, and for example, 30 minutes to 120 minutes, and preferably 45 minutes to 90 minutes.

For the heat treatment, a known apparatus such as an electric tubular furnace and a roller-hearth kiln can be used.

In the step of obtaining the particle-adhered carbonaceous material by adhering the metal oxide particle to the surface of the carbonaceous material, the amount of the metal oxide particle added is preferably 0.09 parts by mass or more, more preferably 0.29 parts by mass or more, and further preferably 0.49 parts by mass or more, based on 100 parts by mass of the carbonaceous material. This is because the metal oxide particle adheres to the surface of the carbonaceous material to be the core for forming the metal oxide layer.

In the step of obtaining the particle-adhered carbonaceous material by adhering the metal oxide particle to the surface of the carbonaceous material, the amount of the metal oxide particle added is preferably 5.99 parts by mass or less, more preferably 3.99 parts by mass or less, and further preferably 2.99 parts by mass or less, based on 100 parts by mass of the carbonaceous material. This is because such an amount increases electric conductivity.

The metal oxide precursor is at least one selected from a metal alkoxide and a metal complex (also including a chelate complex), and preferably one stably dissolves in the solvent. Specific examples thereof include tetraisopropyl orthotitanate, niobium (V) ethoxide, vanadium (V) triethoxide oxide, aluminum triethoxide, and zirconium (IV) ethoxide.

The solvent is selected from water or an organic solvent. The solvent is not particularly limited as long as it can dissolve the metal oxide precursor, and preferably a highly polar organic solvent such as methanol, ethanol, isopropyl alcohol, and butanol. A boiling point of the organic solvent is preferably 200°C or lower.

The precursor solution preferably contains a compound to be a lithium compound. In this case, the metal oxide becomes a lithium-containing metal oxide to have high lithium conductivity. Examples of the lithium compound include methoxylithium and ethoxylithium.

A concentration of the metal oxide precursor in the precursor solution is preferably 1 mass% or more. Setting the concentration of the precursor to 1 mass% or more facilitates formation of the above structure. From the similar viewpoint, the concentration of the precursor is more preferably 5 mass% or more, and further preferably 10 mass% or more. The concentration of the precursor is preferably 50 mass% or less. At a too high concentration, it is difficult to form the layer having an average thickness of 1 $\mu$m or more with a circle-equivalent diameter. From the similar viewpoint, the concentration of the precursor is more preferably 40 mass% or less, and further preferably 35 mass% or less.

A method of forming the flow-state carbonaceous material is not particularly limited. Examples thereof include a method using a rolling fluidized bed or a swirling fluidized bed, and a method using the rolling fluidized bed is preferable. Examples of an apparatus for the rolling fluidized bed include MP series, manufactured by Powrex Corporation.

When the rolling fluidized bed is used, an intake temperature during operation is preferably a temperature of the boiling point of the organic solvent +5 to +20°C. This range facilitates formation of a metal oxide precursor layer having a thickness of 1 $\mu$m or more.

When the rolling fluidized bed is used, the operation is preferably performed under a low humidity atmosphere. Examples of the low humidity atmosphere include a nitrogen gas atmosphere, an argon gas atmosphere, and the atmosphere with a humidity of 25% or lower.

An intake rate of the rolling fluidized bed is not limited, and preferably satisfies a condition under which the carbonaceous material is completely fluidized.

A method of spraying the precursor solution to the carbonaceous material is not particularly limited, and examples thereof include a method using a tube pump and a spray nozzle.

The heat treatment of the particle-adhered carbonaceous material to which the metal oxide precursor adheres after spraying can form the metal oxide layer. For the heat-treating step, a known apparatus such as an electric tubular furnace and a roller-hearth kiln can be used. A condition of the heat treatment is not particularly limited, and a temperature of the heat treatment is preferably 200°C or higher and 500°C or lower. A heating rate is preferably 10°C/h or higher and 200°C/h or lower. A holding time at the maximum temperature is preferably 1 h or longer and 5 h or shorter. A cooling rate is preferably 10°C/h or higher and 300°C/h or lower. When the metal oxide layer contains a sulfide solid electrolyte, the heat treatment is preferably performed under a nitrogen gas atmosphere or an argon gas atmosphere.

When the metal oxide layer is formed by, for example, the sol-gel reaction, the composite material can be used as the negative electrode active material of the lithium-ion secondary battery without the heat treatment.

The metal oxide layer containing, for example, the particulate conductive auxiliary, the fibrous conductive auxiliary, or the solid electrolyte can be manufactured by adding these components into the precursor solution, and in the next step, spraying the mixture to the carbonaceous material. The amount of these components blended is preferably 0.1 parts by mass or more and 5.0 parts by mass or less based on 100 parts by mass of the used carbonaceous material.

To improve the dispersibility of these components in the precursor solution, a dispersant such as a surfactant may be blended into the precursor solution.

The metal oxide layer containing, for example, the particulate conductive auxiliary, the fibrous conductive auxiliary, or the solid electrolyte can also be manufactured by adhering the above components to the surface of the composite material after spraying. Examples of the adhering method include a method using, for example, a stirring-mixing granulator and spray drying. Examples of the stirring-mixing granulator include VG series, manufactured by Powrex Corporation. The amount adhered is preferably 0.1 parts by mass or more and 5.0 parts by mass or less based on 100 parts by mass of the carbonaceous material in the composite material.

In addition, the method of addition into the precursor solution and the method of adhesion can be used in combination. When these methods are used in combination, a total amount of, for example, the particulate conductive auxiliary, the fibrous conductive auxiliary, the particulate solid electrolyte, and the solid electrolyte layer is preferably 0.1 parts by mass or more and 5.0 parts by mass or less based on 100 parts by mass of the carbonaceous material.

[5] Fourth Aspect

[5-1] Composite Material

A composite material according to a fourth aspect of the present invention is a composite material, comprising: a core composed of a carbonaceous material; and a metal oxide layer and amorphous carbon layer coating a surface of the carbonaceous material. The metal oxide layer has at least a portion having a thickness of more than 10 nm, and in a coated area with the metal oxide layer, an area percentage of a portion having a thickness of 10 nm or less is 30% or more and 70% or less, and an area percentage of the portion having a thickness of more than 10 nm is 30% or more and 70% or less. That is, on the surface of the composite material according to the present invention, the metal oxide layer has a plurality of projections.

In the present invention, the metal oxide layer and the amorphous carbon layer desirably constitute a sea-island structure. The sea-island structure refers to a structure in which a sea portion surrounds an island portion. Any aspect of an island portion constituted with the metal oxide layer and an island portion constituted with the amorphous carbon layer is included in the present invention.

The metal oxide layer having high compatibility with the electrolyte is present on the surface of the carbonaceous material. Thus, when this composite material is used as the negative electrode material, for example, with using the solid electrolyte, the composite material and the solid electrolyte well disperse each other in the negative electrode mixture layer 132. In the metal oxide layer, setting the area percentage of the portion having a thickness of 10 nm or less to 30% or more and 70% or less and setting the area percentage of the portion having a thickness of more than 10 nm to 30% or more and 70% or less can increase compatibility with the electrolyte and can achieve both lithium-ion conductivity and electron conductivity. From the similar viewpoint, the area percentage of the portion having a thickness of 10 nm or less is preferably 35% or more and 65% or less, and more preferably 40% or more and 60% or less. The area percentage of the portion having a thickness of more than 10 nm is preferably 35% or more and 65% or less, and more preferably 40% or more and 60% or less.

The thickness and rate of the metal oxide layer can be measured by mapping of, for example, SEM-EDS or AES using argon-ion etching.

The metal oxide layer is a layer coating the surface of the carbonaceous material. A coating rate with the metal oxide layer is preferably 30% or more, more preferably 40% or more, and further preferably 50% or more. The coating rate of 30% or more can increase ion conductivity of the composite material. The coating rate is preferably 90% or less, more preferably 80% or less, and further preferably 70% or less. The coating rate of 90% or less can increase electric conductivity of the composite material.

The presence of the metal oxide layer on the surface can be confirmed by, for example, EDS, AES, and Raman spectroscopic analysis.

The coating rate can be measured with, for example, a binarized image of a SEM image or mapping by EDS. Specifically, the coating rate can be measured by a method described in Example.

The amorphous carbon layer is a layer coating the surface of the carbonaceous material. A coating rate with the amorphous carbon layer is preferably 10% or more, more preferably 20% or more, and further preferably 30% or more. The coating rate of 10% or more can increase electric conductivity of the composite material. The coating rate is preferably 70% or less, more preferably 60% or less, and further preferably 50% or less. The coating rate of 70% or less allows the metal oxide layer to sufficiently coat the surface of the composite material, and can improve dispersibility with the solid electrolyte in the negative electrode mixture layer using the solid electrolyte.

The coating rate can be regulated with manufacturing conditions such as, for example, the amount of a raw material of the amorphous carbon added to the carbonaceous material and adding rate thereof, and an atmosphere temperature.

The coating rate can be measured with, for example, a binarized image of a SEM image or a mapping image by Raman spectroscopy. Specifically, the coating rate can be measured by a method described in Example.

The thickness, rate, and coating rate of the metal oxide layer can be regulated with, for example, a method in which a metal oxide particle to be a core adheres to the carbonaceous material and then the metal oxide layer is formed; and with manufacturing conditions such as the amount of a metal oxide precursor added to the carbonaceous material and adding rate thereof, and an atmosphere temperature.

In the fourth aspect of the present invention, a total coating rate with the metal oxide layer and amorphous carbon layer in the composite material is preferably 40% or more. The total coating rate of 40% or more can yield an electrode having high dispersibility with the solid electrolyte and high electric conductivity. From the similar viewpoint, the total coating rate is more preferably 60% or more, and further preferably 80% or more.

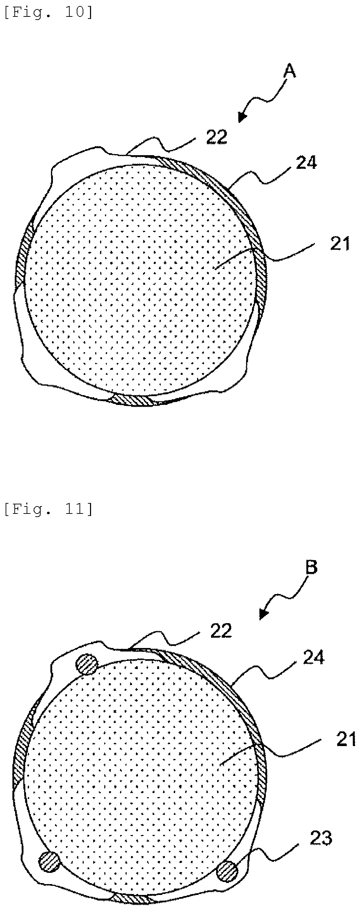

FIG. 10 is a schematic cross-sectional view illustrating a constitution of a composite material A included in the composite material according to the fourth aspect of the present invention. The composite material A includes: a carbonaceous material 21; and a metal oxide layer 22 and amorphous carbon layer 24 coating a surface of the carbonaceous material 21.

In the composite material according to another fourth aspect of the present invention, a metal oxide particle preferably adheres to a surface of the metal oxide layer.

In this structure, the metal oxide particle 23 is present on the surface of the composite material increases a surface roughness, described later, and the metal oxide particle 23 having high compatibility with the solid electrolyte allows, for example, the composite material and the solid electrolyte to well disperse each other in the negative electrode mixture layer 132 in which the composite material and the solid electrolyte mix.

The metal oxide particle may adhere to the surface of the amorphous carbon layer.

This structure can be confirmed with a scanning electron microscope (SEM).

An average thickness of the amorphous carbon layer of the composite material in the fourth aspect of the present invention is preferably 5 nm or more. Setting the average thickness to 5 nm or more can achieve chemical stability and mechanical strength. From the similar viewpoint, the average thickness is more preferably 15 nm or more, and further preferably 20 nm or more.

The average thickness of the amorphous carbon layer of the composite material in the fourth aspect of the present invention is preferably 100 nm or less. The average thickness of 100 nm or less increases a first coulombic efficiency, and can increase a density of the electrode to yield a battery with a high energy density. From the similar viewpoint, the average thickness is more preferably 50 nm or less, and further preferably 30 nm or less.

The average thickness of the amorphous carbon layer can be measured by a method described in Example.

A content of the metal oxide layer in the composite material in the fourth aspect of the present invention is preferably 0.01 parts by mass or more based on 100 parts by mass of the composite material. Setting the content of the metal oxide layer to 0.01 parts by mass or more can improve compatibility between the composite material and the electrolyte to increase ion conductivity therebetween. From the similar viewpoint, the content of the metal oxide layer is more preferably 0.02 parts by mass or more, and further preferably 0.03 parts by mass or more.

The content of the metal oxide layer in the composite material in the fourth aspect of the present invention is preferably 5.0 parts by mass or less based on 100 parts by mass of the composite material. Setting the content of the metal oxide layer to 5.0 parts by mass or less can thin the metal oxide layer in the composite material to increase electric conductivity of the composite material. From the similar viewpoint, the content of the metal oxide layer is more preferably 3.0 parts by mass or less, and further preferably 1.0 part by mass or less.

A content of the amorphous carbon layer in the composite material in the fourth aspect of the present invention is preferably 0.05 parts by mass or more based on 100 parts by mass of the composite material. Setting the content of the amorphous carbon layer to 0.05 parts by mass or more can improve compatibility between the composite material and the electrolyte to increase ion conductivity therebetween. From the similar viewpoint, the content of the amorphous carbon layer is more preferably 0.1 parts by mass or more, and further preferably 0.3 parts by mass or more.

The content of the amorphous carbon layer in the composite material in the fourth aspect of the present invention is preferably 5.0 parts by mass or less based on 100 parts by mass of the composite material. Setting the content of the amorphous carbon layer to 5.0 parts by mass or less can expose the metal oxide layer or the carbonaceous material on the surface of the composite material to increase electric conductivity between the composite materials or between the composite material and the solid electrolyte. From the similar viewpoint, the content of the amorphous carbon layer is more preferably 3.0 parts by mass or less, and further preferably 1.0 part by mass or less.

A BET specific surface area of the composite material in the fourth aspect of the present invention is preferably 0.05 $m^2$/g or more. The BET specific surface area of 0.05 $m^2$/g or more facilitates insertion and desorption of lithium ions to increase a rate capacity maintenance rate. From the similar viewpoint, the BET specific surface area is more preferably 0.8 $m^2$/g or more, and further preferably 1.0 $m^2$/g or more.

The BET specific surface area of the composite material in the fourth aspect of the present invention is preferably 12.0 $m^2$/g or less. The BET specific surface area of 12.0 $m^2$/g or less inhibits a side reaction with the solid electrolyte to increase a first coulombic efficiency. From the similar viewpoint, the BET specific surface area is more preferably 5.0 $m^2$/g or less, and further preferably 3.0 $m^2$/g or less.

The BET specific surface area can be measured by a method described in Example.

In the composite material in the fourth aspect of the present invention, d002, which is an average plane spacing of (002) planes with an X-ray diffraction measurement thereof, is preferably 0.3354 nm or longer. The 0.3354 nm is a lower limit of d002 of a graphite crystal. The d002 is more preferably 0.3356 nm or longer, and further preferably 0.3370 nm or longer. The d002 of 0.3356 nm or longer indicates a graphite crystalline structure that is not overdeveloped, and provides excellent cycle characteristics. A material not indicating a clear peak of the (002) planes, such as amorphous carbon, also provides excellent cycle characteristics.

The d002 can be measured by using a powder X-ray diffraction (XRD) method.

When the composite material in the fourth aspect of the present invention is particulate, D50 thereof, which is a 50% particle diameter in a cumulative particle size distribution on a volumetric basis, is preferably 1.0 $\mu$m or larger, more preferably 4.0 $\mu$m or larger, and further preferably 10.0 $\mu$m or larger. Setting the D50 to 1.0 $\mu$m or larger improves handleability of the composite material, and in addition, when the composite material is mixed with the solid electrolyte to be used as the negative electrode material of the lithium-ion secondary battery, the dispersibility of the composite material in the solid electrolyte is improved to provide good cycle characteristics.

When the composite material in the fourth aspect of the present invention is particulate, the D50 thereof is preferably 30.0 $\mu$m or smaller, more preferably 20.0 $\mu$m or smaller, and further preferably 15.0 $\mu$m or smaller. Setting the D50 to 30.0 $\mu$m or smaller can maintain the composite material with a large surface area, and when the composite material is used as the negative electrode material of the lithium-ion secondary battery, input and output characteristics in the negative electrode are improved.

The D50 herein can be measured by using a laser diffraction-type particle size distribution measurement apparatus. Specifically, the D50 can be measured by a method described in Example.

When the composite material in the fourth aspect of the present invention is particulate, a surface roughness thereof is preferably 1.0 or more. The surface roughness of 1.0 or more tends to reduce a resistance to improve rate characteristics. From the similar viewpoint, the surface roughness is more preferably 1.2 or more, and further preferably 1.5 or more. The surface roughness is preferably 10.0 or less. The surface roughness of 10.0 or less inhibits a side reaction with the solid electrolyte to provide excellent cycle characteristics. From the similar viewpoint, the surface roughness is more preferably 5.0 or less, and further preferably 3.0 or less.

The surface roughness is determined with a ratio of the BET surface area to a sphere-equivalent area calculated with the particle size distribution (the BET surface area/the sphere-equivalent area calculated with the particle size distribution). Specifically, the surface roughness can be determined by a method described in Example.

The composite material in the fourth aspect of the present invention can contain a metal, a metal oxide, or an alloy other than the metal oxide layer. The metal, the metal oxide, or the alloy is not limited as long as it occludes and releases lithium. Examples thereof include silicon, tin, zinc, an oxide thereof, and an alloy thereof, and the composite material preferably contains silicon. Containing silicon can increase a discharge capacity. Silicon is further preferably contained in the carbon material. Silicon coated with the metal oxide layer inhibits a side reaction due to a contact between the silicon and the electrolyte or electrolyte liquid to improve cycle characteristics.

When the composite material contains silicon, silicon atoms are preferably contained at 15 mass% or more, more preferably 20 mass% or more, and further more preferably 25 mass% or more, in 100 mass% of the composite material. The silicon at 15 mass% or more can increase the discharge capacity.

When the composite material contains silicon, silicon atoms are preferably contained at 70 mass% or less, more preferably 65 mass% or less, and further more preferably 60 mass% or less. The silicon at 70 mass% or less can reduce the amount expanded per particle during charge.

[5-2] Carbonaceous Material 21

A shape of the carbonaceous material contained in the composite material in the fourth aspect of the present invention is not particularly limited, and amorphous carbon materials such as soft carbon and hard carbon, carbon fibers, vapor grown carbon fibers, multiwalled carbon nanotubes, single-walled carbon nanotubes, nano wires, and graphite materials can be used. Examples of the shape include particulate or fibric shape, and a particulate shape is preferable. The graphite materials and the amorphous carbon materials are more preferable because these materials can increase electron conductivity to provide excellent cycle characteristics. When the carbonaceous material is the graphite material, a graphite particle with an inner solid structure is more preferable. With the inner solid structure, an interparticle removing hardly occurs even with repeated expansion and contraction during charge and discharge, and cycle characteristics at high temperature and storage characteristics at high temperature become excellent.

As the carbonaceous material, a composite material composed of a metal, a metal oxide, or an alloy can also be used. The metal, the metal oxide, or the alloy is not limited as long as it occludes and releases lithium, and examples thereof include silicon, tin, zinc, an oxide thereof, and an alloy thereof.

The carbonaceous material preferably contains silicon, and is further preferably a silicon-containing amorphous carbon material. A structure of the silicon-containing amorphous carbon material is not limited, and a composite in which pores in a porous amorphous carbon material are filled with silicon is preferable. The porous amorphous carbon material can be generated by known manufacturing methods, and for example, by a manufacturing method similar to that in active carbon or an appropriate heat treatment to a polymer. A containing silicon method is not limited, and the composite can be obtained by, for example, chemical vapor deposition (CVD) of exposure of a porous carbon material (for example, a porous amorphous carbon material) to silane gas at a high temperature in the presence of a silicon-containing gas, preferably silane, to generate silicon in the pores in the porous carbon material.

[5-3] Metal Oxide Layer 22

The metal oxide layer included in the composite material in the fourth aspect of the present invention is not particularly limited, and preferably contains at least one oxide of a metal selected from Groups 1 to 12 elements of the periodic table, aluminum, gallium, indium, thallium, tin, and lead, more preferably contains at least one oxide of a metal of Groups 3 to 12 of the periodic table, and further preferably contains at least one selected from the group consisting of lithium titanate, lithium niobate, and titanium (IV) oxide. Lithium titanate is most preferable because of its excellent lithium-ion conductivity and high compatibility with the solid electrolyte.

[5-4] Amorphous Carbon Layer 24

The amorphous carbon layer included in the composite material in the fourth aspect of the present invention is obtained by heat-treating a raw material of the amorphous carbon, such as petroleum pitch, coal pitch, and a polymer. Examples of the polymer include at least one compound selected from the group consisting of a phenol resin, a polyvinyl alcohol resin, a furan resin, a cellulose resin, a polystyrene resin, a polyimide resin, and an epoxy resin. Among these raw materials, coal pitch and petroleum pitch are preferable from the viewpoint of a high carbon residue ratio and good battery characteristics when used as a raw material of the coating layer. Petroleum pitch is more preferable from the viewpoint of obtaining a particularly high initial efficiency. Among them, in particular, pitch having a softening point of 100°C or higher and 300°C or lower is more preferable because of good operability.

[5-5] Additional Component

At least one of the metal oxide layer and amorphous carbon layer included in the composite material in the fourth aspect of the present invention can further contain at least one selected from the group consisting of a particulate conductive auxiliary, a fibrous conductive auxiliary, and a solid electrolyte. The solid electrolyte may be particulate, and may be present as a layer.

A 50% particle diameter in a cumulative particle size distribution on a volumetric basis, D50, of the particulate solid electrolyte is desirably 10 nm or larger and 1 $\mu$m or smaller.

A coated area with the layered solid electrolyte layer desirably has an arithmetic average of a circle-equivalent diameter of 1 $\mu$m or larger and 10 $\mu$m or smaller.

Examples of the particulate conductive auxiliary include carbon black, acetylene black, and Ketjenblack. Examples of the fibrous conductive auxiliary include a vapor grown carbon fiber (such as VGCF(R)) and a carbon nanotube. Examples of the solid electrolyte include a particulate sulfide solid electrolyte, a particulate oxide solid electrolyte, a sulfide solid electrolyte layer, and an oxide solid electrolyte layer.

These components are preferably contained at 0.1 parts by mass or more and 5.0 parts by mass or less based on 100 parts by mass of the composite material.

The particulate conductive auxiliary, the fibrous conductive auxiliary, and the solid electrolyte may have a structure of adhering to the surface of the metal oxide layer and/or amorphous carbon layer, and may have a structure of embedding a part or all thereof in the layer.

[5-6] Metal Oxide Particle 23

FIG. 11 is a schematic cross-sectional view illustrating a constitution of a composite material B included in the composite material according to the fourth aspect of the present invention. The composite material B includes: a carbonaceous material 21; a metal oxide layer 22 and amorphous carbon layer 24 coating a surface of the carbonaceous material 21; and a metal oxide particle 24 inside the metal oxide layer 22.

A part of the metal oxide particle 23 may be exposed from the metal oxide layer 22. This metal oxide particle constitutes a portion having a thickness of more than 10 nm of the metal oxide layer 22.

The metal oxide layer included in the composite material in the fourth aspect of the present invention preferably contains the metal oxide particle inside thereof. The metal oxide particle is not particularly limited, and may be the same as or different from the component of the metal oxide layer. The metal oxide particle preferably contains at least one oxide of a metal selected from Groups 1 to 12 elements of the periodic table, aluminum, gallium, indium, thallium, tin, and lead, more preferably contains at least one oxide of a metal of Groups 3 to 12 of the periodic table, and further preferably contains at least one selected from the group consisting of lithium titanate, lithium niobate, and titanium (IV) oxide. Titanium (IV) oxide is most preferable because of its high compatibility with a sulfide solid electrolyte. Containing the inside metal oxide particle can be confirmed by observing a cross-sectional SEM or observing EDS or AES using argon-ion etching.

When the metal oxide particle contains titanium oxide, examples of a crystalline from of the titanium oxide contained in the metal oxide particle include anatase-type, rutile-type, and brookite-type, and are not particularly limited. A content rate of any of crystalline phases in a total crystalline phase in the metal oxide particle is preferably 70 mass% or more, more preferably 80 mass% or more, and further preferably 90 mass% or more. For example, when the titanium oxide contained in the metal oxide particle is mainly composed of an anatase crystalline phase, a content rate of the anatase crystalline phase in the total crystalline phase in this titanium oxide is preferably 70 mass% or more, more preferably 80 mass% or more, and further preferably 90 mass% or more. The same applies to a case where the titanium oxide contained in the metal oxide particle is mainly composed of a rutile crystalline phase and a case where it is mainly composed of a brookite crystalline phase.

An average diameter of primary particles of the metal oxide particle 23 is preferably 100 nm or smaller, more preferably 55 nm or smaller, further preferably 10 nm or smaller, and particularly preferably 7 nm or smaller. This is because such fine metal oxide particles can dispersedly adhere to the surface of the carbonaceous material to be the core of formation of the metal oxide layer, resulting in formation of the thin metal oxide layer with a high coating rate. The average diameter of the primary particles of the metal oxide particle is preferably 1 nm or larger, and more preferably 2 nm or larger. This is because of inhibition of aggregating the metal oxide particles. The average diameter of the primary particles of the metal oxide particle can be obtained by observation with a scanning electron microscope (SEM) described in Example.

[5-7] Underlayer (Intermediate Layer) 25

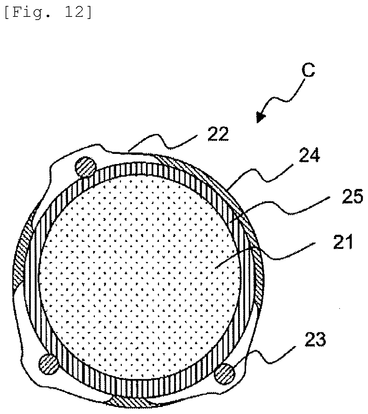

FIG. 12 is a schematic cross-sectional view illustrating a constitution of a composite material C included in the composite material according to the fourth aspect of the present invention. The composite material C includes: a carbonaceous material 21; a metal oxide layer 22 and amorphous carbon layer 24 coating a surface of the carbonaceous material 21; a metal oxide particle 23 contained inside the metal oxide layer 22; and an underlayer (intermediate layer) 25 for the metal oxide layer, disposed at least partially between the carbonaceous material 21 and the metal oxide layer 22.

The composite material in the fourth aspect of the present invention preferably includes the underlayer for the metal oxide layer, disposed at least partially between the surface of the carbonaceous material and the metal oxide layer. The underlayer is interposed between the carbonaceous material and the metal oxide layer, and can increase adhesiveness among both the materials and the metal oxide particle. A use of the composite material having this structure for the battery can increase a first coulombic efficiency, rate characteristics, and cycle characteristics. The underlayer is not limited as long as it is interposed between the carbonaceous material and the metal oxide layer to increase the adhesiveness both the materials.

The underlayer may be present between the carbonaceous material and the amorphous carbon layer. When the underlayer is an amorphous carbon layer, the amorphous carbon layer and the amorphous carbon layer as the underlayer may be same or may be different. The underlayer may be provided not only in an aspect in FIG. 12, but in an aspect including no metal oxide particle as illustrated in FIG. 10.

The underlayer is preferably an amorphous carbon layer, a graphene layer, or a polymer layer.

Since having a polar functional group on a surface thereof, the amorphous carbon layer has good adhesiveness to the metal oxide layer and easily forms a thin uniform metal oxide layer.

The graphene layer is a layer including a monolayer graphene composed of only one layer or a multilayer graphene layer in which a plurality of graphenes are stacked (2 to 100 layers). The graphene layer is more preferably a graphene layer formed along the surface of the graphite particle. A graphene oxide, which has a polar functional group on a surface thereof, is further preferable because the graphene oxide has good adhesiveness to the metal oxide layer and easily forms a thin uniform metal oxide layer. In the graphene oxide, various oxygen-containing functional groups, such as an epoxy group, a carboxy group, a carbonyl group, and a hydroxy group, are bonded onto a graphene, a sheet composed of only carbon atoms having n-bonds.

Among the polymer layers, a polymer layer having a functional group such as an epoxy group, a carboxy group, a carbonyl group, and a hydroxy group is more preferable because such a polymer layer has good adhesiveness to the metal oxide layer and easily forms a thin uniform metal oxide layer. Preferably used as the polymer is a polymer having a weight-average molecular weight of 10,000 to 5,000,000 and having a main chain composed of a hydrocarbon structure, but not particularly limited.

An average thickness of the underlayer is preferably 100 nm or less. The average thickness of 100 nm or less can reduce a resistance of the electrode layer to increase rate characteristics of the battery. From the similar viewpoint, the average thickness is more preferably 30 nm or less, and further preferably 10 nm or less.

An average thickness of the underlayer is preferably 1 nm or more. Setting the average thickness to 1 nm or more can achieve chemical stability and mechanical strength. From the similar viewpoint, the average thickness is more preferably 3 nm or more, and further preferably 5 nm or more.

[5-8] Manufacturing Method of Composite Material

An embodiment of a manufacturing method of the composite material of the present invention will be exemplified below, but the manufacturing method of the composite material of the present invention is not limited to the below.

A manufacturing method of the composite material according to the fourth aspect of the present invention is a manufacturing method of a composite material comprising: a carbonaceous material; and a metal oxide layer and amorphous carbon layer coating a surface of the carbonaceous material, the method comprising: a step of obtaining a particle-adhered carbonaceous material by adhering a metal oxide particle to the surface of the carbonaceous material; a step of preparing a solution containing: at least one metal oxide precursor selected from a metal alkoxide and a metal complex (also including a chelate complex); a raw material of an amorphous carbon; and a solvent; a step of spraying the solution to a flow-state particle-adhered graphite material; and a step of forming the metal oxide layer by heat-treating a particle-adhered carbonaceous material to which the metal oxide precursor and the raw material of the amorphous carbon adhere.

In the manufacturing method of the composite material according to the fourth aspect of the present invention, the step of obtaining the particle-adhered carbonaceous material by adhering the metal oxide particle to the surface of the carbonaceous material is preferably a step of mixing the carbonaceous material and the metal oxide particle with applying a mechanical action at least any of an impact force, a shearing force, a compressive force, and a frictional force.

A mixing method with applying a mechanical action at least any of an impact force, a shearing force, a compressive force, and a frictional force is not limited, and a composing machine such as, for example, NOBILTA(R) and MECHANO FUSION(R) can be used.

In the manufacturing method of the composite material according to the fourth aspect of the present invention, the step of obtaining the particle-adhered carbonaceous material by adhering the metal oxide particle to the surface of the carbonaceous material is preferably a step of obtaining a particle-adhered graphite material by mixing the carbonaceous material, either a graphene or a polymer, and the metal oxide particle. This is because forming a graphene layer or a polymer layer on the surface of the carbonaceous particle to adhere the metal oxide particle with the layer can yield a particle-adhered carbonaceous material having high adhesiveness.

The mixing can be dry-mixing or can be wet-mixing.

When the wet-mixing is performed, for example, the carbonaceous material, either the graphene or the polymer, and the metal oxide particle are dissolved or dispersed in a solvent, and then the solvent is dry-removed.

When the dry-mixing is performed, for example, the carbonaceous material, either the graphene or the polymer, and the metal oxide particle are mixed with a force so as not to crash the carbonaceous material. For the mixing, a mixer such as a rotation-revolution mixer, a planetary mixer, and a Henschel mixer, and in addition, a composing machine such as NOBILTA(R) and MECHANO FUSION(R) can also be used.

Examples of the graphene include a graphene or a graphene oxide. Examples of the polymer include a phenol resin, an acrylic resin, a polyvinyl alcohol resin, a furan resin, a cellulose resin, a polystyrene resin, an epoxy resin, and polyvinyl alcohol.

In the manufacturing method of the composite material according to the fourth aspect of the present invention, the step of obtaining the particle-adhered graphite material by adhering the metal oxide particle to the surface of the carbonaceous material is preferably a mixing step of mixing: the carbonaceous material; at least any of pitch, tar, a polymer, and an organic compound; and the metal oxide particle; and a step of obtaining the particle-adhered carbonaceous material by heat-treating a mixture obtained in the mixing step.

Obtained is the mixture in which at least any of pitch, tar, a polymer, and an organic compound (raw material of the underlayer) adheres to the surface of the carbonaceous particle and the metal oxide particle adheres to the surface with the raw material, and heat-treating the mixture can yield the particle-adhered carbonaceous material in which the at least any of pitch, tar, a polymer, and an organic compound (raw material of the underlayer) is converted into the amorphous carbon layer (underlayer). Since the amorphous carbon layer is fixed on the surface of the carbonaceous material, the particle-adhered carbonaceous material having high adhesiveness can be obtained.

Examples of the pitch include petroleum pitch and coal pitch, and examples of the tar include petroleum tar and coal tar. Examples of the polymer include a phenol resin, an acrylic resin, a polyvinyl alcohol resin, a furan resin, a cellulose resin, a polystyrene resin, an epoxy resin, and polyvinyl alcohol. Examples of the organic compound include saccharides such as sucrose, lactose, glucose, maltose, and fructose. Among them, coal pitch and petroleum pitch are preferable from the viewpoint of a high carbon residue ratio and good battery characteristics when used as a raw material of the coating layer. In particular, petroleum pitch is more preferable because a high initial efficiency can be obtained. Among them, particularly, pitch having a softening point of 100°C or higher and 300°C or lower is further preferable because of good operability.

The mixing step can be dry-mixing or can be wet-mixing.

When the wet-mixing is performed, for example, the raw material of the underlayer is dissolved or dispersed in a solvent, the carbonaceous material and the metal oxide particle are further added, and then the solvent is dry-removed.

When the dry-mixing is performed, the carbonaceous material and the raw material of the underlayer are mixed with a force so as not to crash the carbonaceous material. For the mixing, a mixer such as a rotation-revolution mixer, a planetary mixer, and a Henschel mixer, and in addition, a composing machine such as NOBILTA(R) and MECHANO FUSION(R) can also be used.

A temperature of the heat treatment is preferably 500°C or higher and 1500°C or lower, more preferably 550°C or higher and 900°C or lower, and further preferably 600°C or higher and 800°C or lower. This heat treatment carbonizes the raw material to form the underlayer. Carbonizing the raw material at a temperature within this range allows sufficient adhesion to the carbonaceous material being the core, resulting in a good first coulombic efficiency and good rate characteristics.

The heat treatment is preferably performed under a non-oxidative atmosphere. Examples of the non-oxidative atmosphere include an inert gas atmosphere such as argon gas and nitrogen gas. The time of the heat treatment may be appropriately selected depending on manufacturing scale, and for example, 30 minutes to 120 minutes, and preferably 45 minutes to 90 minutes.

For the heat treatment, a known apparatus such as an electric tubular furnace and a roller-hearth kiln can be used.

In the step of obtaining the particle-adhered carbonaceous material by adhering the metal oxide particle to the surface of the carbonaceous material, the amount of the metal oxide particle added is preferably 0.09 parts by mass or more, more preferably 0.28 parts by mass or more, and further preferably 0.47 parts by mass or more, based on 100 parts by mass of the carbonaceous material. This is because the metal oxide particle adheres to the surface of the carbonaceous material to be the core for forming the metal oxide layer.

In the step of obtaining the particle-adhered carbonaceous material by adhering the metal oxide particle to the surface of the carbonaceous material, the amount of the metal oxide particle added is preferably 9.99 parts by mass or less, more preferably 4.99 parts by mass or less, and further preferably 2.99 parts by mass or less, based on 100 parts by mass of the carbonaceous material. This is because such an amount increases electric conductivity.

The metal oxide precursor is at least one selected from a metal alkoxide and a metal complex (also including a chelate complex), and preferably one stably dissolves in the solvent. Specific examples thereof include tetraisopropyl orthotitanate, niobium (V) ethoxide, vanadium (V) triethoxide oxide, aluminum triethoxide, and zirconium (IV) ethoxide.

Examples of the raw material of the amorphous carbon include petroleum pitch, coal pitch, and a polymer, as above.

The solvent is selected from water or an organic solvent. The solvent is not particularly limited as long as it can dissolve or disperse the metal oxide precursor and the raw material of the amorphous carbon, and preferably a highly polar organic solvent such as methanol, ethanol, isopropyl alcohol, and butanol. A boiling point of the organic solvent is preferably 200°C or lower.

The solution preferably contains a compound to be a Li compound. In this case, the metal oxide becomes a lithium-containing metal oxide to have high lithium conductivity. Examples of the Li compound include methoxylithium and ethoxylithium.

A concentration of the metal oxide precursor in the solution is preferably 1 mass% or more. Setting the concentration of the precursor to 1 mass% or more facilitates formation of the sea-island structure. From the similar viewpoint, the concentration of the precursor is more preferably 5 mass% or more, and further preferably 10 mass% or more. The concentration of the precursor is preferably 50 mass% or less. At a too high concentration, it is difficult to form the layer having an average thickness of 1 $\mu$m or more with a circle-equivalent diameter. From the similar viewpoint, the concentration of the precursor is more preferably 40 mass% or less, and further preferably 35 mass% or less.

When the metal oxide particle adheres to the surface of the composite material, the metal oxide is formed as a particle from the metal oxide precursor by, for example, increasing the concentration of the metal oxide precursor or by reducing the spraying rate to adhere to the surface as the metal oxide particle.

A concentration of the raw material of the amorphous carbon in the solution is preferably 1 mass% or more. Setting the concentration of the raw material to 1 mass% or more facilitates formation of the sea-island structure. From the similar viewpoint, the concentration of the raw material is more preferably 5 mass% or more, and further preferably 10 mass% or more. The concentration of the raw material is preferably 50 mass% or less. At a too high concentration, it is difficult to form the metal oxide layer. From the similar viewpoint, the concentration of the raw material is more preferably 40 mass% or less, and further preferably 35 mass% or less.

The raw material of the amorphous carbon having a softening point of lower than 200 °C often forms a sea-island structure in which the amorphous carbon layer is scattered in islands on the surface of the carbonaceous material. The raw material of the amorphous carbon having a softening point of 200 °C or higher often forms a sea-island structure in which the amorphous carbon layer is present in a sea phase on the surface of the carbonaceous material. When the amorphous carbon layer is existed in islands, since such an amorphous carbon layer can increase dispersibility with the solid electrolyte, increase an electric conductivity, and increase a high electrode density, a battery with a high energy density can be obtained. When the amorphous carbon layer is scattered in the sea phase, since the amorphous carbon layer has higher compatibility with the solid electrolyte than graphite, an electrode having particularly high dispersibility with the solid electrolyte and high electric conductivity can be obtained.

A method of forming the flow-state carbonaceous material is not particularly limited. Examples thereof include a method using a rolling fluidized bed or a swirling fluidized bed, and a method using the rolling fluidized bed is preferable. Examples of an apparatus for the rolling fluidized bed include MP series, manufactured by Powrex Corporation.

When the rolling fluidized bed is used, an intake temperature during operation is preferably a temperature of the boiling point of the organic solvent +5 to +20°C. This range facilitates formation of a metal oxide precursor layer having a thickness of 1 μm or more.

When the rolling fluidized bed is used, the operation is preferably performed under a low humidity atmosphere. Examples of the low humidity atmosphere include a nitrogen gas atmosphere, an argon gas atmosphere, and the atmosphere with a humidity of 25% or lower.

An intake rate of the rolling fluidized bed is not limited, and preferably satisfies a condition under which the carbonaceous material is completely fluidized.

A method of spraying the solution to the carbonaceous material is not particularly limited, and examples thereof include a method using a tube pump and a spray nozzle.

The heat treatment of the particle-adhered carbonaceous material to which the metal oxide precursor and the raw material of the amorphous carbon adhere after spraying can form the metal oxide layer and the amorphous carbon layer. For the heat-treating step, a known apparatus such as an electric tubular furnace and a roller-hearth kiln can be used. A condition of the heat treatment is not particularly limited, and a temperature of the heat treatment is preferably 200°C or higher and 500°C or lower. A heating rate is preferably 10°C/h or higher and 200°C/h or lower. A holding time at the maximum temperature is preferably 1 h or longer and 5 h or shorter. A cooling rate is preferably 10°C/h or higher and 300°C/h or lower. When the metal oxide layer contains a sulfide solid electrolyte, the heat treatment is preferably performed under a nitrogen gas atmosphere or an argon gas atmosphere.

The metal oxide layer containing, for example, the particulate conductive auxiliary, the fibrous conductive auxiliary, or the solid electrolyte can be manufactured by adding these components into the solution, and in the next step, spraying the mixture to the carbonaceous material. The amount of these components blended is preferably 0.1 parts by mass or more and 5.0 parts by mass or less based on 100 parts by mass of the used carbonaceous material.

To improve the dispersibility of these components in the solution, a dispersant such as a surfactant may be blended into the solution.

The metal oxide layer containing, for example, the particulate conductive auxiliary, the fibrous conductive auxiliary, or the solid electrolyte can also be manufactured by adhering the above components to the surface of the composite material after spraying. Examples of the adhering method include a method using, for example, a stirring-mixing granulator and spray drying. Examples of the stirring-mixing granulator include VG series, manufactured by Powrex Corporation. The amount adhered is preferably 0.1 parts by mass or more and 5.0 parts by mass or less based on 100 parts by mass of the carbonaceous material in the composite material.

In addition, the method of addition into the solution and the method of adhesion can be used in combination. When these methods are used in combination, a total amount of, for example, the particulate conductive auxiliary, the fibrous conductive auxiliary, the particulate solid electrolyte, and the solid electrolyte layer is preferably 0.1 parts by mass or more and 5.0 parts by mass or less based on 100 parts by mass of the carbonaceous material.

Examples

Examples and Comparative Examples of the present invention will be described below, but they do not limit the technical scope of the present invention. A battery was produced and evaluated in the same manner regarding common items in each aspect.

[First Aspect]

An evaluating method of composite materials, producing method of the battery, measuring method of battery characteristics, and raw materials used in each example in Examples and Comparative Examples of the first aspect are as follows.

[1] Evaluation of Composite Material

[1-1] BET Specific Surface Area

Using NOVA 2200e, manufactured by Quantachrome Instruments, as a BET specific surface area measuring apparatus, 3 g of a sample was added in a sample cell (9 mm×135 mm), dried at 300°C under a vacuum condition for 1 hour, and then a BET specific surface area was measured. N$_2$ was used as a gas for measuring the BET specific surface area.

[1-2] 50% Particle Diameter (D50)

Using Mastersizer(R) 2000, manufactured by Malvern Panalytical, Spectris Co., Ltd., as a laser diffraction-type particle size distribution measurement apparatus, 5 mg of a sample was added in a container, 10 g of a water containing a surfactant at 0.04 mass% was added to be subjected to ultrasonic treatment for 5 minutes. Then a measurement was performed to determine a 50% particle diameter (D50) in a cumulative particle size distribution on a volumetric basis.

[1-3] Surface Roughness

Based on data of a particle size distribution obtained by using a laser diffraction-type particle size distribution measurement apparatus (for example, Mastersizer, manufactured by Malvern Panalytical, Spectris Co., Ltd.), a sphere-equivalent area ($S_D$) calculated with the particle size distribution was calculated with the following formula.

[Math. 1]

$$S_D = \frac{6}{\rho D} = \frac{6 \sum \frac{V_i}{d_i}}{\rho \sum V_i}$$

In the formula, Vi represents a relative volume in a particle diameter classification i (average diameter $d_i$), $\rho$ represents a particle density, and D represents a particle diameter.
A ratio of the BET surface area to the obtained sphere-equivalent area $S_D$ (BET surface area/sphere-equivalent area $S_D$) was specified as the surface roughness (see Journal of the Society of Powder Technology, Japan, Volume 30, Issue 7, 1993, pp. 496-501, Toshio OSHIMA, et al.).

[1-4] Plane Spacing d002

A mixture in which the composite material and a standard silicon (manufactured by NIST) were mixed at a mass ratio of 9:1 was filled in a glass sample plate (sample plate window: 18×20 mm, depth: 0.2 mm), and a measurement was performed under the following conditions.
XRD Apparatus: SmartLab(R), manufactured by Rigaku Corporation

- X-ray Source: Cu-K$\alpha$ Radiation
- Removing Method of K$\beta$ ray: Ni filter
- X-ray Output: 45 kV, 200 mA
- Measuring Range: 24.0 to 30.0 deg.
- Scanning Speed: 2.0 deg./min.

The Gakushin method was applied to an obtained waveform to determine Lc, the plane spacing d002 (see Iwashita et al., Carbon, vol.42(2004), pp. 701-714).

[1-5] Average Thickness of Metal Oxide Layer

An average thickness of the metal oxide layer 22, t, was determined by the following method.

(1) One composite material A1 was randomly extracted from composite materials observed with a transmission electron microscope (TEM).
(2) In the extracted composite material A1, one portion where the metal oxide layer 22 was formed was randomly selected, and a thickness of the metal oxide layer 22 in the selected portion, t1, was measured. The thickness t1 was determined by: determining x1, which was an intersection of a vertical line to the carbonaceous material 21 surface and the carbonaceous material 21 surface, and x2, which was an intersection of this vertical line and an outer circumference of the metal oxide layer 22; and measuring a distance between the determined intersections x1 and x2.

(3) The steps (1) and (2) were repeated 50 times. That is, measured was thicknesses of the metal oxide layers 22, t1 to t50, measured with 50 composite materials A1 to A50 randomly extracted from the composite materials observed with the transmission electron microscope (TEM). The randomly extracted composite materials A1 to A50 were not duplicated each other.

(4) An arithmetic average of the obtained values t1 to t50 was specified as the average thickness of the metal oxide layer 22, t.

[1-6] Coating Rate with Metal Oxide Layer

The coating rate is calculated with a binarized image obtained with a SEM image. A condition was adjusted so that a white region was determined as the metal oxide layer.

$$\texttt{Coating Rate = Total Area of White Region/Area of}$$

$$\texttt{Entire Particle×100 [\%]}$$

A specific method was as follows. The SEM was adjusted so as to display an entirety of one particle to obtain an image. In this time, the auto contrast was used. The obtained SEM image was opened with Photoshop (available from Adobe Inc.) to select "Image/Mode/Gray Scale". Next, "Image/Color-Tone Adjusting/Averaging (Equalize)" was performed. Furthermore, "Image/Color-Tone Adjusting/Binarizing" was selected, and the threshold was set to 110 to be executed. "Quick Select Tool" was selected, "Auto Adjustment" was checked, "Hardness" was set to 100%, "Interval" was set to 25%, and "Diameter" was freely adjusted. The entire particle was selected, and "Image/Analyze/Record Measurement" was selected to calculate the area. Then, a white region (recognized as one domain) was selected to similarly measure the area. When there were a plurality of regions, all the regions were measured one by one. The total area of all the white regions was calculated. Here, a boundary of the range recognized as one domain was a position on which a width of the white region became 0.1 μm or narrower. The above measurement was performed on random 50 particles obtained with the SEM image, and an average of the results was specified as the coating rate.

Before "Quick Select Tool" was selected, "Image/Analyze/Setting Measurement Scale/Custom" was selected to convert a value of the scale bar of the SEM image into pixel.

Note that the coating rate by binarizing the SEM image may be calculated by using another software, and may be determined by, for example, a composition-analyzed image.

[1-7] Circle-Equivalent Diameter of Metal Oxide Layer

An arithmetic average of each area of the white regions (metal oxide layer) obtained in the preceding section was calculated, and a diameter of a circle having the above area was specified as the circle-equivalent diameter.

[1-8] Content of Coating Layer (ICP Analysis)

The amount of the carbonaceous material contained in the composite material was measured by using carbon/sulfur analyzer EMIA-320V, manufactured by HORIBA, Ltd., and the measured amount was subtracted from the amount of the composite material to determine the content of the metal oxide. When the metal oxide contained a plurality of metals, the content of each metal oxide was determined by quantitative analysis of metal elements with, for example, inductively coupled plasma emission spectroscopy (ICP-AES).

A producing method of a battery using the composite material obtained in Examples and Comparative Examples will be described below. Here, in each constitution in the produced battery, a constitution corresponding to the constitution with the reference symbol in 0288. 1 will be described with the reference symbol of the corresponding constitution.

[2] Production of All-Solid-State Type Lithium-Ion Secondary Battery

[2-1] Preparation of Solid Electrolyte Layer 12

$Li_2S$ (manufactured by NIPPON CHEMICAL INDUSTRIAL CO., LTD.) and $P_2S_5$ (manufactured by Sigma-Aldrich Japan G.K.), which were starting materials, were weighed and mixed at a molar ratio of 25:75 under an argon gas atmosphere. The mixture was mechanically milled for 20 hours (number of rotation: 400 rpm) by using a planetary ball mill (P-5, manufactured by Fritsch Japan Co., Ltd.) and zirconia balls (7 balls with 10 mmφ and 10 balls with 3 mmφ) to obtain a $Li_3PS_4$ amorphous solid electrolyte having a D50 of 0.3 μm.

The obtained amorphous solid electrolyte was press-molded with a uniaxial press molding machine by using a die with an inner diameter of 10 mmφ made of polyethylene and a punch made of SUS to prepare a solid electrolyte layer 12 as a sheet having a thickness of 960 μm.

[2-2] Preparation of Negative Electrode Mixture Layer 132

Mixing 48.5 parts by mass of the composite material, 48.5 parts by mass of the solid electrolyte ($Li_3PS_4$, D50: 8 μm), and 3 parts by mass of VGCF(R)-H (manufactured by Showa Denko K.K.) was performed. This mixture was uniformized by milling treatment at 100 rpm for 1 hour using a planetary ball mill. The uniformized mixture was press-molded with a uniaxial press molding machine at 400 MPa by using a die with an inner diameter of 10 mmφ made of polyethylene and a punch made of SUS to prepare a negative electrode mixture layer 132 as a sheet having a thickness of 65 μm.

[2-3] Preparation of Positive Electrode Mixture Layer 112

Mixing 55 parts by mass of a positive electrode active material $LiCoO_2$ (manufactured by NIPPON CHEMICAL INDUSTRIAL CO., LTD., D50: 10 μm), 40 parts by mass of the solid electrolyte ($Li_3PS_4$, D50: 8 μm), and 5 parts by mass of VGCF(R)-H (manufactured by Showa Denko K.K.) was performed. This mixture was uniformized by milling treatment at 100 rpm for 1 hour using a planetary ball mill. The uniformized mixture was press-molded with a uniaxial press molding machine at 400 MPa by using a die with an inner diameter of 10 mmφ made of polyethylene and a punch made of SUS to prepare a positive electrode mixture layer 112 as a sheet having a thickness of 65 μm.

[2-4] Assembly of All-Solid-State Type Lithium-Ion Secondary Battery 1

The negative electrode mixture layer 132, the solid electrolyte layer 12, and the positive electrode mixture layer 112, which were obtained above, were stacked in this order in a die with an inner diameter of 10 mmφ made of polyethylene, and sandwiched from both sides of the negative electrode mixture layer 132 side and the positive electrode mixture layer 112 side with a punch made of SUS at a pressure of 100 MPa (1000 kgf/cm²) for laminating the negative electrode mixture layer 132, the solid electrolyte layer 12, and the positive electrode mixture layer 112 to obtain a laminate A. The obtained laminate A was once taken from the die, and a negative electrode lead 131a, a copper foil (negative electrode current collector 131), the laminate A in which the negative electrode mixture layer 132 is directed to the lower side, an aluminum foil (positive electrode current collector 111), and a positive electrode lead 111a were stacked in this order in the die from the lower side, and sandwiched from both sides of the negative electrode lead 131a side and the positive electrode lead 111a side with a punch made of SUS at a pressure of 1 MPa (10 kgf/cm²) for laminating the negative electrode lead 131a, the copper foil, the laminate A, the aluminum foil, and the positive electrode lead 111a to obtain an all-solid-state type lithium-ion secondary battery 1.

[3] Evaluation of All-Solid-State Type Lithium-Ion Secondary Battery

All the following battery evaluations are performed in the atmosphere at 25°C.

[3-1] Measurement of First Discharge Capacity and Coulombic Efficiency

The all-solid-state type lithium-ion secondary battery 1 produced as above was charged at a constant current of 1.25 mA (0.05 C) from the rest potential until 4.2 V. Subsequently, the battery was charged at a constant voltage of 4.2 V for 40 hours. A charge capacity (mAh) with the constant-voltage charge was specified as a first charge capacity Qc1.

Next, the battery was discharged at a constant current of 1.25 mA (0.05 C) until the voltage reached 2.75 V. A discharge capacity (mAh) with the constant-current discharge was specified as a first discharge capacity Qd1. A value obtained by dividing the first discharge capacity Qd1 (mAh) by a mass of the composite material in the negative electrode layer was specified as a first discharge capacity density (mAh/g) .

A rate of the first discharge capacity Qd1 to the first charge capacity Qc1 as a percentage, 100×Qd1/Qc1, was specified as the coulombic efficiency (%).

[3-2] Evaluation of 3-C Rate Capacity Maintenance Rate

A battery was charged in the same procedure as above, and then discharged at a constant current at 2.5 mA (0.1 C) until the voltage reached 2.75 V to measure a discharge capacity $Q_{2.5}d$ [mAh]. A battery was charged in the same procedure as above, and then discharged at a constant current at 75 mA (3.0 C) until 2.75 V to measure a discharge capacity $Q_{75}d$ [mAh] . A value $100 \times Q_{75}d/Q_{2.5}d$ was specified as the 3-C rate capacity maintenance rate (%).

[3-3] Evaluation of 100th-Cycle Capacity Maintenance Rate

A battery was charged at a constant current of 5.0 mA (0.2 C) until the voltage reached 4.2 V, and subsequently charged at a constant voltage of 4.2 V until the current value reduced to 1.25 mA (0.05 C). The battery was discharged at a constant current of 25 mA (1.0 C) until the voltage reached 2.75 V.

These charges and discharges were repeated 100 times. A 100th discharge capacity was specified as Qd100, and $100 \times Qd100/Qd1$ was specified as the 100th-cycle capacity maintenance rate (%).

[4] Production of Electrolyte-Liquid Type Lithium-Ion Secondary Battery

[4-1] Production of Paste for Electrode

Stirring and mixing 96.5 g of the composite particle obtained in each of Examples and Comparative Examples, 0.5 g of carbon black (C65, manufactured by TIMCAL Ltd.) as the conductive auxiliary, 1.5 g of carboxymethyl cellulose (CMC) as a thickener, 80 to 120 g of water appropriately added to regulate a viscosity, and 1.5 g of an aqueous solution containing dispersed fine particles of an aqueous binder (POLYSOL(R), manufactured by Showa Denko K.K.) were performed to produce a slurry dispersion having sufficient fluidity as the paste for an electrode.

[4-2] Production of Negative Electrode 1

The paste for an electrode was applied with a thickness of 150 $\mu$m on a highly pure copper foil by using a doctor blade, and dried in vacuo at 70°C for 12 hours. The coated foil was punched by using a punching machine so that the coated portion was 4.2 cm$\times$4.2 cm. Then, the punched foil was sandwiched with a pressing plate made of super steel for pressing so that an electrode density was 1.3 g/cm$^3$ to produce a negative electrode 1. A thickness of the negative electrode active material layer after pressing was 65 $\mu$m.

[4-3] Production of Negative Electrode 2

The copper foil on which the above paste for an electrode was applied was punched in a circle with 16 mm$\varphi$, and then pressed so that an electrode density was 1.3 g/cm$^3$, in the same manner as in the negative electrode 1, to produce a negative electrode 2. A thickness of the active material layer after pressing was 65 $\mu$m.

[4-4] Production of Positive Electrode

Stirring and mixing 95 g of LiFe$_2$PO$_4$ (D50: 7 $\mu$m), 1.2 g of carbon black (C65, manufactured by TIMCAL Ltd.) as the conductive auxiliary, 0.3 g of a vapor grown carbon fiber (VGCF(R)-H, manufactured by Showa Denko K.K.), and 3.5 g of polyvinylidene fluoride (PVdF) as the binder, were performed with appropriately adding N-methyl-pyrrolidone to produce a slurry for a positive electrode.

This slurry for a positive electrode was applied on an aluminum foil having a thickness of 20 $\mu$m with a roll coater so as to have a uniform thickness, the coated foil was dried, then roll-pressed, and punched so that the coated portion was 4.2x4.2 cm to obtain a positive electrode. A thickness of the active material layer after pressing was 65 $\mu$m.

[4-5] Production of Electrolyte Liquid

Into a mixed liquid of 3 parts by mass of EC (ethylene carbonate), 2 parts by mass of DMC (dimethyl carbonate), and 5 parts by mass of EMC (ethyl methyl carbonate), 1.2 mol/litter of LiPF$_6$ was dissolved as the electrolyte, and 1 part by mass of VC (vinylene carbonate) was added as an additive to prepare an electrolyte liquid.

[4-6] Assembly of Electrolyte-Liquid Type Lithium-Ion Secondary Battery

(Two-Electrode Cell)

By welding with an ultrasonic welding machine, a nickel tab was attached to a part of the copper foil of the negative electrode 1, and an aluminum tab was attached to a part of the aluminum foil of the positive electrode. The active material side of the negative electrode 1 and the active material side of the positive electrode were stacked opposite to each other with a fine porous film made of polypropylene interposed therebetween, packed with an aluminum laminate film, the electrolyte liquid was injected, and then an opened part was sealed by heat fusion to produce a two-electrode cell.

(Lithium Counter-Electrode Cell (Half Cell))

In a cell with a screwed-type lid made of polypropylene (inner diameter of approximately 18 mm), a separator (Celgard 2400, micro porous film made of polypropylene) was interposed to be stacked between the active material side of the negative electrode 2 and a lithium metal foil punched into 16 mm$\varphi$, the electrolyte liquid was added, and caulked with a caulking machine to produce a lithium counter-electrode cell.

[5] Evaluation of Electrolyte-Liquid Type Lithium-Ion Secondary Battery

[5-1] Measurement of First Discharge Capacity and Coulombic Efficiency

A test was performed by using the lithium counter-electrode cell in a thermostatic chamber set to 25°C. The cell was charged at a constant current of 0.02 mA from the rest potential until 0.005 V. Next, the charge was switched to a charge at a constant voltage of 0.005 V. The cell was charged so that the charge at the constant current and the charge at the constant voltage were performed for 40 hours in total to measure a first charge capacity (a).
The cell was discharged at a constant current of 0.2 mA with an upper limit voltage of 1.5 V to measure a first discharge capacity (b).
A value of the first discharge capacity (b)/the first charge capacity (a) as a percentage, that is $100 \times (b)/(a)$, was specified as the coulombic efficiency.

[5-2] Measurement of Reference Capacity

A test was performed by using the two-electrode cell in a thermostatic chamber set to 25°C. The cell was charged at a constant current of 0.2 C (a current value at which a full-charged battery is discharged in 1 hour is specified as 1 C, the same applies hereinafter) with an upper limit voltage of 4 V, and then charged at a constant voltage of 4 V with a cut-off current value of 0.85 mA. Then, the cell was discharged at a constant current of 0.2 C with a lower limit voltage of 2 V. The above procedure was repeated four times, and a discharge capacity in the fourth time was specified as a reference discharge capacity (c) of the two-electrode cell.

[5-3] Measurement of 500th-Cycle Capacity Maintenance Rate

A test was performed by using the two-electrode cell in a thermostatic chamber set to 25°C. The cell was charged at a constant current of 85 mA (equivalent to 5 C) from the rest potential with an upper limit voltage of 4 V, and then charged at a constant voltage of 4 V with a cut-off current of 0.34 mA.
Thereafter, the cell was discharged at a constant current of 85 mA with a lower limit voltage of 2 V.
The charge and discharge were repeated in 500 cycles under the above condition to measure a 500th-cycle discharge capacity (d). A cycle discharge capacity at high temperature measured under the above condition (d)/a reference capacity of the two-electrode cell (c) as a percentage, that is $100 \times (d)/(c)$ was specified as a 500th-cycle capacity maintenance rate.

[5-4] Measurement of 1-C Rate Capacity Maintenance Rate

A test was performed using the two-electrode cell. In a thermostatic chamber set to 25°C, the cell was charged at a constant current of 0.2 C with an upper limit voltage of 4 V, and then charged at a constant voltage of 4 V with a cut-off current of 0.34 mA. The charged cell was discharged at a constant current of 1 C with a lower limit voltage of 2 V in a thermostatic chamber set to -20°C to measure a discharge capacity. This discharge capacity was specified as a discharge capacity at low temperature (h). A rate of the discharge capacity at low temperature (h) to the reference capacity of the two-electrode cell (c) as a percentage, that is $100 \times (h)/(c)$ was specified as a value of a rate characteristic.

[6] Carbonaceous Material

Details of the carbonaceous materials as raw materials shown in Table 1 are as follows.

[6-1] SCMG(R):

SCMG(R), an artificial graphite manufactured by Showa Denko K.K., was used. This artificial graphite has a D50 of 12.0 $\mu$m, a BET specific surface area of 2.2 m$^2$/g, an aspect ratio of 0.89, and an inner solid structure.

[6-2] SiC (Silicon-Containing Amorphous Carbon Particle)

Used was SiC obtained by treating a commercially available active carbon having a BET specific surface area of 900 m$^2$/g in a tubular furnace having a 1.3 vol% silane gas flow mixed with nitrogen gas at a set temperature of 500°C, at a pressure of 760 torr, and with a flow rate of 100 sccm, for 6 hours. This SiC had a D50 of 10.0 $\mu$m, a BET specific surface area of 16.9 m$^2$/g, and a silicon content of 35 mass%.

Examples 1 to 18 and Comparative Examples 1 to 4:

In each of Examples and Comparative Examples, raw materials at a ratio shown in Table 1 were added into a rolling-fluidizing coating machine (MP-01_mini, manufactured by Powrex Corporation) to be dry-mixed at an ambient temperature under a nitrogen atmosphere until the solution was completely sprayed. This mixture was heat-treated under the atmosphere with a humidity of 25% or lower at a temperature shown in Table 1 in an electric tubular furnace under the following conditions to obtain a composite material. Physical properties and battery characteristics of the obtained composite material are shown in Table 2. A scanning electron microscopic image of the composite material manufactured in Example 1 is shown in FIG. 1.

Operating Condition of Rolling-Fluidizing Coating Machine

- Rotor: Standard
- Filter: FPM
- Mesh: 800M
- Nozzle Type: NPX-II
- Nozzle Diameter: 1.2 mm
- Nozzle Position: Tangential Line
- Number of Nozzle: 1
- Rotor Rotation Speed: 400 rpm
- Pressure of Air Spraying: 0.17 (MPa)
- Blowing-out Pressure: 0.2 (MPa)
- Time of Filter Blowing/Interval: 4.0/0.3 (sec/sec) Condition of Heat Treatment
- Atmosphere: the Atmosphere with Humidity of 25% or Lower
- Maximum Temperature: 400°C
- Holding Time at Maximum Temperature: 1 hour
- Heating Rate: 150°C/h
- Cooling Rate: 150°C/h

[Table 1]

Table 1

| | Carbonaceous material | Precursor solution | | | | | | |
|---|---|---|---|---|---|---|---|---|
| | | Metal oxide precursor | | Li compound | | Solvent | | Solid-content concentration [mass%] |
| | | Type | Rate [wt %] | Type | Rate [wt %] | Type | Rate [wt %] | |
| Example 1 | SCMG® | TTIP | 26.2 | Ethoxylithium | 3.8 | Anhydrous ethanol | 70.0 | 30 |
| Example 2 | SCMG® | TTIP | 30.5 | Ethoxylithium | 4.5 | Anhydrous ethanol | 65.0 | 35 |
| Example 3 | SCMG® | TTIP | 13.1 | Ethoxylithium | 1.9 | Anhydrous ethanol | 85.0 | 15 |
| Example 4 | SCMG® | TTIP | 13.1 | Ethoxylithium | 1.9 | Anhydrous ethanol | 85.0 | 15 |
| Example 5 | SCMG® | TTIP | 26.2 | Ethoxylithium | 3.8 | Anhydrous ethanol | 70.0 | 30 |
| Example 6 | SCMG® | TTIP | 26.2 | Ethoxylithium | 3.8 | Anhydrous ethanol | 70.0 | 30 |
| Example 7 | SCMG® | TTIP | 8.7 | Ethoxylithium | 1.3 | Anhydrous ethanol | 90.0 | 10 |
| Example 8 | SCMG® | Niobium (V) ethoxide | 12.9 | Ethoxylithium | 2.1 | Anhydrous ethanol | 85.0 | 15 |
| Example 9 | SCMG® | TTIP | 27.2 | - | - | Anhydrous ethanol | 72.8 | 27 |
| Example 10 | SiC | TTIP | 26.2 | Ethoxylithium | 3.8 | Anhydrous ethanol | 70.0 | 30 |
| Example 11 | SiC | TTIP | 30.5 | Ethoxylithium | 4.5 | Anhydrous ethanol | 65.0 | 35 |
| Example 12 | SiC | TTIP | 13.1 | Ethoxylithium | 1.9 | Anhydrous ethanol | 85.0 | 15 |
| Example 13 | SiC | TTIP | 13.1 | Ethoxylithium | 1.9 | Anhydrous ethanol | 85.0 | 15 |
| Example 14 | SiC | TTIP | 26.2 | Ethoxylithium | 3.8 | Anhydrous ethanol | 70.0 | 30 |
| Example 15 | SiC | TTIP | 26.2 | Ethoxylithium | 3.8 | Anhydrous ethanol | 70.0 | 30 |
| Example 16 | SiC | TTIP | 8.7 | Ethoxylithium | 1.3 | Anhydrous ethanol | 90.0 | 10 |
| Example 17 | SiC | Niobium (V) ethoxide | 12.9 | Ethoxylithium | 2.1 | Anhydrous ethanol | 85.0 | 15 |
| Example 18 | SiC | TTIP | 27.2 | - | - | Anhydrous ethanol | 72.8 | 27 |
| Comparative Example 1 | SCMG® | TTIP | 30.5 | Ethoxylithium | 4.5 | Anhydrous ethanol | 65.0 | 35 |
| Comparative Example 2 | SCMG® | - | - | - | - | - | - | - |
| Comparative Example 3 | SiC | TTIP | 30.5 | Ethoxylithium | 4.5 | Anhydrous ethanol | 65.0 | 35 |
| Comparative Example 4 | SiC | - | - | - | - | - | - | - |

TTIP: tetraisopropyl orthotitanate

Table 1 (continued)

| | | Operation condition of rolling fluidized bed | | | Heat treatment |
|---|---|---|---|---|---|
| | | Atmosphere | Intake | | |

| | Carbonaceous material/Precursor solution [weight ratio] | | Rate [m³/min] | Temperature [°C] | Solution spraying rate [g/min] | |
|---|---|---|---|---|---|---|
| Example 1 | 7.6 | N2 | 0.2 | 90 | 2.0 | Performed |
| Example 2 | 22.2 | N2 | 0.2 | 90 | 1.0 | Performed |
| Example 3 | 2.4 | N2 | 0.2 | 90 | 2.5 | Performed |
| Example 4 | 3.8 | N2 | 0.2 | 100 | 6.0 | Performed |
| Example 5 | 7.6 | N2 | 0.2 | 80 | 1.2 | Performed |
| Example 6 | 2.8 | N2 | 0.2 | 80 | 2.5 | Performed |
| Example 7 | 2.5 | N2 | 0.2 | 80 | 2.3 | Performed |
| Example 8 | 4.1 | N2 | 0.2 | 90 | 2.0 | Performed |
| Example 9 | 7.9 | N2 | 0.2 | 90 | 2.0 | Not performed |
| Example 10 | 7.6 | N2 | 0.2 | 90 | 2.0 | Performed |
| Example 11 | 22.2 | N2 | 0.2 | 90 | 1.0 | Performed |
| Example 12 | 2.4 | N2 | 0.2 | 90 | 2.5 | Performed |
| Example 13 | 3.8 | N2 | 0.2 | 100 | 6.0 | Performed |
| Example 14 | 7.6 | N2 | 0.2 | 80 | 1.2 | Performed |
| Example 15 | 2.8 | N2 | 0.2 | 80 | 2.5 | Performed |
| Example 16 | 2.5 | N2 | 0.2 | 80 | 2.3 | Performed |
| Example 17 | 4.1 | N2 | 0.2 | 90 | 2.0 | Performed |
| Example 18 | 7.9 | N2 | 0.2 | 90 | 2.0 | Not performed |
| Comparative Example 1 | 10.9 | N2 | 0.2 | 90 | 4.0 | Performed |
| Comparative Example 2 | - | - | - | - | - | Not performed |
| Comparative Example 3 | 10.9 | N2 | 0.2 | 90 | 4.0 | Performed |
| Comparative Example 4 | - | - | - | - | - | Not performed |

TTIP: tetraisopropyl orthotitanate

[Table 2]

Table 2

| | Physical properties of composite | | | | | | Metal compound layer | | | | |
|---|---|---|---|---|---|---|---|---|---|---|---|
| | BET specific surface area | Particle size distribution | | | Surface roughness | $d_{002}$ | Type | Average thickness | Coating rate | Area percentage* | Arithmetic average of circle-equivalent diameter (to D50) |
| | | D10 | D50 | D90 | | | | | | | |
| | [m²/g] | [μm] | [μm] | [μm] | | [nm] | | [nm] | [%] | [%] | times |
| Example 1 | 3.4 | 3.5 | 11.2 | 26.6 | 3.9 | 0.3356 | Lithium titanate | 30 | 50 | 94 | 0.45 |
| Example 2 | 2.7 | 3.8 | 11.7 | 27.2 | 3.4 | 0.3356 | Lithium titanate | 30 | 20 | 91 | 0.43 |
| Example 3 | 3.6 | 3.3 | 11.0 | 26.4 | 4.2 | 0.3356 | Lithium titanate | 30 | 80 | 96 | 0.45 |
| Example 4 | 3.9 | 3.2 | 10.9 | 26.5 | 4.4 | 0.3356 | Lithium titanate | 30 | 50 | 93 | 0.10 |
| Example 5 | 3.2 | 3.6 | 11.4 | 26.9 | 3.6 | 0.3356 | Lithium titanate | 30 | 40 | 93 | 0.88 |
| Example 6 | 4.2 | 3.0 | 10.7 | 25.9 | 4.6 | 0.3356 | Lithium titanate | 90 | 60 | 94 | 0.47 |
| Example 7 | 2.7 | 3.9 | 11.8 | 27.4 | 3.3 | 0.3356 | Lithium titanate | 10 | 80 | 96 | 0.85 |
| Example 8 | 3.4 | 3.9 | 11.7 | 27.1 | 4.4 | 0.3356 | Lithium niobate | 30 | 50 | 94 | 0.43 |
| Example 9 | 3.5 | 3.4 | 11.1 | 26.4 | 3.9 | 0.3356 | Titanium oxide (amorphous) | 30 | 50 | 84 | 0.45 |
| Example 10 | 8.9 | 2.8 | 9.1 | 26.9 | 6.2 | 0.3370< | Lithium titanate | 25 | 45 | 90 | 0.55 |
| Example 11 | 7.6 | 3.1 | 9.3 | 27.3 | 5.5 | 0.3370< | Lithium titanate | 25 | 20 | 89 | 0.54 |
| Example 12 | 9.2 | 2.7 | 8.9 | 26.6 | 6.7 | 0.3370< | Lithium titanate | 25 | 70 | 93 | 0.56 |
| Example 13 | 10.3 | 2.6 | 8.8 | 25.7 | 7.1 | 0.3370< | Lithium titanate | 25 | 45 | 90 | 0.11 |
| Example 14 | 8.6 | 2.9 | 9.3 | 27.3 | 5.9 | 0.3370< | Lithium titanate | 25 | 35 | 90 | 0.95 |
| Example 15 | 10.7 | 2.5 | 8.6 | 26.1 | 7.4 | 0.3370< | Lithium titanate | 80 | 65 | 91 | 0.58 |
| Example 16 | 7.5 | 3.2 | 9.5 | 27.5 | 5.3 | 0.3370< | Lithium titanate | 10 | 70 | 93 | 0.95 |
| Example 17 | 9.0 | 3.2 | 9.4 | 27.3 | 6.9 | 0.3370< | Lithium niobate | 25 | 45 | 90 | 0.53 |
| Example 18 | 9.0 | 2.7 | 9.2 | 26.5 | 6.3 | 0.3370< | Titanium oxide (amorphous) | 25 | 45 | 81 | 0.54 |
| Comparative Example 1 | 2.9 | 3.7 | 11.5 | 27.0 | 2.9 | 0.3356 | Lithium titanate | 20 | 10 | 75 | 0.26 |
| Comparative Example 2 | 2.2 | 4.7 | 12.0 | 25.5 | 2.5 | 0.3356 | None | - | - | - | - |
| Comparative Example 3 | 7.9 | 3.1 | 9.3 | 27.4 | 4.9 | 0.3370< | Lithium titanate | 15 | 10 | 55 | 0.28 |
| Comparative Example 4 | 16.9 | 3.5 | 10.0 | 25.9 | 11.9 | 0.3370< | None | - | - | - | - |

*A rate of area having circle-equivalent diameter of 1 μm or larger and 10 μm or smaller

Table 2 (continued)

| | | Metal compound layer | | Battery characteristics (all-solid-state type) | | | | Battery characteristics (electrolyte-liquid type) | | | |
|---|---|---|---|---|---|---|---|---|---|---|---|
| | | Content | Adhesion of metal oxide fine particle | First discharge capacity | Coulombic efficiency | 3C-rate capacity mainte-nance rate | 100th-cycle capacity mainte-nance rate | First discharge capacity | Coulombic efficiency | 1C-rate capacity mainte-nance rate | 500th-cycle capacity mainte-nance rate |
| | | [parts by mass] | | [mAh/g] | [%] | [%] | [%] | [mAh/g] | [%] | [%] | [%] |
| Example 1 | | 1.1 | Presence | 350 | 94 | 99 | 99 | 355 | 92 | 93 | 95 |
| Example 2 | | 0.4 | Presence | 345 | 94 | 98 | 98 | 350 | 92 | 93 | 94 |
| Example 3 | | 1.8 | Presence | 345 | 94 | 98 | 98 | 350 | 92 | 93 | 94 |
| Example 4 | | 1.1 | Presence | 346 | 94 | 99 | 99 | 350 | 92 | 94 | 95 |
| Example 5 | | 1.1 | Presence | 348 | 94 | 99 | 99 | 353 | 92 | 94 | 95 |
| Example 6 | | 3.0 | Presence | 344 | 93 | 99 | 99 | 350 | 91 | 94 | 95 |
| Example 7 | | 1.1 | Presence | 348 | 94 | 98 | 97 | 353 | 92 | 93 | 94 |
| Example 8 | | 1.1 | Presence | 345 | 93 | 99 | 99 | 350 | 91 | 94 | 95 |
| Example 9 | | 1.0 | Presence | 344 | 93 | 97 | 98 | 350 | 91 | 92 | 94 |
| Example 10 | | 1.1 | Presence | 1400 | 86 | 81 | 75 | 1200 | 82 | 75 | 55 |
| Example 11 | | 0.4 | Presence | 1000 | 82 | 85 | 73 | 800 | 78 | 77 | 53 |
| Example 12 | | 1.8 | Presence | 1600 | 88 | 80 | 77 | 1400 | 84 | 73 | 59 |
| Example 13 | | 1.1 | Presence | 1400 | 86 | 81 | 75 | 1200 | 82 | 75 | 55 |
| Example 14 | | 1.1 | Presence | 1300 | 84 | 83 | 74 | 1100 | 80 | 76 | 53 |
| Example 15 | | 3.0 | Presence | 1300 | 88 | 75 | 71 | 1100 | 84 | 71 | 50 |
| Example 16 | | 1.1 | Presence | 1800 | 88 | 83 | 80 | 1600 | 84 | 76 | 61 |
| Example 17 | | 1.1 | Presence | 1400 | 86 | 81 | 75 | 1200 | 82 | 75 | 55 |
| Example 18 | | 1.0 | Presence | 1300 | 85 | 80 | 75 | 1100 | 82 | 73 | 55 |
| Comparative Example 1 | | 0.9 | Absence | 325 | 92 | 92 | 94 | 330 | 90 | 85 | 90 |
| Comparative Example 2 | | - | Absence | 315 | 91 | 91 | 92 | 320 | 89 | 83 | 87 |
| Comparative Example 3 | | 0.9 | Absence | 900 | 76 | 63 | 55 | 900 | 76 | 63 | 34 |
| Comparative Example 4 | | - | Absence | 800 | 71 | 55 | 43 | 800 | 71 | 55 | 21 |

*A rate of area having circle-equivalent diameter of 1 μm or larger and 10 μm or smaller

[Second Aspect]

Examples and Comparative Examples of the second aspect of the present invention will be described below, but they do not limit the technical scope of the present invention.
An evaluating method of composite materials, producing method of the battery, measuring method of battery characteristics, and raw materials used in each example in Examples and Comparative Examples are as follows.

[1] Evaluation of Composite Material

[1-1] BET Specific Surface Area

An evaluation was performed in the same manner as in the first aspect.

[1-2] 10% Particle Diameter (D10), 50% Particle Diameter (D50), and 90% Particle Diameter (D90)

Using Mastersizer(R) 2000, manufactured by Malvern Panalytical, Spectris Co., Ltd., as a laser diffraction-type particle size distribution measurement apparatus, 5 mg of a sample was added in a container, 10 g of a water containing a surfactant at 0.04 mass% was added to be subjected to ultrasonic treatment for 5 minutes. Then a measurement was performed to determine a 10% particle diameter (D10), 50% particle diameter (D50), and 90% particle diameter (D90), in a cumulative particle size distribution on a volumetric basis.

[1-3] Surface Roughness

An evaluation was performed in the same manner as in the first aspect.

[1-4] Plane Spacing d002

An evaluation was performed in the same manner as in the first aspect.

[1-5] Average Thickness of Metal Oxide Layer

An evaluation was performed in the same manner as in the first aspect.

[1-6] Coating Rate with Metal Oxide Layer

A coating rate was calculated with a binarized image obtained with a SEM/EDS image.

$$\mathrm{Coating\ Rate = Area\ Derived\ from\ Metal\ Oxide/Area\ of}$$

$$\mathrm{Entire\ Particle{\times}100\ [\%]}$$

A specific procedure was as follows. The SEM/EDS was adjusted so as to display an entirety of one particle to obtain an image.

The EDS image is obtained by setting an acceleration voltage as low as practicable depending on an element, derived from the metal oxide, to be detected. The acceleration voltage is lowered because a spread of electrons in the substance is suppressed to more increase measurement accuracy.

Then, the EDS mapping image was opened with Photoshop (available from Adobe Inc.) to select "Image/Mode/Gray Scale". Next, "Image/Color-Tone Adjusting/Averaging (Equalize)" was performed. Furthermore, "Image/Color-Tone Adjusting/Binarizing" was selected, and the threshold was set to 110 to be executed. "Quick Select Tool" was selected, "Auto Adjustment" was checked, "Hardness" was set to 100%, "Interval" was set to 25%, and "Diameter" was freely adjusted. The entire particle was selected, and "Image/Analyze/Record Measurement" was selected to calculate the area. Then, a white region (recognized as one domain) was selected to similarly measure the area. When there were a plurality of regions, all the regions were measured one by one. The total area of all the white regions was calculated. Here, a boundary of the range recognized as one domain was a position on which a width of the white region became 0.1 $\mu$m or narrower. The above measurement was performed on 50 randomly-extracted particles, and the results were averaged to determine the coating rate.

Before "Quick Select Tool" was selected, "Image/Analyze/Setting Measurement Scale/Custom" was selected to convert a value of the scale bar of the SEM/EDS image into pixel.

Note that the coating rate by binarizing the SEM/EDS image may be calculated by using another software, and may be determined by, for example, a composition-analyzed image (such as AES).

[1-7] Circle-Equivalent Diameter of Metal Oxide Layer

An arithmetic average of each area of the white regions (metal oxide layer) obtained in the preceding section was calculated, and a diameter of a circle having the above area was specified as the circle-equivalent diameter.

[1-8] Content of Metal Oxide (ICP Analysis)

The amounts of the carbonaceous material and amorphous carbon layer included in the composite material were measured by using carbon/sulfur analyzer EMIA-320V, manufactured by HORIBA, Ltd., and the measured amounts were subtracted from the amount of the composite material to determine the content of the metal oxide. When the metal oxide contained a plurality of metals, the content of each metal oxide was determined by quantitative analysis of metal elements with, for example, inductively coupled plasma emission spectroscopy (ICP-AES).

- Apparatus: Varian Vista-PRO (manufactured by Hitachi High-Tech Science Corporation)
- High-Frequency Power: 1.2 kW
- Plasma Gas: Argon Gas (Flow Rate: 15 L/min.)
- Auxiliary Gas: Argon Gas (Flow Rate: 1.50 L/min.)
- Carrier Gas: Argon Gas (Flow Rate: 0.85 L/min.)
- Observing Direction: Axial Direction

[1-9] Coating Rate with Amorphous Carbon Layer

When the carbonaceous material was graphite, a coating rate with the amorphous carbon layer was calculated with a mapping image by Raman spectroscopy.

Using NRS-5100, manufactured by JASCO Corporation, as a laser Raman microspectrometer, a composite material A1 was extracted from the composite material A, and the microspectrometer was adjusted so as to display an entirety of one particle.

This particle was irradiated with laser having an excitation wavelength of 532.36 nm to perform Raman spectroscopic measurement. The measurement was performed with the following divided regions.

Measuring Area: 7.0×9.0 $\mu$m
Measuring Step: 0.32 $\mu$m
Measuring Point: 22×28 points

In the particle region, R value was measured at each measuring point to specify a portion having an R value of 0.15 or more as the amorphous carbon layer, and a rate (%) of an area of the portion having an R value of 0.15 or more in an area of the entire particle was specified as a coating rate A1 with the amorphous carbon layer. With this mapping image, a sea-island structure of the amorphous carbon layer was determined.

Here, the R value refers to a ratio (ID/IG) between an intensity of a peak near 1350 $cm^{-1}$ (ID) and an intensity of a peak near 1580 $cm^{-1}$ (IG) in the Raman spectrum.

The above measurement was repeated 50 times to determine an arithmetic average thereof. That is, coating rates of 50 randomly-extracted composite materials A1 to A50 were measured, and the arithmetic average thereof was specified as a coating rate A with the amorphous carbon layer of the composite material A.

When the carbonaceous material is a silicon-containing amorphous carbon material, the coating rate with the amorphous carbon layer was calculated with a mapping image by the following Raman spectroscopy.

Using NRS-5100, manufactured by JASCO Corporation, as a laser Raman microspectrometer, a composite material A1 was extracted from the composite material A, and the microspectrometer was adjusted so as to display an entirety of one particle.

This particle was irradiated with laser having an excitation wavelength of 532.36 nm to perform Raman spectroscopic measurement. The measurement was performed with the following divided regions.

Measuring Area: 7.0×9.0 $\mu$m
Measuring Step: 0.32 $\mu$m
Measuring Point: 22×28 points

In the particle region, ISi/ID was measured at each measuring point to specify a portion having the value of 0.05 or less as the amorphous carbon layer and a portion having the value of more than 0.05 as the portion uncoated with the amorphous carbon layer, and a rate (%) of an area of the portion having the ISi/ID value of 0.05 or less in an area of the entire particle was specified as a coating rate A1 with the amorphous carbon layer. With this mapping image, a sea-island structure of the amorphous carbon layer was determined.

Here, ISi refers to an intensity of a peak near 500 $cm^{-1}$ and ID refers to an intensity of a peak near 1350 $cm^{-1}$ in the Raman spectrum.

The above measurement was repeated 50 times to determine an arithmetic average thereof. That is, coating rates of 50 randomly-extracted composite materials A1 to A50 were measured, and the arithmetic average thereof was specified as a coating rate A with the amorphous carbon layer of the composite material A.

A circle-equivalent diameter was calculated in the same manner as described in the 105 and 106 sections. A case where a rate of an area having the circle-equivalent diameter of 1 $\mu$m or larger and 10 $\mu$m or smaller is less than 50% is defined as an island, and a case where the rate is 50% or more is defined as a sea phase.

[1-10] Average Thickness of Amorphous Carbon Layer

An average thickness of the amorphous carbon layer 24, t, was determined by the following method.

(1) One composite material A1 was randomly extracted from composite materials observed with a transmission electron microscope (TEM).
(2) In the extracted composite material A1, one portion where the amorphous carbon layer 22 was formed was randomly selected, and a thickness of the amorphous carbon layer 24 in the selected portion, t1, was measured. The thickness t1 was determined by: determining x1, which was an intersection of a vertical line to the carbonaceous material 21 surface and the carbonaceous material 21 surface, and x2, which was an intersection of this vertical line and an outer circumference of the amorphous carbon layer 24; and measuring a distance between the determined intersections x1 and x2.
(3) The steps (1) and (2) were repeated 50 times. That is, measured were thicknesses of the amorphous carbon layers 22, t1 to t50, measured with 50 composite materials A1 to A50 randomly extracted from the composite materials observed with the transmission electron microscope (TEM). The randomly extracted composite materials A1 to A50 were not duplicated each other.
(4) An arithmetic average of the obtained values t1 to t50 was specified as the average thickness of the amorphous carbon layer 24, t.

[2] Production of All-Solid-State Type Lithium-Ion Secondary Battery

Hereinafter, batteries using the composite materials obtained in Examples and Comparative Examples were produced in the same manner as in the first aspect.

[3] Evaluation of All-Solid-State Type Lithium-Ion Secondary Battery

The following battery evaluations were performed in the same manners as in the first aspect.

[3-1] Measurement of First Coulombic Efficiency

[3-2] Evaluation of 3-C Rate Capacity Maintenance Rate

[3-3] Evaluation of 100th-Cycle Capacity Maintenance Rate

[4] Production of Electrolyte-Liquid Type Lithium-Ion Secondary Battery

Hereinafter, batteries using the composite materials obtained in Examples and Comparative Examples were produced in the same manner as in the first aspect.

[4-1] Production of Paste for Electrode

[4-2] Production of Negative Electrode 1

[4-3] Production of Negative Electrode 2

[4-4] Production of Positive Electrode

[4-5] Production of Electrolyte Liquid

[4-6] Assembly of Battery

[5] Evaluation of Electrolyte-Liquid Type Lithium-Ion Secondary Battery

The following battery evaluations were performed in the same manners as in the first aspect.

[5-1] Measurement of First Discharge Capacity and Coulombic Efficiency

[5-2] Measurement of Reference Capacity

[5-3] Measurement of 500th-Cycle Capacity Maintenance Rate

[5-4] Measurement of 1-C Rate Capacity Maintenance Rate

[6] Carbonaceous Material

Details of the carbonaceous materials as raw materials shown in Table 3 are as follows.

[6-1] SCMG(R):

SCMG(R), a graphite particle (artificial graphite) manufactured by Showa Denko K.K., was used. This graphite particle had a BET specific surface area of 2.2 m$^2$/g, a D10 of 4.7 $\mu$m, a D50 of 12.0 $\mu$m, a D90 of 25.5 $\mu$m, a surface roughness of 3.3, an aspect ratio of 0.89, a d002 of 0.3356 nm, and an inner solid structure.

[6-2] SiC (Silicon-Containing Amorphous Carbon Particle)

Used was SiC obtained by treating a commercially available active carbon (amorphous carbon material) having a BET specific surface area of 900 m$^2$/g in a tubular furnace having a 1.3 vol% silane gas flow mixed with nitrogen gas at a set temperature of 500°C, at a pressure of 760 torr, and with a flow rate of 100 sccm, for 6 hours. This SiC had a D50 of 10.0 $\mu$m, a BET specific surface area of 16.9 m$^2$/g, and a silicon content of 35 mass%.

Examples 1 to 4 and Comparative Examples 1 to 4

In each of Examples, a solution at a ratio shown in Table 3 was prepared. The carbonaceous material was added into a rolling-fluidizing coating machine (MP-01_mini, manufactured by Powrex Corporation) to be mixed at an ambient temperature under a nitrogen atmosphere with spraying the above solution. The obtained mixture was heat-treated under the atmosphere with a humidity of 25% or lower at a temperature shown in Table 3 in an electric tubular furnace under the following conditions to obtain a composite material. Physical properties and battery characteristics of the obtained composite material are shown in Table 4.
A battery was produced by using the obtained composite material. The batteries using the composite materials obtained in Examples 1 to 2 had excellent battery performance comparing with the batteries using the composite materials obtained in Comparative Examples 1 to 2.
Operating Condition of Rolling-Fluidizing Coating Machine

- Rotor: Standard
- Filter: FPM
- Mesh: 800M
- Nozzle Type: NPX-II
- Nozzle Diameter: 1.2 mm
- Nozzle Position: Tangential Line
- Number of Nozzle: 1
- Rotor Rotation Speed: 400 rpm
- Pressure of Air Spraying: 0.17 (MPa)
- Blowing-out Pressure: 0.2 (MPa)
- Time of Filter Blowing/Interval: 4.0/0.3 (sec/sec) Condition of Heat Treatment
- Atmosphere: the Atmosphere with Humidity of 25% or Lower
- Maximum Temperature: 400°C
- Holding Time at Maximum Temperature: 1 hour
- Heating Rate: 150°C/h
- Cooling Rate: 150°C/h

[Table 3]

Table 3

| | Carbonaceous material | Solution | | | | | | | |
| | | Metal oxide precursor | | Li compound | | Raw material of amorphous carbon | | Solvent | |
| | | Type | Rate [mass%] | Type | Rate [mass%] | Type | Rate [mass%] | Type | Rate [mass%] |
| Example 1 | SCMG® | TTIP | 22.4 | Ethoxylithium | 3.3 | Petroleum pitch (softening point of 105°C) | 14.4 | Anhydrous ethanol | 59.9 |
| Example 2 | SCMG® | TTIP | 22.4 | Ethoxylithium | 3.3 | Petroleum pitch (softening point of 230°C) | 14.4 | Anhydrous ethanol | 59.9 |
| Example 3 | SiC | TTIP | 22.4 | Ethoxylithium | 3.3 | Petroleum pitch (softening point of 105°C) | 14.4 | Anhydrous ethanol | 59.9 |
| Example 4 | SiC | TTIP | 22.4 | Ethoxylithium | 3.3 | Petroleum pitch (softening point of 230°C) | 14.4 | Anhydrous ethanol | 59.9 |
| Comparative Example 1 | SCMG® | TTIP | 30.5 | Ethoxylithium | 4.5 | - | - | Anhydrous ethanol | 65.0 |
| Comparative Example 2 | SCMG® | - | - | - | - | - | - | - | - |
| Comparative Example 3 | SiC | TTIP | 30.5 | Ethoxylithium | 4.5 | - | - | Anhydrous ethanol | 65.0 |
| Comparative Example 4 | SiC | - | - | - | - | - | - | - | - |

TTIP: tetraisopropyl orthotitanate

Table 3 (continued)

| | Solution | Carbonaceous material/Solution [mass ratio] | Operation condition of rolling fluidized bed | | | | Heat treatment |
| | Solid-content concentration [mass%] | | Atmosphere | Intake | | Solution spraying rate [g/min] | |
| | | | | Rate [m³/min] | Temperature [°C] | | Maximum temperature [°C] |
| Example 1 | 40.1 | 15.3 | N₂ | 0.2 | 90 | 2.0 | 400 |
| Example 2 | 40.1 | 15.3 | N₂ | 0.2 | 90 | 1.0 | 400 |
| Example 3 | 40.1 | 15.3 | N₂ | 0.2 | 90 | 2.0 | 400 |
| Example 4 | 40.1 | 15.3 | N₂ | 0.2 | 90 | 1.0 | 400 |
| Comparative Example 1 | 35 | 10.9 | N₂ | 0.2 | 90 | 4.0 | 400 |
| Comparative Example 2 | - | - | - | - | - | - | Not performed |
| Comparative Example 3 | 35 | 10.9 | N₂ | 0.2 | 90 | 4.0 | 400 |
| Comparative Example 4 | - | - | - | - | - | - | Not performed |

TTIP: tetraisopropyl orthotitanate

EP 4 060 763 A1

[Table 4]

Table 4

| | Physical properties of composite material | | | | | | Metal oxide layer | | | | | |
|---|---|---|---|---|---|---|---|---|---|---|---|---|
| | BET specific surface area [m²/g] | Particle size distribution | | | Surface rough-ness | d002 [nm] | Type | Adhesion form | Average thickness [nm] | Coating rate [%] | Area percent-age* [%] | Arithmetic average of circle-equivalent diameter (to D50) times |
| | | D10 [μm] | D50 [μm] | D90 [μm] | | | | | | | | |
| Example 1 | 1.6 | 4.0 | 12.0 | 28.1 | 1.8 | 0.3356 | Lithium titanate | Islands | 50 | 35 | 91 | 0.42 |
| Example 2 | 2.3 | 3.9 | 11.8 | 27.8 | 2.8 | 0.3356 | Lithium titanate | Islands | 30 | 40 | 94 | 0.42 |
| Example 3 | 6.2 | 3.8 | 9.8 | 27.1 | 4.5 | 0.3370< | Lithium titanate | Islands | 40 | 40 | 85 | 0.51 |
| Example 4 | 7.8 | 3.7 | 9.5 | 26.9 | 5.9 | 0.3370< | Lithium titanate | Islands | 20 | 60 | 87 | 0.53 |
| Comparative Example 1 | 2.9 | 3.7 | 11.5 | 27.0 | 2.9 | 0.3356 | Lithium titanate | Islands | 20 | 10 | 75 | 0.26 |
| Comparative Example 2 | 2.2 | 4.7 | 12.0 | 25.5 | 2.5 | 0.3356 | None | - | - | - | - | - |
| Comparative Example 3 | 7.9 | 3.1 | 9.3 | 27.4 | 4.9 | 0.3370< | Lithium titanate | Islands | 15 | 10 | 55 | 0.32 |
| Comparative Example 4 | 16.9 | 3.5 | 10.0 | 25.9 | 11.9 | 0.3370< | None | - | - | - | - | - |

* A rate of area having circle-equivalent diameter of 1 μm or larger and 10 μm or smaller

Table 4 (continued)

| | Metal oxide layer | | Amorphous carbon layer | | | | Battery characteristics (electrolyte-liquid type) | | | |
|---|---|---|---|---|---|---|---|---|---|---|
| | Content [parts by mass] | Adhesion of metal oxide fine particle | Adhesion form | Average thickness [nm] | Coating rate [%] | Area percent-age* [%] | First discharge capacity [mAh/g] | Coulombic efficiency [%] | 1C-rate capacity maintenance rate [%] | 500th-cycle capacity maintenance rate [%] |
| Example 1 | 1.1 | Presence | Sea phase | 20 | 50 | 20 | 355 | 92 | 95 | 94 |
| Example 2 | 1.1 | Presence | Islands | 40 | 25 | 90 | 355 | 92 | 94 | 93 |
| Example 3 | 1.1 | Presence | Sea phase | 15 | 55 | 25 | 1200 | 83 | 78 | 63 |
| Example 4 | 1.1 | Presence | Islands | 35 | 30 | 85 | 1100 | 81 | 76 | 59 |
| Comparative Example 1 | 0.9 | Absence | - | - | - | - | 330 | 90 | 85 | 90 |
| Comparative Example 2 | - | Absence | - | - | - | - | 320 | 89 | 83 | 87 |
| Comparative Example 3 | 0.9 | Absence | - | - | - | - | 900 | 76 | 63 | 34 |
| Comparative Example 4 | - | Absence | - | - | - | - | 800 | 71 | 55 | 21 |

* A rate of area having circle-equivalent diameter of 1 μm or larger and 10 μm or smaller

48

[Third Aspect]

Examples and Comparative Examples of the third aspect of the present invention will be described below, but they do not limit the technical scope of the present invention.

An evaluating method of composite materials, producing method of the battery, measuring method of battery characteristics, and raw materials used in each example in Examples and Comparative Examples are as follows.

[1] Evaluation of Composite Material

[1-1] BET Specific Surface Area

An evaluation was performed in the same manner as in the second aspect.

[1-2] 50% Particle Diameter (D50)

An evaluation was performed in the same manner as in the second aspect.

[1-3] Surface Roughness

An evaluation was performed in the same manner as in the second aspect.

[1-4] Plane Spacing d002

An evaluation was performed in the same manner as in the second aspect.

[1-5] Area percentages of Portion having Thickness of 10 nm or less and Portion having Thickness of more than 10 nm in Metal Oxide Layer

In the metal oxide layer, an area percentage of a portion having a thickness of 10 nm or less, W1, and an area percentage of a portion having a thickness of more than 10 nm, W2, were determined by the following procedure.

SEM (scanning electron microscope)-EDS mapping was performed on the composite material to determine an area of the metal oxide layer, S1. Then, the composite material was etched by argon-ion etching with 10 nm in $SiO_2$ conversion, and EDS mapping was performed to determine an area of the metal oxide layer, S2.

This procedure was repeated on 50 randomly-extracted different composite materials 1 to 50 to measure S1-1 to S50-1 and S1-2 to S50-2, and then respective arithmetic averages thereof, Sav1 and Sav2, were determined to calculate W1 and W2 with the following formulas.

$$W1 = (Sav1-Sav2)/Sav1$$

$$W2 = Sav2/Sav1$$

[1-6] Coating Rate with Metal Oxide Layer

A coating rate was calculated with a binarized image obtained with a SEM image. A condition was adjusted so that a white region was determined as the metal oxide layer.

$$Coating~Rate~[\%] = Total~Area~of~White~Region/Area~of~Entire~Particle\times100$$

A specific method was as follows. The SEM was adjusted so as to display an entirety of one particle to obtain an image. In this time, the auto contrast was used. The obtained SEM image was opened with Photoshop (available from Adobe Inc.) to select "Image/Mode/Gray Scale". Next, "Image/Color-Tone Adjusting/Averaging (Equalize)" was performed. Furthermore, "Image/Color-Tone Adjusting/Binarizing" was selected, and the threshold was set to 110 to be executed. "Quick Select Tool" was selected, "Auto Adjustment" was checked, "Hardness" was set to 100%, "Interval" was set to 25%, and "Diameter" was freely adjusted. The entire particle was selected, and "Image/Analyze/Record Measurement" was selected to calculate the area. Then, a white region (recognized as one domain) was selected to similarly measure the area. When there were a plurality of regions, all the regions were measured one by one. The total area of all the white regions was calculated. Here, a boundary of the range recognized as one domain was a position on which a width of the white region became 0.1 $\mu$m or narrower. The above measurement was performed on 50 randomly-extracted particles, and the results were averaged to determine the coating rate.

Before "Quick Select Tool" was selected, "Image/Analyze/Setting Measurement Scale/Custom" was selected to convert a value of the scale bar of the SEM image into pixel.

Note that the coating rate by binarizing the SEM image may be calculated by using another software, and may be determined by, for example, a composition-analyzed image.

[1-7] Average Particle Diameter of Primary Particles of Metal Oxide Particle

FIB processing to expose a cross section of the composite material and mapping with STEM/EELS can recognize primary particles of the metal oxides in the composite material.

(1) A field where one or more primary particles of the metal oxide are observed is randomly extracted from near the surface of the composite material observed with STEM/EELS. The magnification is set so as to clearly recognize the primary particle.
(2) In the extracted field, a length of each primary particle is measured 6 times by using a length-measuring mode of STEM/EELS with tilting at 60°C so that the lines necessarily intersect at one point to calculate an average diameter thereof. The above measurement is performed on 50 randomly-extracted particles, and an average thereof is specified as an average particle diameter of the primary particles of the metal oxide particle. For the calculation, another software may be used. The average particle diameter may be determined with a secondary electron image or a transmission image as long as it can achieve a contrast that can clearly recognize the primary particles.

[1-8] Average Thickness of Underlayer (Intermediate Layer)

An average thickness of the underlayer, t, was determined by the following method.

(1) One composite material A1 was randomly extracted from composite materials observed with a transmission electron microscope (TEM).
(2) In the extracted composite material A1, one portion where the underlayer was formed was randomly selected, and a thickness of the underlayer in the selected portion, t1, was measured. The thickness t1 was determined by: determining x1, which was an intersection of a vertical line to the carbonaceous material surface and the carbonaceous material surface, and x2, which was an intersection of this vertical line and an outer circumference of the underlayer; and measuring a distance between the determined intersections x1 and x2.
(3) The steps (1) and (2) were repeated 50 times. That is, measured were thicknesses of the intermediate layer 25, t1 to t50, measured with 50 composite materials A1 to A50 randomly extracted from the composite materials observed with the transmission electron microscope (TEM). The randomly extracted composite materials A1 to A50 were not duplicated each other.
(4) An arithmetic average of the obtained values t1 to t50 was specified as the average thickness of the underlayer, t.

An FFT (Fast Fourier Transform) pattern was evaluated to determine layer structures of, for example, the graphene layer and the amorphous carbon layer.

[1-9] Content of Metal Oxide (Carbon/Sulfur Analysis and ICP Analysis)

The amounts of the carbonaceous material and underlayer included in the composite material were measured by using carbon/sulfur analyzer EMIA-320V, manufactured by HORIBA, Ltd., and the measured amounts were subtracted from the amount of the composite material to determine the content of the metal oxide. When the metal oxide contained a plurality of metals, the content of each metal oxide was determined by quantitative analysis of metal elements with, for example, inductively coupled plasma emission spectroscopy (ICP-AES).

- Apparatus: Varian Vista-PRO (manufactured by Hitachi High-Tech Science Corporation)
- High-Frequency Power: 1.2 kW
- Plasma Gas: Argon Gas (Flow Rate: 15 L/min.)
- Auxiliary Gas: Argon Gas (Flow Rate: 1.50 L/min.)

- Carrier Gas: Argon Gas (Flow Rate: 0.85 L/min.)
- Observing Direction: Axial Direction

[2] Production of All-Solid-State Type Lithium-Ion Secondary Battery

[2-1] Preparation of Solid Electrolyte Layer 12

[2-2] Preparation of Negative Electrode Mixture Layer 132

[2-3] Preparation of Positive Electrode Mixture Layer 112

[2-4] Assembly of All-Solid-State Type Lithium-Ion Secondary Battery 1

Any of the above was performed in the same manner as in the second aspect.

[3] Evaluation of All-Solid-State Type Lithium-Ion Secondary Battery

[3-1] Measurement of Coulombic Efficiency

[3-2] Measurement of 3-C Rate Capacity Maintenance Rate

[3-3] Measurement of 100th-Cycle Capacity Maintenance Rate

Any of the above was performed in the same manner as in the second aspect.

[3] Production of Electrolyte-Liquid Type Lithium-Ion Secondary Battery

[3-1] Production of Paste for Electrode

[3-2] Production of Negative Electrode 1

[3-3] Production of Negative Electrode 2

[3-4] Production of Positive Electrode

[3-5] Production of Electrolyte Liquid

[3-6] Assembly of Battery

Any of the above was performed in the same manner as in the second aspect.

[4] Evaluation of Electrolyte-Liquid Type Lithium-Ion Secondary Battery

[4-1] Measurement of First Discharge Capacity and Coulombic Efficiency

[4-2] Measurement of Reference Capacity

[4-3] Measurement of 500th-Cycle Capacity Maintenance Rate

[4-4] Measurement of 1-C Rate Capacity Maintenance Rate

Any of the above was performed in the same manner as in the second aspect.

[5] Carbonaceous Material

Details of the materials shown in Table 5 are as follows.

[5-1] SCMG(R):

[5-2] SiC (Silicon-Containing Amorphous Carbon Particle)

The same material as in the second aspect was used.

[6] Metal Oxide Particle

Details of the materials shown in Table 5 are as follows.

[7-1] TiO$_2$:

The TiO$_2$ was obtained by a manufacturing method of Example 1 in Japanese Patent Laid-Open No. 2017-114700. A content rate of the anatase crystalline phase in the total crystalline phase was 100 mass%. An average diameter of primary particles determined with the BET specific surface area was 3.83 nm (BET specific surface area: 392 m$^2$/g).

Examples 1 and 3

The carbonaceous material, the metal oxide particle, and the raw material of the underlayer were added at amounts shown in Table 5 into a V-type mixer (VM-10, manufactured by DALTON CORPORATION) to perform dry-mixing at an ambient temperature for 10 minutes. The obtained mixture was subjected to a heat treatment 1 under a nitrogen gas atmosphere in an electric tubular furnace at a temperature shown in Table 5 for 1 hour. The raw materials at a ratio shown in Table 5 were added into a rolling-fluidizing coating machine (MP-01_mini, manufactured by Powrex Corporation) to be dry-mixed at an ambient temperature under a nitrogen atmosphere until the precursor solution was completely sprayed. This mixture was subjected to a heat treatment 2 under the atmosphere with a humidity of 25% or lower at a temperature shown in Table 5 in an electric tubular furnace under the following conditions to obtain a composite material. Physical properties of the obtained composite material are shown in Table 6.

Batteries were produced by using the obtained composite material. The obtained batteries exhibited excellent performance.

Examples 2, 4, and 5

The carbonaceous material and the metal oxide particle were added at amounts shown in Table 5 into a composing machine (NOBILTA, manufactured by HOSOKAWA MICRON CORPORATION) to perform dry-mixing at an ambient temperature for 10 minutes. The raw materials at a ratio shown in Table 5 were added into a rolling-fluidizing coating machine (MP-01_mini, manufactured by Powrex Corporation) to be dry-mixed at an ambient temperature under a nitrogen atmosphere until the precursor solution was completely sprayed. This mixture was subjected to a heat treatment 2 under the atmosphere with a humidity of 25% or lower at a temperature shown in Table 5 in an electric tubular furnace under the following conditions to obtain a composite material. Physical properties of the obtained composite material are shown in Table 6.

Batteries were produced by using the obtained composite material. The obtained batteries exhibited excellent performance.

Comparative Examples 1 and 3

The raw materials at a ratio shown in Table 5 were added into a rolling-fluidizing coating machine (MP-01_mini, manufactured by Powrex Corporation) to be dry-mixed at an ambient temperature under a nitrogen atmosphere until the precursor solution was completely sprayed. This mixture was subjected to a heat treatment 2 under the atmosphere with a humidity of 25% or lower at a temperature shown in Table 5 in an electric tubular furnace under the following conditions to obtain a composite material. Physical properties of the obtained composite material are shown in Table 6.

Batteries were produced by using the obtained composite material. The obtained batteries exhibited inferior performance to that in Examples.

Comparative Examples 2 and 4

Physical properties of the carbonaceous material are shown in Table 6.
Batteries were produced by using the obtained composite material. The obtained batteries exhibited inferior performance to that in Examples.

Comparative Example 5

A precursor solution and a carbon material shown in Table 5 were added into a round-bottom flask, and with stirring and adjusting to a humidity of 20% or lower under the atmosphere, the mixture was treated at 40°C until an ethanol residue became less than 0.1 mass%. The obtained product was subjected to a heat treatment 2 in an electric tubular furnace under a nitrogen atmosphere at 400°C, and disintegrated to obtain a composite material.

Comparative Example 6

The carbonaceous material and the raw material of the underlayer were added at amounts shown in Table 5 into a composing machine (NOBILTA, manufactured by HOSOKAWA MICRON CORPORATION) to perform dry-mixing at an ambient temperature for 10 minutes. The raw materials at a ratio shown in Table 5 were added into a rolling-fluidizing coating machine (MP-01_mini, manufactured by Powrex Corporation) to be dry-mixed at an ambient temperature under a nitrogen atmosphere until the precursor solution was completely sprayed. This mixture was subjected to a heat treatment 2 under the atmosphere with a humidity of 25% or lower at 400°C in an electric tubular furnace under the following conditions to obtain a composite material. Physical properties of the obtained composite material are shown in Table 6.
Batteries were produced by using the obtained composite material. The obtained batteries exhibited inferior performance to that in Examples.
Operating Condition of Rolling-Fluidizing Coating Machine

- Rotor: Standard
- Filter: FPM
- Mesh: 800M
- Nozzle Type: NPX-II
- Nozzle Diameter: 1.2 mm
- Nozzle Position: Tangential Line
- Number of Nozzle: 1
- Rotor Rotation Speed: 400 rpm
- Pressure of Air Spraying: 0.17 (MPa)
- Blowing-out Pressure: 0.2 (MPa)
- Time of Filter Blowing/Interval: 4.0/0.3 (sec/sec) Condition of Heat Treatment 2
- Atmosphere: the Atmosphere with Humidity of 25% or Lower
- Maximum Temperature: 400°C
- Holding Time at Maximum Temperature: 1 hour
- Heating Rate: 150°C/h
- Cooling Rate: 150°C/h

[Table 5]

Table 5

| | (Particle-adhered) carbonaceous material | | | | | | Heat treatment 1 | Precursor solution | | | |
| | Carbonaceous material | | Metal oxide particle | | Raw material of underlayer | | | Metal oxide precursor | | Li compound | |
| | Type | Rate [parts by mass] | Type | Rate [parts by mass] | Type | Rate [parts by mass] | Maximum temperature [°C] | Type | Rate [mass%] | Type | Rate [mass%] |
|---|---|---|---|---|---|---|---|---|---|---|---|
| Example 1 | SCMG® | 100 | TiO₂ | 0.3 | Petroleum pitch (softening point of 105°C) | 1 | 1100 | TTIP | 26.2 | Ethoxylithium | 3.8 |
| Example 2 | SCMG® | 100 | TiO₂ | 0.3 | - | - | - | TTIP | 26.2 | Ethoxylithium | 3.8 |
| Example 3 | SiC | 100 | TiO₂ | 0.3 | Petroleum pitch (softening point of 105°C) | 1 | 700 | TTIP | 26.2 | Ethoxylithium | 3.8 |
| Example 4 | SiC | 100 | TiO₂ | 0.3 | - | - | - | TTIP | 26.2 | Ethoxylithium | 3.8 |
| Example 5 | SiC | 100 | TiO₂ | 0.3 | Petroleum pitch (softening point of 230°C) | 1 | 700 | TTIP | 30.5 | Ethoxylithium | 4.5 |
| Comparative Example 1 | SCMG® | - | - | - | - | - | - | TTIP | 30.5 | Ethoxylithium | 4.5 |
| Comparative Example 2 | SCMG® | - | - | - | - | - | - | - | - | - | - |
| Comparative Example 3 | SiC | - | - | - | - | - | - | TTIP | 30.5 | Ethoxylithium | 4.5 |
| Comparative Example 4 | SiC | - | - | - | - | - | - | - | - | - | - |
| Comparative Example 5 | SiC | 100 | TiO₂ | 0.3 | Petroleum pitch (softening point of 105°C) | 1 | 700 | TTIP | 26.2 | Ethoxylithium | 3.8 |
| Comparative Example 6 | SiC | 100 | - | - | Petroleum pitch (softening point of 105°C) | 1 | 700 | TTIP | 26.2 | Ethoxylithium | 3.8 |

Table 5 (continued)

| | Precursor solution | | | (Particle-adhered) carbonaceous material/ Precursor solution [mass ratio] | Operation condition of rolling fluidized bed | | | | Heat treatment 2 |
| | Solvent | | Solid-content concentration [mass%] | | Atmos-phere | Intake | | Solution spraying rate [g/min] | Maximum temperature [°C] |
| | Type | Rate [mass%] | | | | Rate [m³/min] | Temperature [°C] | | |
| Example 1 | Anhydrous ethanol | 70.0 | 30.0 | 7.6 | N₂ | 0.2 | 90 | 2.0 | 400 |
| Example 2 | Anhydrous ethanol | 70.0 | 30.0 | 7.6 | N₂ | 0.2 | 90 | 2.0 | 400 |
| Example 3 | Anhydrous ethanol | 70.0 | 30.0 | 7.6 | N₂ | 0.2 | 90 | 2.0 | 400 |
| Example 4 | Anhydrous ethanol | 70.0 | 30.0 | 7.6 | N₂ | 0.2 | 90 | 2.0 | 400 |
| Example 5 | Anhydrous ethanol | 65.0 | 35.0 | 22.2 | N₂ | 0.2 | 90 | 2.0 | 400 |
| Comparative Example 1 | Anhydrous ethanol | 65.0 | 35 | 10.9 | N₂ | 0.2 | 90 | 4.0 | 400 |
| Comparative Example 2 | - | - | - | - | - | - | - | - | Not performed |
| Comparative Example 3 | Anhydrous ethanol | 65.0 | 35 | 7.6 | N₂ | 0.2 | 90 | 2.0 | 400 |
| Comparative Example 4 | - | - | - | - | - | - | - | - | Not performed |
| Comparative Example 5 | Anhydrous ethanol | 70.0 | 30.0 | 7.6 | - | - | - | - | 400 |
| Comparative Example 6 | Anhydrous ethanol | 70.0 | 30.0 | 7.6 | N₂ | 0.2 | 90 | 2.0 | 400 |

[Table 6]

Table 6

| | Physical properties of composite material | | | | Metal oxide layer | | | | | |
|---|---|---|---|---|---|---|---|---|---|---|
| | BET specific surface area [m²/g] | Particle size distribution D50 [μm] | Surface roughness | d002 [nm] | Type | Portion with thickness of 10 nm or less [%] | Portion with thickness of more than 10 nm [%] | Coating rate [%] | Content [parts by mass] | Meal oxide fine particle inside metal oxide layer |
| Example 1 | 1.8 | 11.8 | 2.0 | 0.3356 | Lithium titanate | 85 | 15 | 99 | 1.1 | Presence |
| Example 2 | 2.4 | 10.7 | 2.4 | 0.3356 | Lithium titanate | 75 | 25 | 96 | 1.1 | Presence |
| Example 3 | 6.7 | 9.7 | 5.8 | 0.3370< | Lithium titanate | 90 | 10 | 99 | 1.1 | Presence |
| Example 4 | 9.1 | 9.2 | 7.2 | 0.3370< | Lithium titanate | 75 | 25 | 96 | 1.1 | Presence |
| Example 5 | 8.3 | 9.4 | 6.9 | 0.3370< | Lithium titanate | 90 | 10 | 90 | 0.4 | Presence |
| Comparative Example 1 | 2.9 | 11.5 | 2.9 | 0.3356 | Lithium titanate | 50 | 50 | 10 | 0.9 | Absence |
| Comparative Example 2 | 2.2 | 12.0 | 2.5 | 0.3356 | None | - | - | - | - | Absence |
| Comparative Example 3 | 7.9 | 9.3 | 4.9 | 0.3370< | Lithium titanate | 50 | 50 | 10 | 1.1 | Absence |
| Comparative Example 4 | 16.9 | 10.0 | 11.9 | 0.3370< | None | - | - | - | - | Absence |
| Comparative Example 5 | 3.6 | 12.1 | 2.9 | 0.3370< | Lithium titanate | 65 | 35 | 96 | 1.1 | Absence |
| Comparative Example 6 | 5.8 | 10.9 | 4.3 | 0.3370< | Lithium titanate | 100 | 0 | 96 | 0.6 | Absence |

Table 6 (continued)

| | Silicon | Underlayer | | Battery characteristics (electrolyte-liquid type) | | | |
| --- | --- | --- | --- | --- | --- | --- | --- |
| | Content [parts by mass] | Component | Average thickness [nm] | First discharge capacity [mAh/g] | Coulombic efficiency [%] | 1C-rate capacity maintenance rate [%] | 500th-cycle capacity maintenance rate [%] |
| Example 1 | 0.0 | Amorphous carbon layer | 20 | 355 | 92 | 94 | 95 |
| Example 2 | 0.0 | None | - | 355 | 92 | 93 | 94 |
| Example 3 | 35 | Amorphous carbon layer | 20 | 1200 | 83 | 75 | 77 |
| Example 4 | 35 | None | - | 1100 | 82 | 71 | 71 |
| Example 5 | 35 | Amorphous carbon layer | 30 | 1100 | 82 | 71 | 69 |
| Comparative Example 1 | 0.0 | None | - | 330 | 90 | 85 | 90 |
| Comparative Example 2 | 0.0 | None | - | 320 | 89 | 83 | 87 |
| Comparative Example 3 | 35 | None | - | 900 | 76 | 63 | 34 |
| Comparative Example 4 | 35 | None | - | 800 | 71 | 55 | 21 |
| Comparative Example 5 | 35 | Amorphous carbon layer | 20 | 800 | 83 | 34 | 44 |
| Comparative Example 6 | 35 | Amorphous carbon layer | 20 | 1100 | 82 | 72 | 63 |

[Fourth Aspect]

Examples and Comparative Examples of the fourth aspect of the present invention will be described below, but they do not limit the technical scope of the present invention.

An evaluating method of composite materials, producing method of the battery, measuring method of battery characteristics, and raw materials used in each example in Examples and Comparative Examples are as follows.

Examples and Comparative Examples of the present invention will be described below, but they do not limit the technical scope of the present invention.

An evaluating method of composite materials, producing method of the battery, measuring method of battery characteristics, and raw materials used in each example in Examples and Comparative Examples are as follows.

[1] Evaluation of Composite Material

[1-1] BET Specific Surface Area

A measurement was performed in the same manner as in the third aspect.

[1-2] 50% Particle Diameter (D50)

A measurement was performed in the same manner as in the third aspect.

[1-3] Surface Roughness

A measurement was performed in the same manner as in the third aspect.

[1-4] Plane Spacing d002

A measurement was performed in the same manner as in the third aspect.

[1-5] Area percentages of Portion having Thickness of 10 nm or less and Portion having Thickness of more than 10 nm in Metal Oxide Layer

A measurement was performed in the same manner as in the third aspect.

[1-6] Coating Rate with Metal Oxide Layer

A measurement was performed in the same manner as in the third aspect.

[1-7] Average Particle Diameter of Primary Particles of Metal Oxide Particle

A measurement was performed in the same manner as in the third aspect.

[1-8] Average Thickness of Amorphous Carbon Layer and Underlayer (Intermediate Layer)

Average thicknesses of the amorphous carbon layer and underlayer, t, was determined by the following method.

(1) One composite material A1 was randomly extracted from composite materials observed with a transmission electron microscope (TEM).
(2) In the extracted composite material A1, one portion where the amorphous carbon layer or the underlayer was formed was randomly selected, and a thickness of the amorphous carbon layer or underlayer in the selected portion, t1, was measured. The thickness t1 was determined by: determining x1, which was an intersection of a vertical line to the carbonaceous material surface and the carbonaceous material surface, and x2, which was an intersection of this vertical line and an outer circumference of the amorphous carbon layer or underlayer; and measuring a distance between the determined intersections x1 and x2.
(3) The steps (1) and (2) were repeated 50 times. That is, measured were thicknesses of the amorphous carbon layers or underlayers, t1 to t50, measured with 50 composite materials A1 to A50 randomly extracted from the composite materials observed with the transmission electron microscope (TEM). The randomly extracted composite materials A1 to A50 were not duplicated each other.
(4) An arithmetic average of the obtained values t1 to t50 was specified as the average thickness of the amorphous carbon layer or underlayer, t.

An FFT (Fast Fourier Transform) pattern was evaluated to determine layer structures of, for example, the graphene layer and the amorphous carbon layer.

[1-9] Content of Metal Oxide (Carbon/Sulfur Analysis and ICP Analysis)

The amounts of the carbonaceous material, amorphous carbon layer, and underlayer included in the composite material were measured by using carbon/sulfur analyzer EMIA-320V, manufactured by HORIBA, Ltd., and the measured amounts were subtracted from the amount of the composite material to determine the content of the metal oxide. When the metal oxide contained a plurality of metals, the content of each metal oxide was determined by quantitative analysis of metal elements with, for example, inductively coupled plasma emission spectroscopy (ICP-AES).

- Apparatus: Varian Vista-PRO (manufactured by Hitachi High-Tech Science Corporation)
- High-Frequency Power: 1.2 kW
- Plasma Gas: Argon Gas (Flow Rate: 15 L/min.)
- Auxiliary Gas: Argon Gas (Flow Rate: 1.50 L/min.)
- Carrier Gas: Argon Gas (Flow Rate: 0.85 L/min.)
- Observing Direction: Axial Direction

[2] Production of All-Solid-State Type Lithium-Ion Secondary Battery

[2-1] Preparation of Solid Electrolyte Layer 12

[2-2] Preparation of Negative Electrode Mixture Layer 132

[2-3] Preparation of Positive Electrode Mixture Layer 112

[2-4] Assembly of All-Solid-State Type Lithium-Ion Secondary Battery 1

The above were performed in the same manner as in the third aspect.

[3] Evaluation of All-Solid-State Type Lithium-Ion Secondary Battery

[3-1] Measurement of Coulombic Efficiency

[3-2] Measurement of 3-C Rate Capacity Maintenance Rate

[3-3] Measurement of 100th-Cycle Capacity Maintenance Rate

The above evaluations were performed in the same manner as in the third aspect. All the battery evaluations were performed in the atmosphere at 25°C.

[4] Production of Electrolyte-Liquid Type Lithium-Ion Secondary Battery

[4-1] Production of Paste for Electrode

[4-2] Production of Negative Electrode 1

[4-3] Production of Negative Electrode 2

[4-4] Production of Positive Electrode

[4-5] Production of Electrolyte Liquid

[4-6] Assembly of Battery

Any of the above was performed in the same manner as in the third aspect.

[5] Evaluation of Electrolyte-Liquid Type Lithium-Ion Secondary Battery

[5-1] Measurement of First Discharge Capacity and Coulombic Efficiency

[5-2] Measurement of Reference Capacity

[5-3] Measurement of 500th-Cycle Capacity Maintenance Rate

[5-4] Measurement of 1-C Rate Capacity Maintenance Rate

[6] Carbonaceous Material

Details of the raw materials shown in Table 7 are as follows.

[6-1] SCMG(R):

[6-2] SiC (Silicon-Containing Amorphous Carbon Particle)

For any of the above, the same material as in the third aspect was used.

[7] Metal Oxide Particle

Details of the materials shown in Table 7 are as follows.

[7-1] $TiO_2$:

The same material as in the third aspect was used.

Examples 1 and 3

The carbonaceous material, the metal oxide particle, and the raw material of the underlayer were added at amounts shown in Table 7 into a V-type mixer (VM-10, manufactured by DALTON CORPORATION) to perform dry-mixing at an ambient temperature for 10 minutes. The obtained mixture was subjected to a heat treatment 1 under a nitrogen gas atmosphere in an electric tubular furnace at a temperature shown in Table 7 for 1 hour. The raw materials at a ratio shown in Table 7 were added into a rolling-fluidizing coating machine (MP-01_mini, manufactured by Powrex Corporation) to be dry-mixed at an ambient temperature under a nitrogen atmosphere until the precursor solution was completely sprayed. This mixture was subjected to a heat treatment 2 under the atmosphere with a humidity of 25% or lower at a temperature shown in Table 7 in an electric tubular furnace under the following conditions to obtain a composite material. Physical properties of the obtained composite material are shown in Table 8.

Batteries were produced by using the obtained composite material. The obtained batteries exhibited excellent performance.

Examples 2 and 4

The carbonaceous material and the metal oxide particle were added at amounts shown in Table 7 into a composing machine (NOBILTA, manufactured by HOSOKAWA MICRON CORPORATION) to perform dry-mixing at an ambient temperature for 10 minutes. The raw materials at a ratio shown in Table 7 were added into a rolling-fluidizing coating machine (MP-01_mini, manufactured by Powrex Corporation) to be dry-mixed at an ambient temperature under a nitrogen atmosphere until the precursor solution was completely sprayed. This mixture was subjected to a heat treatment 2 under the atmosphere with a humidity of 25% or lower at a temperature shown in Table 7 in an electric tubular furnace under the following conditions to obtain a composite material. Physical properties of the obtained composite material are shown in Table 8.

Batteries were produced by using the obtained composite material. The obtained batteries exhibited excellent performance.

Comparative Examples 1 and 3

The raw materials at a ratio shown in Table 7 were added into a rolling-fluidizing coating machine (MP-01_mini, manufactured by Powrex Corporation) to be dry-mixed at an ambient temperature under a nitrogen atmosphere until the precursor solution was completely sprayed. This mixture was subjected to a heat treatment 2 under the atmosphere with a humidity of 25% or lower at a temperature shown in Table 7 in an electric tubular furnace under the following conditions to obtain a composite material. Physical properties of the obtained composite material are shown in Table 8.

Batteries were produced by using the obtained composite material. The obtained batteries exhibited inferior performance to that in Examples.

Comparative Examples 2 and 4

Physical properties of the carbonaceous material are shown in Table 8.

Batteries were produced by using the obtained composite material. The obtained batteries exhibited inferior performance to that in Examples.

Comparative Example 5

A precursor solution and a carbon material shown in Table 7 were added into a round-bottom flask, and with stirring, the mixture was treated under a reduced-pressure atmosphere at 40°C until an ethanol residue became less than 0.1 mass%. The obtained product was subjected to a heat treatment 2 in an electric tubular furnace under the following conditions, and disintegrated to obtain a composite material.

Comparative Example 6

A precursor solution and a carbon material shown in Table 7 were added into a round-bottom flask, and with stirring, and under the atmosphere with a humidity of approximately 60%, the mixture was treated at 100°C until an ethanol residue became less than 0.1 mass%. The obtained product was subjected to a heat treatment 2 in an electric tubular furnace under the following conditions, and disintegrated to obtain a composite material.

Operating Condition of Rolling-Fluidizing Coating Machine

- Rotor: Standard
- Filter: FPM
- Mesh: 800M
- Nozzle Type: NPX-II
- Nozzle Diameter: 1.2 mm
- Nozzle Position: Tangential Line
- Number of Nozzle: 1
- Rotor Rotation Speed: 400 rpm
- Pressure of Air Spraying: 0.17 (MPa)
- Blowing-out Pressure: 0.2 (MPa)
- Time of Filter Blowing/Interval: 4.0/0.3 (sec/sec) Condition of Heat Treatment 2
- Atmosphere: the Atmosphere with Humidity of 25% or Lower
- Maximum Temperature: 400°C
- Holding Time at Maximum Temperature: 1 hour
- Heating Rate: 150°C/h
- Cooling Rate: 150°C/h

[Table 7]

Table 7

| | | (Particle-adhered) graphite material | | | | | Heat treatment | Precursor solution | | | |
|---|---|---|---|---|---|---|---|---|---|---|---|
| | | Graphite material | | Metal oxide particle | | Raw material of underlayer | | | Metal oxide precursor | | Li compound | |
| | | Type | Rate [parts by mass] | Type | Rate [parts by mass] | Type | Rate [parts by mass] | Maximum tempera-ture [°C] | Type | Rate [mass%] | Type | Rate [mass%] |
| Example 1 | SCMG® | 100 | TiO₂ | 0.3 | Petroleum pitch (softening point of 105°C) | 1 | 1100 | TTIP | 22.4 | Ethoxylithium | 3.3 |
| Example 2 | SCMG® | 100 | TiO₂ | 0.3 | - | - | - | TTIP | 22.4 | Ethoxylithium | 3.3 |
| Example 3 | SiC | 100 | TiO₂ | 0.3 | Petroleum pitch (softening point of 105°C) | 1 | 700 | TTIP | 22.4 | Ethoxylithium | 3.3 |
| Example 4 | SiC | 100 | TiO₂ | 0.3 | - | - | - | TTIP | 22.4 | Ethoxylithium | 3.3 |
| Comparative Example 1 | SCMG® | - | - | - | - | - | - | TTIP | 30.5 | Ethoxylithium | 4.5 |
| Comparative Example 2 | SCMG® | - | - | - | - | - | - | - | - | - | - |
| Comparative Example 3 | SiC | - | - | - | - | - | - | TTIP | 30.5 | Ethoxylithium | 4.5 |
| Comparative Example 4 | SiC | - | - | - | - | - | - | - | - | - | - |
| Comparative Example 5 | SiC | 100 | TiO₂ | 0.3 | Petroleum pitch (softening point of 105°C) | 1 | 700 | TTIP | 22.4 | Ethoxylithium | 3.3 |
| Comparative Example 6 | SiC | 100 | TiO₂ | 0.3 | Petroleum pitch (softening point of 105°C) | 1 | 700 | TTIP | 22.4 | Ethoxylithium | 3.3 |

TTIP: etraisopropyl orthotitanate

Table 7 (continued)

| | | Precursor solution | | | | (Particle-adhered) graphite material/Precursor solution [mass ratio] | Operation condition of rolling fluidized bed | | | | Heat treatment |
|---|---|---|---|---|---|---|---|---|---|---|---|
| | | Raw material of amorphous carbon | | Solvent | | Solid-content concent-ration [mass%] | | Atmosphere | Intake | | Solution spraying rate [g/min] | |
| | | Type | Rate [mass%] | Type | Rate [mass%] | | | | Rate [m³/min] | Tempera-ture [°C] | | Maximum temperature [°C] |
| Example 1 | | Petroleum pitch (softening point of 105°C) | 14.4 | Anhydrous ethanol | 59.9 | 40.1 | 15.3 | N₂ | 0.2 | 90 | 2.0 | 400 |
| Example 2 | | Petroleum pitch (softening point of 230°C) | 14.4 | Anhydrous ethanol | 59.9 | 40.1 | 15.3 | N₂ | 0.2 | 90 | 2.0 | 400 |
| Example 3 | | Petroleum pitch (softening point of 230°C) | 14.4 | Anhydrous ethanol | 59.9 | 40.1 | 15.3 | N₂ | 0.2 | 90 | 2.0 | 400 |
| Example 4 | | Petroleum pitch (softening point of 105°C) | 14.4 | Anhydrous ethanol | 59.9 | 40.1 | 15.3 | N₂ | 0.2 | 90 | 2.0 | 400 |
| Comparative Example 1 | | - | - | Anhydrous ethanol | 65.0 | 35 | 10.9 | N₂ | 0.2 | 90 | 4.0 | 400 |
| Comparative Example 2 | | - | - | - | - | - | - | - | - | - | - | Not performed |
| Comparative Example 3 | | - | - | Anhydrous ethanol | 65.0 | 35 | 10.9 | N₂ | 0.2 | 90 | 4.0 | 400 |
| Comparative Example 4 | | - | - | - | - | - | - | - | - | - | - | Not performed |
| Comparative Example 5 | | Petroleum pitch (softening point of 230°C) | 14.4 | Anhydrous ethanol | 59.9 | 40.1 | 15.3 | - | - | - | - | 400 |
| Comparative Example 6 | | Petroleum pitch (softening point of 230°C) | 14.4 | Anhydrous ethanol | 59.9 | 40.1 | 15.3 | - | - | - | - | 400 |

TTIP: etraisopropyl orthotitanate

[Table 8]

Table 8

| | Physical properties of composite material | | | | Metal oxide layer | | | | | | Silicon |
|---|---|---|---|---|---|---|---|---|---|---|---|
| | BET specific surface area | Particle size distribution D50 | Surface rough-ness | d002 | Type | Portion with thickness of 10 nm or less | Portion with thickness of more than 10 nm | Coating rate | Content | Adhesion of metal oxide fine particle | Content |
| | [m²/g] | [μm] | | [nm] | | [%] | [%] | [%] | [parts by mass] | | [parts by mass] |
| Example 1 | 1.8 | 11.8 | 2.0 | 0.3356 | Lithium titanate | 55 | 45 | 60 | 0.9 | Presence | 0.0 |
| Example 2 | 2.4 | 10.7 | 2.4 | 0.3356 | Lithium titanate | 45 | 55 | 65 | 0.9 | Presence | 0.0 |
| Example 3 | 6.8 | 9.8 | 6.0 | 0.3370< | Lithium titanate | 65 | 35 | 80 | 0.9 | Presence | 35 |
| Example 4 | 7.2 | 9.8 | 6.2 | 0.3370< | Lithium titanate | 35 | 45 | 40 | 0.9 | Presence | 35 |
| Comparative Example 1 | 2.9 | 11.5 | 2.9 | 0.3356 | Lithium titanate | 50 | 50 | 10 | 0.9 | Absence | 0.0 |
| Comparative Example 2 | 2.2 | 12.0 | 2.5 | 0.3356 | None | - | - | - | - | Absence | 0.0 |
| Comparative Example 3 | 7.9 | 9.3 | 4.9 | 0.3370< | Lithium titanate | 50 | 50 | 10 | 0.9 | Absence | 35 |
| Comparative Example 4 | 16.9 | 10.0 | 11.9 | 0.3370< | None | - | - | - | - | Absence | 35 |
| Comparative Example 5 | 4.2 | 11.1 | 3.5 | 0.3370< | Lithium titanate | 20 | 80 | 80 | 0.9 | Absence | 35 |
| Comparative Example 6 | 8.6 | 8.2 | 6.1 | 0.3370< | Lithium titanate | 80 | 20 | 45 | 0.9 | Presence | 35 |

Table 8 (continued)

| | Amorphous carbon layer | | | Underlayer | | Battery characteristics (electrolyte-liquid type) | | | |
|---|---|---|---|---|---|---|---|---|---|
| | Adhesion form | Average thickness | Coating rate | Component | Average thickness | First discharge capacity | Coulombic efficiency | 1C-rate capacity maintenance rate | 500th-cycle capacity maintenance rate |
| | | [nm] | [%] | | [nm] | [mAh/g] | [%] | [%] | [%] |
| Example 1 | Sea phase | 30 | 35 | Amorphous carbon layer | 20 | 355 | 92 | 95 | 94 |
| Example 2 | Islands | 55 | 30 | None | - | 355 | 92 | 94 | 93 |
| Example 3 | Islands | 60 | 15 | Amorphous carbon layer | 20 | 1200 | 82 | 76 | 72 |
| Example 4 | Sea phase | 40 | 50 | None | - | 1100 | 81 | 72 | 63 |
| Comparative Example 1 | Absence | - | - | None | - | 330 | 90 | 85 | 90 |
| Comparative Example 2 | Absence | - | - | None | - | 320 | 89 | 83 | 87 |
| Comparative Example 3 | Absence | - | - | None | - | 900 | 76 | 63 | 34 |
| Comparative Example 4 | Absence | - | - | None | - | 800 | 71 | 55 | 21 |
| Comparative Example 5 | Islands | 85 | 15 | Amorphous carbon layer | 20 | 900 | 71 | 36 | 51 |
| Comparative Example 6 | Islands | 65 | 25 | Amorphous carbon layer | 20 | 900 | 73 | 42 | 45 |

REFERENCE SIGNS LIST

1:       ALL-SOLID-STATE TYPE LITHIUM-ION SECONDARY BATTERY
11:     POSITIVE ELECTRODE LAYER
111:   POSITIVE ELECTRODE CURRENT COLLECTOR
111a:  POSITIVE ELECTRODE LEAD
112:   POSITIVE ELECTRODE MIXTURE LAYER
12:     SOLID ELECTROLYTE LAYER
13:     NEGATIVE ELECTRODE LAYER
131:   NEGATIVE ELECTRODE CURRENT COLLECTOR
131a:  NEGATIVE ELECTRODE LEAD
132:   NEGATIVE ELECTRODE MIXTURE LAYER
A:      COMPOSITE MATERIAL
B:      COMPOSITE MATERIAL
C:      COMPOSITE MATERIAL
21:     CARBONACEOUS MATERIAL
22:     METAL OXIDE LAYER
23:     METAL OXIDE PARTICLE
24:     AMORPHOUS CARBON LAYER
25:     UNDERLAYER (INTERMEDIATE LAYER)

**Claims**

1.  A composite material, comprising: a carbonaceous material; and a metal oxide layer coating a surface of the carbonaceous material, wherein
    the metal oxide layer coats the surface of the carbonaceous material, forming a sea-island structure in which the metal oxide layer is scattered in islands, and a coating rate of the carbonaceous material with the metal oxide layer is 20% or more and 80% or less.

2.  A composite material, comprising: a carbonaceous material; and a metal oxide layer and amorphous carbon layer coating a surface of the carbonaceous material, wherein
    the metal oxide layer is scattered in islands on the surface of the carbonaceous material.

3.  The composite material according to claim 2, wherein a coating rate with the metal oxide layer is 20% or more and 80% or less.

4.  The composite material according to claim 2 or 3,
    wherein a coating rate with the amorphous carbon layer is 20% or more and 80% or less.

5.  The composite material according to any one of claims 2 to 4, wherein the composite material has a sea-island structure in which the amorphous carbon layer is present in a sea phase on the surface of the carbonaceous material.

6.  The composite material according to any one of claims 2 to 4, wherein the amorphous carbon layer is scattered in islands on the surface of the carbonaceous material.

7.  The composite material according to any one of claims 1 to 6, wherein the composite material comprises a composite material in which a metal oxide particle adheres to a surface of the metal oxide layer or amorphous carbon layer.

8.  The composite material according to any one of claims 1 to 7, wherein in the metal oxide layer, a rate of a total coated area with a metal oxide layer having a circle-equivalent diameter of 1 $\mu$m or larger and 10 $\mu$m or smaller is 80% or more in an entire coated area with the metal oxide layer.

9.  The composite material according to any one of claims 1 to 8, wherein an average thickness of the metal oxide layer is 10 nm or more.

10. A composite material, comprising: a carbonaceous material; and a metal oxide layer coating a surface of the carbonaceous material, wherein
the metal oxide layer has at least a portion having a thickness of more than 10 nm, and in a coated area with the metal oxide, an area percentage of a portion having a thickness of 10 nm or less is 70% or more and 99% or less, and an area percentage of the portion having a thickness of more than 10 nm is 1% or more and 30% or less.

11. The composite material according to claim 10, wherein a coating rate with the metal oxide layer is 95% or more.

12. A composite material, comprising: a carbonaceous material; and a metal oxide layer and amorphous carbon layer coating a surface of the carbonaceous material, wherein
the metal oxide layer has at least a portion having a thickness of more than 10 nm, and in a coated area with the metal oxide layer, an area percentage of a portion having a thickness of 10 nm or less is 30% or more and 70% or less, and an area percentage of the portion having a thickness of more than 10 nm is 30% or more and 70% or less.

13. The composite material according to claim 12, wherein a coating rate with the metal oxide layer is 30% or more and 90% or less.

14. The composite material according to claim 12 or 13,
wherein a coating rate with the amorphous carbon layer is 10% or more and 70% or less.

15. The composite material according to any one of claims 1 to 14, wherein a metal oxide particle is included inside the metal oxide layer.

16. The composite material according to any one of claims 1 to 5, comprising an underlayer disposed at least partially between the carbonaceous material and the metal oxide layer.

17. The composite material according to claim 16, wherein the underlayer is an amorphous carbon layer, a graphene layer, or a polymer layer.

18. The composite material according to any one of claims 1, 2, and 12, wherein a content of a metal oxide in the composite material is 0.1 parts by mass or more and 10 parts by mass or less based on 100 parts by mass of the composite material.

19. The composite material according to claim 10, wherein a content of a metal oxide in the composite material is 0.1 parts by mass or more and 6.0 parts by mass or less based on 100 parts by mass of the composite material.

20. The composite material according to any one of claims 1 to 19, wherein a metal oxide in the metal oxide layer contains at least one oxide of a metal selected from Groups 3 to 12 elements of the periodic table, aluminum, gallium, indium, thallium, tin, and lead.

21. The composite material according to any one of claims 1 to 20, wherein a metal oxide in the metal oxide layer contains at least one selected from the group consisting of titanium oxide, lithium titanate, and lithium niobate.

22. The composite material according to any one of claims 2, 10, and 12, wherein the composite material is particulate, and a 50% particle diameter in a cumulative particle size distribution on a volumetric basis, D50, is 1.0 $\mu$m or larger and 30.0 $\mu$m or smaller.

23. The composite material according to claim 1, wherein the composite material is particulate, a BET specific surface area is 12.0 $m^2$/g or less, and a 50% particle diameter in a cumulative particle size distribution on a volumetric basis, D50, is 1.0 $\mu$m or larger and 30.0 $\mu$m or smaller.

24. The composite material according to any one of claims 1 to 23, wherein the composite material contains silicon.

25. The composite material according to claim 24, wherein the carbonaceous material contains silicon as well as carbon.

26. The composite material according to any one of claims 2 to 23, wherein the carbonaceous material is a graphite material.

**27.** The composite material according to any one of claims 2 to 23, wherein the carbonaceous material is an amorphous carbon material.

**28.** The composite material according to any one of claims 1 to 27, further comprising at least one selected from the group consisting of a particulate conductive auxiliary, a fibrous conductive auxiliary, and a solid electrolyte.

**29.** A negative electrode material for a lithium-ion secondary battery, comprising the composite material according to any one of claims 1 to 28.

**30.** A negative electrode for a lithium-ion secondary battery, comprising the negative electrode material according to claim 29.

**31.** A lithium-ion secondary battery comprising the negative electrode according to claim 30.

[Fig. 1]

[Fig. 2]

[Fig. 3]

[Fig. 4]

Regulus 1.0kV-D 1.6mm x5.00k SE(T)F0          10.0μm

[Fig. 5]

[Fig. 6]

[Fig. 7]

[Fig. 8]

[Fig. 9]

[Fig. 10]

[Fig. 11]

[Fig. 12]

## INTERNATIONAL SEARCH REPORT

International application No.

PCT/JP2020/041891

### A. CLASSIFICATION OF SUBJECT MATTER

H01M 4/133(2010.01)i; H01M 4/36(2006.01)i; H01M 4/38(2006.01)i; H01M 4/48(2010.01)i; H01M 4/485(2010.01)i; H01M 4/587(2010.01)i; H01M 4/62(2006.01)i; H01M 10/052(2010.01)i; H01M 10/0525(2010.01)i; H01M 10/0562(2010.01)i; C01B 32/21(2017.01)i

FI: C01B32/21; H01M4/587; H01M4/36 C; H01M10/0562; H01M10/052; H01M4/36 A; H01M4/62 Z; H01M4/133; H01M10/0525; H01M4/36 E; H01M4/485; H01M4/48; H01M4/38 Z

According to International Patent Classification (IPC) or to both national classification and IPC

### B. FIELDS SEARCHED

Minimum documentation searched (classification system followed by classification symbols)

H01M4/133; H01M4/36; H01M4/38; H01M4/48; H01M4/485; H01M4/587; H01M4/62; H01M10/052; H01M10/0525; H01M10/0562; C01B32/21

Documentation searched other than minimum documentation to the extent that such documents are included in the fields searched

| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2015-046219 A (PANASONIC CORP.) 12 March 2015 (2015-03-12) claims, fig. 3, table 1 | 1, 15, 18, 20-22, 29-31 |
| Y | | 3, 13 |
| X | JP 2002-141069 A (SAMSUNG SDI CO., LTD.) 17 May 2002 (2002-05-17) claims, examples 1-7, fig. 2-3 | 2, 5-6, 8-9, 12, 15, 18-20, 24, 26, 29-31 |
| Y | | 3-4, 13-14 |
| Y | JP 2004-210634 A (JFE CHEMICAL CORPORATION) 29 July 2004 (2004-07-29) paragraph [0064], examples 1-6, table 2-1 | 4, 14 |
| Y | JP 11-016570 A (HITACHI, LTD.) 22 January 1999 (1999-01-22) examples 1-4, table 1 | 4, 14 |

☒ Further documents are listed in the continuation of Box C.  ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 05 January 2021 (05.01.2021) | 02 February 2021 (02.02.2021) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**EP 4 060 763 A1**

International application No.

PCT/JP2020/041891

C (Continuation).   DOCUMENTS CONSIDERED TO BE RELEVANT

| Category* | Citation of document, with indication, where appropriate, of the relevant passages | Relevant to claim No. |
|---|---|---|
| X | JP 2004-014381 A (ISE CHEMICALS CORPORATION) 15 January 2004 (2004-01-15) claims, fig. 1 | 10-11, 15, 20-21, 26, 29-31 |
| A | JP 2010-123283 A (TDK CORPORATION) 03 June 2010 (2010-06-03) claims | 1-31 |
| A | JP 2016-134267 A (TOYOTA MOTOR CORP.) 25 July 2016 (2016-07-25) examples 4-7, table 1 | 1-31 |
| A | JP 2018-097940 A (TOYOTA MOTOR CORP.) 21 June 2018 (2018-06-21) paragraph [0017] | 1-31 |
| A | JP 2010-251314 A (MITSUBISHI CHEMICAL CORP.) 04 November 2010 (2010-11-04) claims | 1-31 |
| A | WO 2015/147123 A1 (MITSUBISHI CHEMICAL CORP.) 01 October 2015 (2015-10-01) claims | 1-31 |
| A | JP 2015-115319 A (SAMSUNG SDI CO., LTD.) 22 June 2015 (2015-06-22) claims | 1-31 |
| A | JP 2018-185931 A (TOYOTA MOTOR CORP.) 22 November 2018 (2018-11-22) claims | 1-31 |

Form PCT/ISA/210 (continuation of second sheet) (January 2015)

INTERNATIONAL SEARCH REPORT

Information on patent family members

International application No.

PCT/JP2020/041891

| Patent Documents referred in the Report | Publication Date | Patent Family | Publication Date |
|---|---|---|---|
| JP 2015-046219 A | 12 Mar. 2015 | WO 2013/099138 A1 | |
| JP 2002-141069 A | 17 May 2002 | US 2002/0039684 A1 claims, examples 1-7, fig. 2-3 KR 10-2002-0015257 A | |
| JP 2004-210634 A | 29 Jul. 2004 | WO 2004/056703 A1 TW 200414579 A KR 10-2005-0084413 A | |
| JP 11-016570 A | 22 Jan. 1999 | (Family: none) | |
| JP 2004-014381 A | 15 Jan. 2004 | (Family: none) | |
| JP 2010-123283 A | 03 Jun. 2010 | US 2010/0124704 A1 claims CN 101740775 A | |
| JP 2016-134267 A | 25 Jul. 2016 | (Family: none) | |
| JP 2018-097940 A | 21 Jun. 2018 | (Family: none) | |
| JP 2010-251314 A | 04 Nov. 2010 | US 2012/0064403 A1 claims WO 2010/110443 A1 EP 2413404 A1 | |
| WO 2015/147123 A1 | 01 Oct. 2015 | US 2017/0012280 A1 claims EP 3125338 A1 | |
| JP 2015-115319 A | 22 Jun. 2015 | US 2015/0162604 A1 claims EP 2884566 A1 | |
| JP 2018-185931 A | 22 Nov. 2018 | US 2018/0309118 A1 claims CN 108735988 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017054614 A
- JP 2018088425 A
- JP 2017114700 A

**Non-patent literature cited in the description**

- **TOSHIO OSHIMA.** *Journal of the Society of Powder Technology, Japan,* 1993, vol. 30 (7), 496-501
- **IWASHITA et al.** *Carbon,* 2004, vol. 42, 701-714